(19) Europäisches Patentamt
European Patent Office
Office européen des brevets

(11) Veröffentlichungsnummer: **0 395 951 B1**

(12) **EUROPÄISCHE PATENTSCHRIFT**

(45) Veröffentlichungstag der Patentschrift: **24.08.94**

(51) Int. Cl.[5]: **C09B 62/447**, C09B 62/503, D06P 1/38

(21) Anmeldenummer: **90107503.6**

(22) Anmeldetag: **20.04.90**

Die Akte enthält technische Angaben, die nach dem Eingang der Anmeldung eingereicht wurden und die nicht in dieser Patentschrift enthalten sind.

# (54) Polyfunktionelle faserreaktive Farbstoffe.

(30) Priorität: **03.05.89 DE 3914628**

(43) Veröffentlichungstag der Anmeldung:
**07.11.90 Patentblatt 90/45**

(45) Bekanntmachung des Hinweises auf die Patenterteilung:
**24.08.94 Patentblatt 94/34**

(84) Benannte Vertragsstaaten:
**CH DE FR GB LI**

(56) Entgegenhaltungen:
**EP-A- 0 144 766**
**EP-A- 0 159 292**
**EP-A- 0 167 490**
**EP-A- 0 271 883**
**US-A- 4 935 501**

(73) Patentinhaber: **BAYER AG**
**D-51368 Leverkusen (DE)**

(72) Erfinder: **Herd, Karl-Josef**
**Am Gartenfeld 66**
**D-5068 Odenthal-Holz (DE)**
Erfinder: **Henk, Hermann**
**Roggendorfstrasse 55**
**D-5000 Köln 80 (DE)**
Erfinder: **Stöhr, Frank-Michael**
**Am Thelen Siefen 10**
**D-5068 Odenthal-Osenau (DE)**

**EP 0 395 951 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Würdigung Stand der Technik

In EP-A-167 490 und US-A-4 935 501 sind bereits trifunktionelle Reaktivfarbstoffe in allgemeiner Form beschrieben. Konkret offenbart werden dort aber nur solche, in denen der Aminotriazinylrest eines Azochromophors mit einem reaktiven Pyrimidinaminorest über ein aromatisches Brückenglied verknüpft ist.

Gegenstand der vorliegenden Erfindung sind polyfunktionelle faserreaktive Farbstoffe der Formel

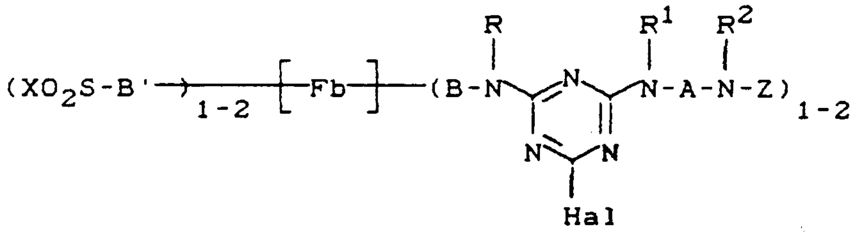

(1)

worin

Fb = Rest eines Farbstoffes der Mono- oder Polyazo-, Metallkomplexazo-, Anthrachinon-, Phthalocyanin-, Formazan-, Azomethin-, Dioxazin-, Phenazin-, Xanthen-, Thioxanthon-, Naphthochinon-, Stilben-oder Triphenylmethanreihe,

B bzw. B′ = direkte Bindung oder Brückenglied an ein Ring C-Atom eines aromatisch-carbocyclischen oder an ein Ring-C- oder -N-Atom eines aromatisch-heterocyclischen Ringes in Fb,

X = $CH=CH_2$ oder $CH_2CH_2$-Y, worin

Y = alkalisch eliminierbarer Rest, z.B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3]^+Anion^-$ oder

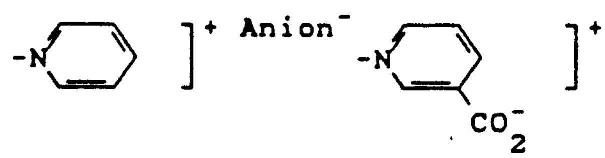

Anion$^-$ ist insbesondere Halogenid oder Sulfat

R, $R^1$, $R^2$ = H oder $C_1$-$C_4$-Alkyl, das gegebenenfalls substituiert sein kann, wobei

$R^1$-$R^2$ auch für eine $C_1$-$C_4$-Alkylen-Einheit stehen kann,

Hal = F, Cl oder Br,

A = direkte Bindung oder aliphatisches, cycloaliphatisches bzw. gemischt aromatisch-aliphatisches Brückenglied, das gegebenenfalls Heteroatome wie N,O, S oder $SO_2$ enthalten kann, und wobei der Rest -$NR^1$-A-$NR^2$- auch Teil eines gesättigten heterocyclischen Systems sein kann,

und

Z = faserreaktiver Rest, der frei ist von chromophoren Substituenten.

Beispiele für die Brückenglieder A sind:

$C_2$-$C_6$-Alkylene, wie z.B. $-CH_2CH_2-$, $-CH_2CH(CH_3)-$, $-CH_2-CH_2-CH_2-$, $-CH_2-CH_2-CH(CH_3)-$, $-CH_2-CH_2-CH_2-CH_2-$, $-CH(CH_3)-CH_2-CH(CH_3)-$ oder $CH_2-CH(C_2H_5)-$, Di($C_2$-$C_4$-alkylen)ether bzw. -thioether, wie z.B.

$$-(-CH_2)_{2-4}-O-(CH_2-)_{2-4} \text{ oder } -(-CH_2-)_{2-4}-S-(-CH_2-)_{2-4},$$

Di($C_2$-$C_4$-alkylen)sulfone, wie z.B.

$$-(CH_2)_2-SO_2-(CH_2)_2-$$

Di($C_2$-$C_4$-alkylen)amine, wie z.B.

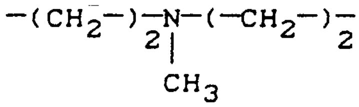 , 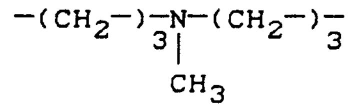 oder

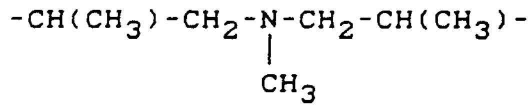 oder aber

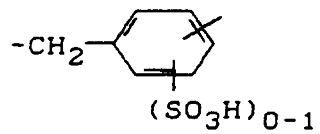 , 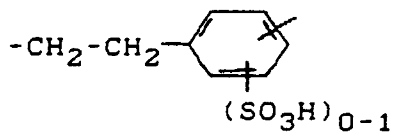 ,

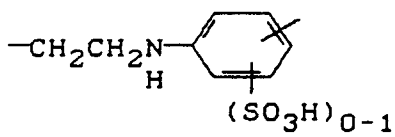 , 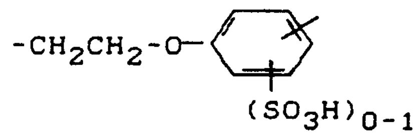 ,

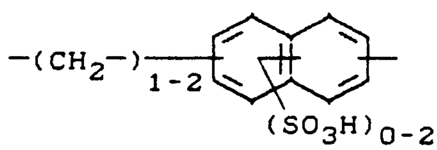 , 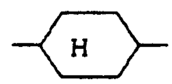 , 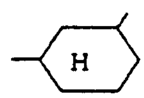 ,

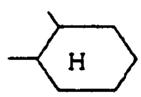 , 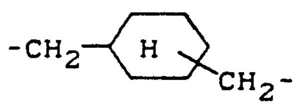

Beispiele für den Rest -$NR^1$-A-$NR^2$- sind u.a. auch:

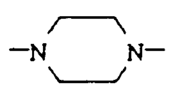 bzw. 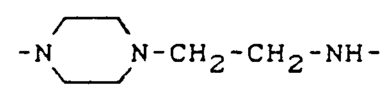

Geeignete faserreaktive Reste, d.h. solche die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatischheterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin-und Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido ($N_3$), Rhodanido, Thiolether, Oxiether, Sulfinsäure und Sulfonsäure.

Im einzelnen sind beispielsweise zu nennen:

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, $C_1$-$C_4$-Alkoxy, Vinylsulfonyl-$C_2$-$C_4$-Alkoxy, substituierte Alkylsul-

fonyl-$C_2$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen, Acylamino, Vinylsulfonyl, substituiertes Alkylsulfonyl, Hydroxy, Amino.

Im einzelnen seien folgende Reste genannt:

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluortriazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4′-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2′,5′-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2′-Methyl-4′-sulfophenyl)-amino-4-fluor-triazinyl-6, 2-(2′-Methyl-5′-sulfophenyl)-amino-4-fluor-triazinyl-6, 2-(2′-Chlor-4′-sulfophenyl)-amino-4-fluor-triazinyl-6, 2-(2′-Chlor-5′-sulfophenyl)-amino-4-fluor-triazinyl-6, 2-(2′-Methoxy-4′-sulfophenyl)-amino-4-fluor-triazinyl-6, 2-(o-, m-, p-Carboxyphenyl)-amino-4-fluor-triazinyl-6, 2-(2′,4′-Disulfophenyl)-amino-4-fluor-triazinyl-6, 2-(3′,5′-Disulfophenyl)-amino-4-fluor-triazinyl-6, 2-(2′-Carboxy-4′-sulfophenyl)-amino-4-fluor-triazinyl-6, 2-(2′-Carboxy-5′-sulfophenyl)-amino-4-fluor-triazinyl-6, 2-(6′-Sulfonaphthyl-(2′))-amino-4-fluor-triazinyl-6, 2-(4′,8′-Disulfonaphthyl-(2′))-amino-4-fluor-triazinyl-6, 2-(6′,8′-Disulfonaphthyl-(2′))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluortriazinyl-6, 2-Piperidino-4-fluor-triazinyl-6, 2-(4′,6′,8′-Trisulfonaphthyl-(2′))-amino-4-fluor-triazinyl-6, 2-(3′,6′,8′-Trisulfonaphthyl-(2′))-amino-4-fluor-triazinyl-6, 2-(3′,6′-Disulfonaphthyl-(1′))-amino-4-fluor-triazinyl-6, N-Methyl-N-(2,4-dichlortriazinyl-6)-carbamyl, N-Methyl-N-(2-methylamino-4-chlortriazinyl-6)-carbamyl, N-Methyl-N-(2-dimethylamino-4-chlortriazinyl-6)-carbamyl, N-Methyl-bzw. N-Ethyl-N-(2,4-dichlortriazinyl-6)-aminoacetyl, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m-oder p-Methyl-oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4′-Methylphenyl)-mercapto-4-fluortriazinyl, 2-(2′,4′-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethylsulfonylresten verknüpft sein bspw. über ein Brückenglied

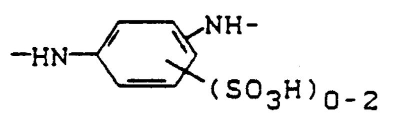 , 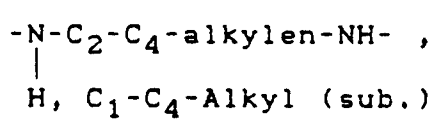 ,

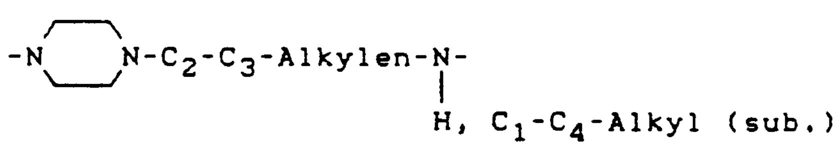

oder im Falle der Sulfatoethylsulfonyl- bzw. Vinylsulfonylgruppe über ein Brückenglied

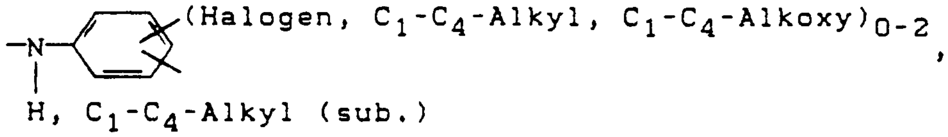

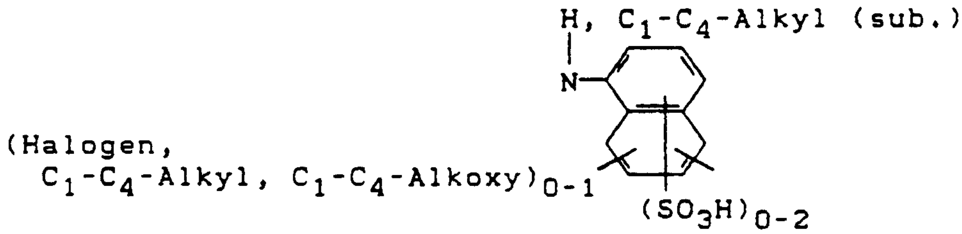

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl-oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4′,5′-Dichlorpyridazon-6′-yl-1′)-phenylsulfonyl- oder -carbonyl-, β-(4′,5′-Dichlorpyridazon-6′-yl-1′)-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-,2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluor-dichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbmethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbmethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 5-Chlor-6-Fluor-2-Dichlorfluormethyl-4-pyrimidinyl-, 2-Fluor-5-chlorpyrimidin-4-yl, 2-Methyl-4-fluor-5-methylsulfonylpyrimidinyl-6, 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3′-Carboxyphenyl)-sulfonyl-4-chlortriazinyl-6-, 2-(3′-Sulfophenyl)-sulfonyl-4-chlortriazinyl-6-, 2,4-Bis-(3′-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-β-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6- sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxid des 4-Chlor-oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, β-(2,2,3,3-Tetrafluorcyclobutyl-1)-acryloyl-, α- oder β-Bromacryloyl-, α- oder β-Alkyl- oder -Arylsulfonylacryloyl-Gruppe, wie α- oder β-Methylsulfonylacryloyl, Chloracetyl, Vinylsulfonyl, $-SO_2CH_2CH_2Y$ worin Y = alkalisch abspaltbare Gruppe, insbesondere $-OSO_3H$, $-OCOCH_3$, Cl, Br, F, $-SSO_3H$, $-OPO_3H_2$, $-OCOC_6H_5$, Di-$C_1$-$C_4$-Alkylamino, quartäres Ammonium, insbesondere $-N^{\oplus}(C_1\text{-}C_4\text{-Alkyl})_3$Anion$^{\ominus}$, $-OSO_2CH_3$, -SCN, $-NH-SO_2CH_3$, $-OSO_2-C_6H_4-CH_3$, $-OSO_2-C_6H_5$, -OCN,

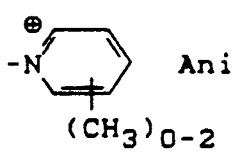 Anion$^{\ominus}$ oder 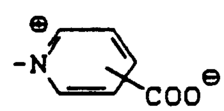

mit

Anion$^{\ominus}$ = bspw. $-OSO_3H$, $-SSO_3H$, $-OPO_3H_2$, -Cl, -Br, -F, -SCN, -OCN, $-OSO_2CH_3$, $-OSO_2C_6H_5$, $OCOCH_3$, -J, $-OSO_2OCH_3$, $-OSO_2C_6H_4CH_3$, $-OCOC_6H_5$.

Beispiele für die Brückenglieder B sind:

$\overset{*}{-}COCH_2-$, $-CH_2-$, $-CH_2-CH_2-$, $-CH_2-CH_2-CH_2-$, $\overset{*}{-}SO_2-CH_2-CH_2-$,

$\overset{*}{-}CONHCH_2CH_2-$, $\overset{*}{-}SO_2NH-CH_2CH_2-$, $\overset{*}{-}NH-CH_2CH_2-$, $\overset{*}{-}O-CH_2CH_2-$,

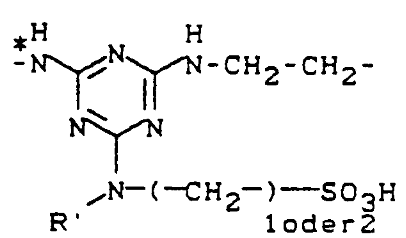 ,

wobei R' = H oder $CH_3$

Der Rest

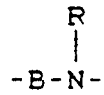

kann beispielsweise auch folgende Bedeutung haben:

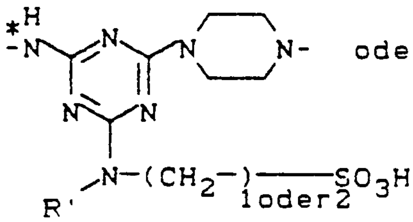 oder 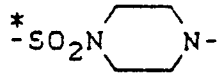

wobei R' = H oder $CH_3$.

Der Stern markiert jeweils die Verknüpfungsstelle des Brückengliedes mit dem Farbstoffrest Fb.

Beispiele für die Brückenglieder B' sind:

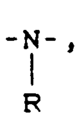 , 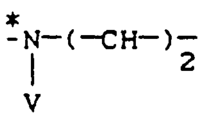 , 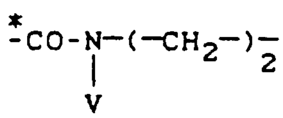 , $^*$-NH-$CH_2$-$CH_2CH_2$- ,

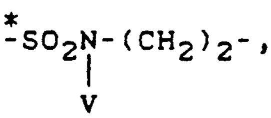 ,

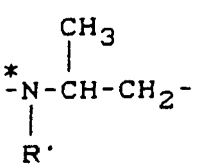 , $^*$-$NHCH_2CH_2O$-$CH_2CH_2$- , $^*$-O-$CH_2CH_2$- ,

$^*$-NHCO-$CH_2CH_2$- , $^*$-NH-CO-$CH_2CH_2CH_2$- ,

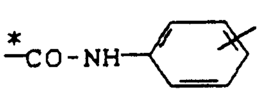 , 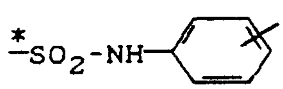 ,

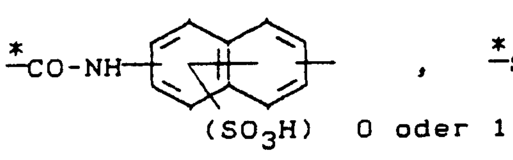 , 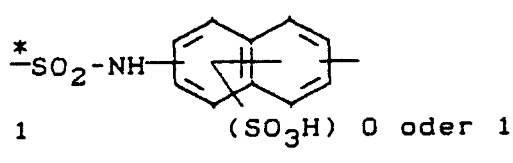

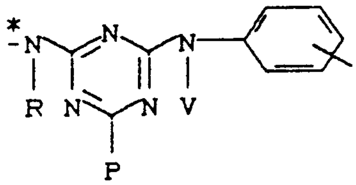 , 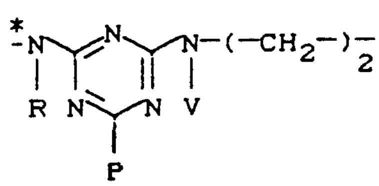 ,

wobei

P = F, Cl oder gegebenenfalls substituiertes Amino, vorzugsweise

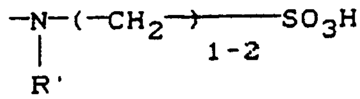

V = H, $CH_3$, $-CH_2CH_2SO_2$-X,

R' = H oder $CH_3$ und

R und X die obengenannte Bedeutung haben.

Die Brückenglieder B und B' können jeweils gleiche oder verschiedene Bedeutung haben.

Der Rest Fb in Formel (1) kann in der üblichen Weise substituiert sein. Als Beispiele für weitere Substituenten an den Resten Fb seien genannt: Alkylgruppen mit 1 bis 4 Kohlenstoffatomen, wie Methyl, Ethyl, Propyl, Isopropyl oder Butyl, Alkoxygruppen mit 1 bis 4 Kohlenstoffatomen, wie Methoxy, Ethoxy, Propoxy, Isopropoxy oder Butoxy, Acylaminogruppen mit 1 bis 8 Kohlenstoffatomen, wie Acetylamino, Propionylamino oder Benzoylamino, Aminogruppen, Alkylaminogruppen mit 1 bis 4 Kohlenstoffatomen, wie Methylamino, Ethylamino, Propylamino, Isopropylamino oder Butylamino, Phenylamino, N,N-Di-$\beta$-hydroxyethylamino, N,N-Di-$\beta$-sulfatoethylamino, Sulfobenzylamino, N,N-Disulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyethyl)-sulfamoyl, N,N-Di-($\beta$-hydroxyethyl)-sulfamoyl, N-Phenylsulfamoyl, Ureido, Hydroxy, Carboxy, Sulfomethyl oder Sulfo. Vorzugsweise enthalten die Reste Fb eine oder mehrere Sulfonsäuregruppen.

Reaktivfarbstoffe der Formel (1), worin Fb der Rest eines Azofarbstoffes ist, enthalten als Substituenten vor allem Methyl, Ethyl, Methoxy, Ethoxy, Acetylamino, Benzoylamino, Amino, Chlor, Brom, Ureido, Hydroxy, Carboxy, Sulfomethyl oder Sulfo.

Der Rest R, $R^1$, $R^2$ ist, falls es sich um einen Alkylrest handelt, geradkettig oder verzweigt; er kann weitersubstituiert sein, z.B. durch Halogen, Hydroxy, Cyan, $C_1$-$C_4$-Alkoxy, Carboxy, Sulfo oder Sulfato. Als Beispiele für R seien die folgenden Reste genannt: Methyl, Ethyl, Propyl, Isopropyl, Butyl, Isobutyl, sek.-Butyl, tert.-Butyl, Carboxymethyl, $\beta$-Carboxyethyl, $\beta$-Carboxypropyl, Methoxycarbonylmethyl, Ethoxycarbonylmethyl, $\beta$-Methoxyethyl, $\beta$-Ethoxyethyl, $\beta$-Methoxypropyl, $\beta$-Chlorethyl, $\gamma$-Brompropyl, $\beta$-Hydroxyethyl, $\beta$-Hydroxybutyl, $\beta$-Cyanethyl, Sulfomethyl, $\beta$-Sulfoethyl, Aminosulfonylmethyl und $\beta$-Sulfatoethyl. Vorzugsweise ist R bzw. $R^1$ oder $R^2$ Wasserstoff, Methyl oder Ethyl.

Bevorzugte Farbstoffe (1) sind solche in denen B und B' für eine direkte Bindung stehen und weiterhin solche, in denen $-SO_2X$ für $-SO_2CH=CH_2$ oder $-SO_2CH_2CH_2OSO_3H$ steht.

Besonders bevorzugt sind trifunktionelle, faserreaktive Farbstoffe der Struktur (2)

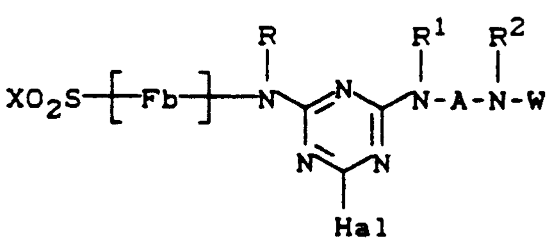

(2)

worin Fb, X, Hal, R, $R^1$, $R^2$ und A die unter Formel (1) genannte Bedeutung zukommt und W für einen faserreaktiven Pyrimidinyl-, Methylpyrimidinyl-, Dichlortriazinyl-, Monochlortriazinyl- bzw. Monofluortriazinyl-Rest steht.

Beispiele für W sind:

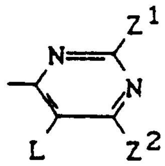 , 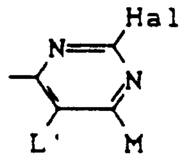 , 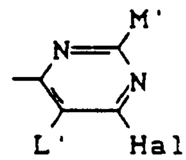

(3a) (3b) (3c)

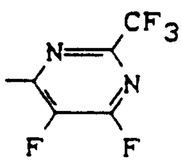 oder 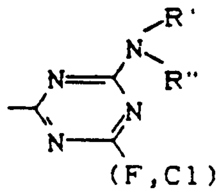

(3d) (3e)

worin

| | | |
|---|---|---|
| Hal | = | F, Cl, Br |
| L | = | H, Cl, Br, CN oder $C_1$-$C_4$-Alkylsulfonyl, |
| L′ | = | H, Cl oder Br |
| $Z^1$,$Z^2$ | = | unabhängig voneinander H, Cl, Br, F oder $C_1$-$C_4$-Alkylsulfonyl, wobei $Z^1$ und $Z^2$ nicht gleichzeitig für H oder $C_1$-$C_4$-Alkylsulfonyl stehen, |
| M | = | $CH_3$, $CH_2Cl$, $CHCl_2$, $CCl_3$, $CH_2F$, $CF_3$, $CHClF$, $CCl_2F$, $CHBrF$ oder $CBr_2F$, |
| M′ | = | $CH_3$, $CH_2Cl$, $CHCl_2$, $CCl_3$, $CHClF$, $CCl_2F$, $CClF_2$ oder $CF_3$, |
| R′ | = | H oder ein gegebenenfalls substituierter $C_1$-$C_4$-Alkyl- bzw. cycloaliphatischer Rest und |
| R″ | = | R′ oder ein gegebenenfalls substituierter Phenyl-, Benzyl-, Naphthyl- oder Hetarylrest oder eine gegebenenfalls substituierte Aminogruppe, |

und

R′ und R″ zusammen mit dem N-Atom einen 5- oder 6-gliedrigen heterocyclischen Rest bilden können.

Als Substituenten für die Reste R′ und R″ kommen insbesondere OH, Cl, Br, F, CN, $CO_2H$, $SO_3H$, $OSO_3H$, $C_1$-$C_4$-Alkoxy, $C_1$-$C_4$-Alkyl, $N(CH_3)_2$, $NHCOCH_3$, $SO_2X$ sowie $C_1$-$C_4$-Alkylsulfonyl in Frage, bzw. zusammen mit dem N-Atom:

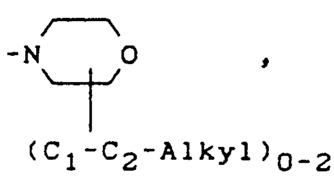 , 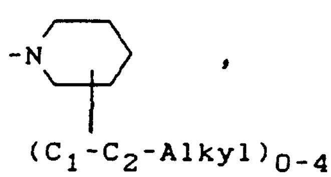 , 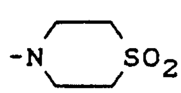 ,

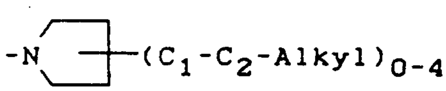 , 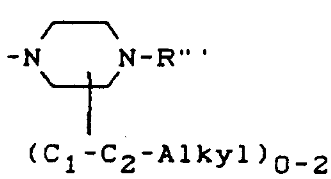 ,

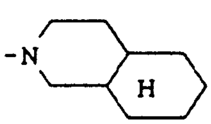 , 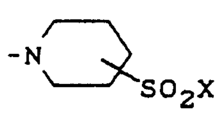 , 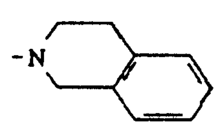

wobei X die obengenannte Bedeutung besitzt und R''' = H, gegebenenfalls substituiertes $C_1$-$C_4$-Alkyl (Substituenten insbesondere OH, $OSO_3H$, $SO_2X$).

Bevorzugte Farbstoffe (1) sind Monoazo- und Polyazofarbstoffe der Formel (4) sowie deren Metallkomplexe

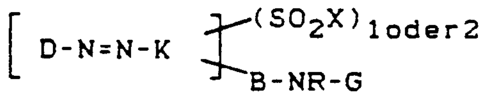

(4)

worin

D = Rest einer Diazokomponente der Benzol- oder Naphthalinreihe,

G =

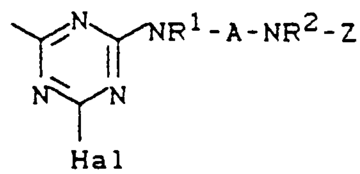

und

K = Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest.

Die Reste D und K können dabei mit weiteren Azogruppen oder mit azogruppenhaltigen Resten und ebenso, wie es für den Rest Fb der Formel (1) weiter oben aufgeführt ist, substituiert sein.

Besonders bevorzugt sind dabei Farbstoffe der Formeln (5a) und (5b)

$X\text{-}SO_2\text{-}D\text{-}N=N\text{-}K\text{-}B\text{-}NR\text{-}G'$ (5a)

$G'\text{-}NR\text{-}B\text{-}D\text{-}N=N\text{-}K'\text{-}SO_2\text{-}X$ (5b)

worin

X = $-CH=CH_2$ oder $-CH_2CH_2OSO_3H$,

G' =

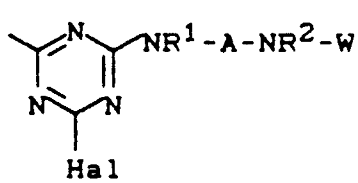

W = Rest der Formeln (3a) bis (3e) und

K' = Rest einer Kupplungskomponente aus der Pyrazolon-, Pyridon- oder Acetessigsäurearylid-Reihe ist, und

D, K, R und B die bereits obengenannte Bedeutung zukommt.

Beispiele für D sind vorzugsweise gegebenenfalls durch $SO_3H$, Chlor, $C_1$-$C_4$-Alkoxy, $C_1$-$C_4$-Alkyl, Carbalkoxy oder Sulfonamido substituiertes Phenyl bzw. Phenylen, gegebenenfalls durch $SO_3H$, Chlor, $C_1$-$C_4$-Alkoxy oder $C_1$-$C_4$-Alkyl substituiertes Naphthyl bzw. Naphthylen, gegebenenfalls durch $SO_3H$ substituiertes 4-(Phenylazo)phenyl und gegebenenfalls durch $SO_3H$ substituiertes Biphenylen.

K steht beispielsweise für den Rest einer Kupplungskomponente aus der Hydroxybenzol-, Hydroxynaphthalin-, Aminobenzol-, Aminonaphthalin-, Aminohydroxynaphthalinreihe, für einen 5-Hydroxy-3-methyl-(bzw. carboxy)-pyrazolon-, einen 6-Hydroxy-2-pyridon- oder einen gegebenenfalls $C_1$-$C_4$-Alkyl- bzw. $C_1$-$C_4$-Alkoxy-ringsubstituierten Acetessigsäurearylid-Rest. Die drei letztgenannten Reste sind auch geeignete Beispiele für K'. K und K' können die üblichen Substituenten, insbesondere Sulfonsäuregruppen aufweisen.

Bevorzugt sind die folgenden Farbstoffe der Formeln (6) bis (43):

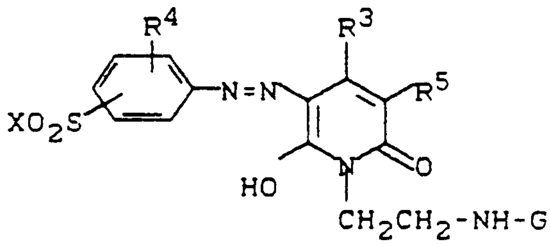

(6)

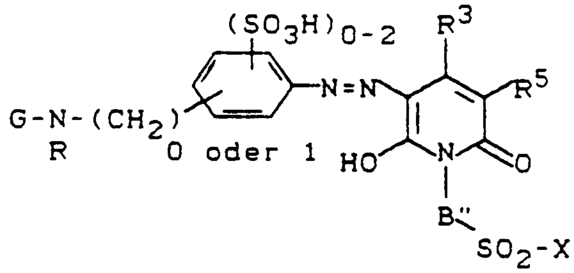

(7)

B'' = $-(-CH_2-)_{2-3}$ , 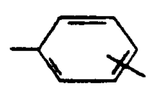

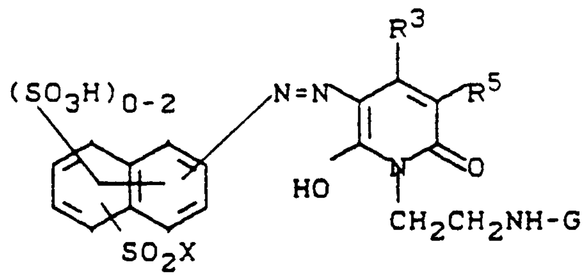

(8)

worin

$R^3$ = H, $C_1$-$C_4$-Alkyl, insbesondere $CH_3$ und $CH_2SO_3H$, COOH,

$R^4$ = H, $C_1$-$C_4$-Alkyl, $C_1$-$C_4$-Alkoxy, Cl, Br, COOH, $SO_3H$

$R^5$ = H, $SO_3H$, $CH_2SO_3H$, Cl, $C_1$-$C_4$-Alkylsulfonyl, Carbonamid, insbesondere $CONH_2$ sowie Carbonsäuremono- und -di-$C_1$-$C_4$-alkylamid.

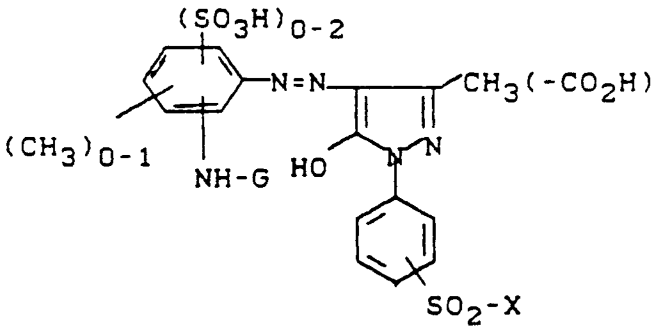

(9)

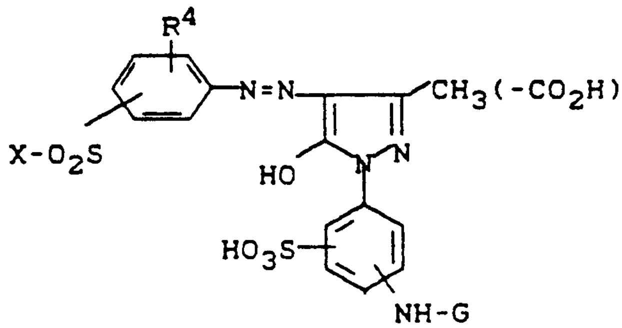

(10)

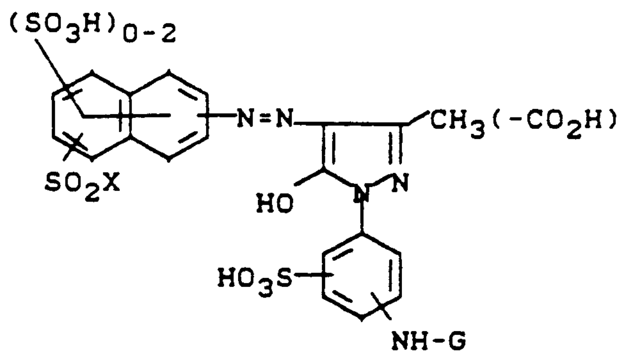

(11)

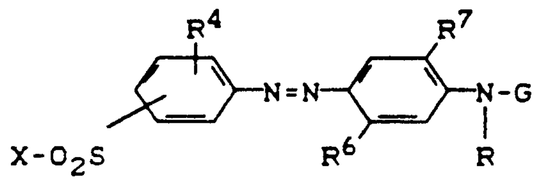

(12)

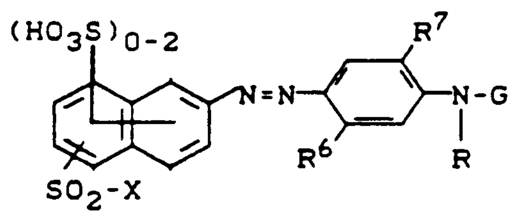

(13)

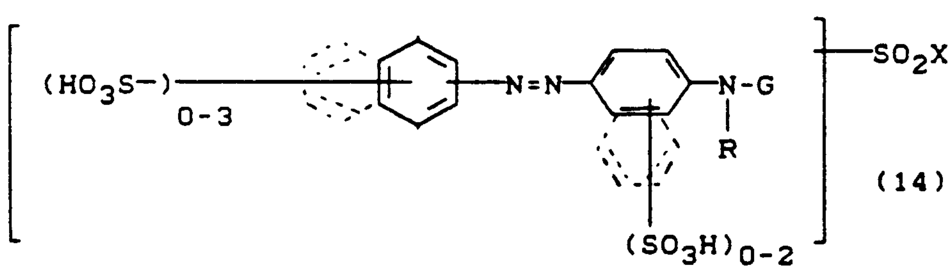

(14)

worin

$R^6$ = H, $C_1$-$C_4$-Alkyl, $C_1$-$C_4$-Alkoxy, Acylamino, insbesondere $C_1$-$C_4$-Alkylcarbonylamino oder Arylcarbonylamino wie gegebenenfalls substituiertes Phenylcarbonylamino, $C_1$-$C_4$-Alkylsulfonylamino, Cl, Br, Aminocarbonylamino, $C_1$-$C_4$-Alkylsulfonylamino, Arylsulfonylamino,

$R^7$ = H, $C_1$-$C_4$-Alkyl, $C_1$-$C_4$-Alkoxy, OH, $SO_3H$

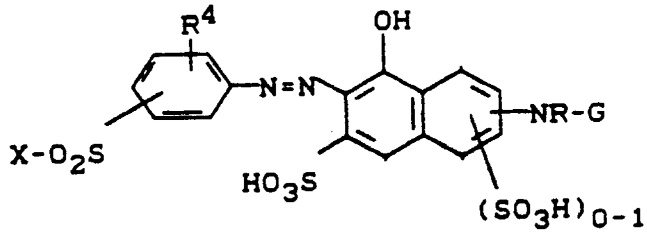

(15)

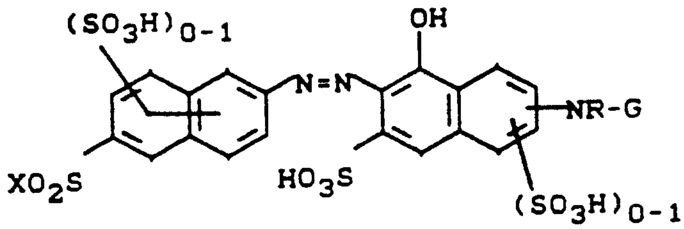

(16)

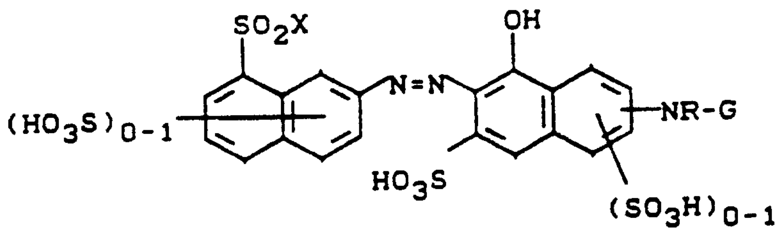

(17)

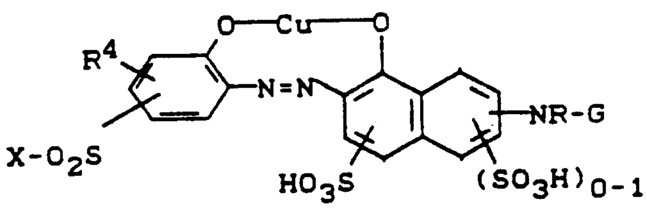

(18)

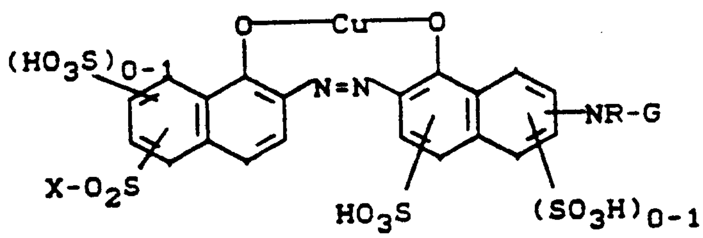

(19)

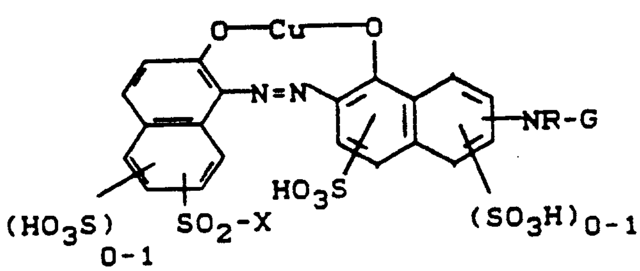

(20)

1:2-Metallkomplexe von Farbstoffen

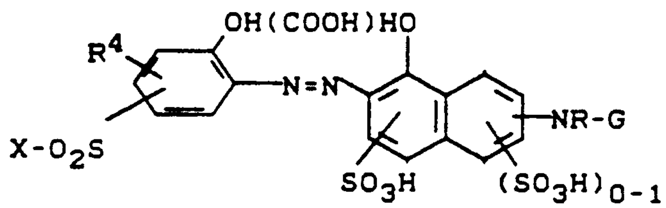

(21)

insbesondere die Cr- und Co-Komplexe, die zwei Farbstoffe (21) oder einen Farbstoff (21) und einen beliebigen anderen metallkomplexbildenden Farbstoff, insbesondere einen Azo- oder Azomethinfarbstoff enthalten.

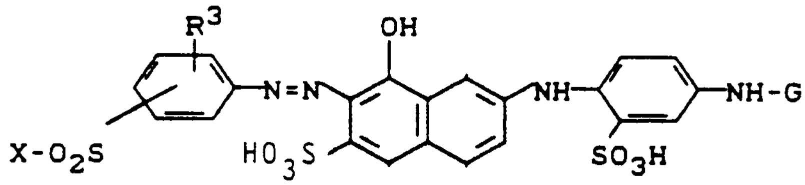

(22)

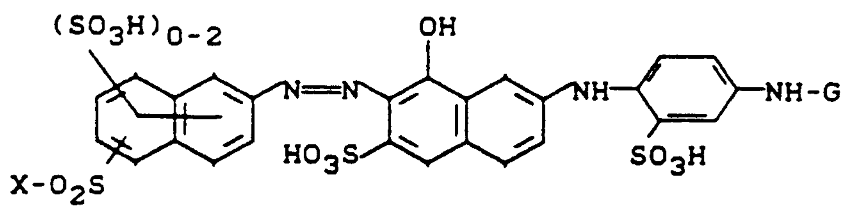

(23)

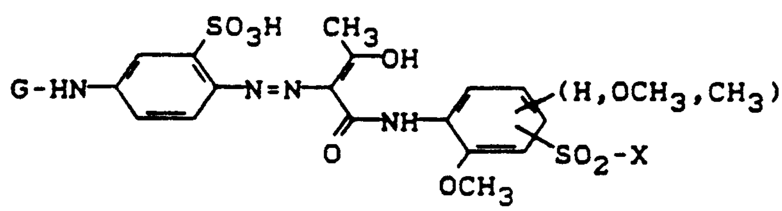

(24)

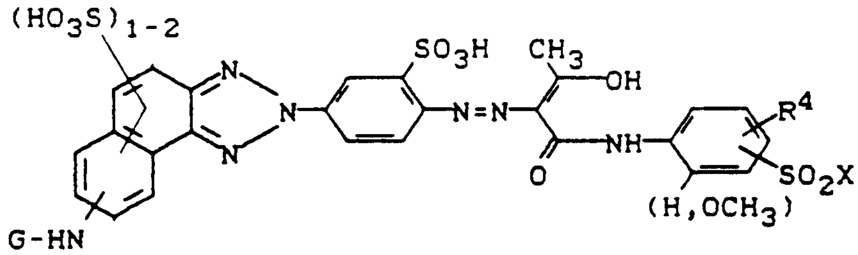

(25)

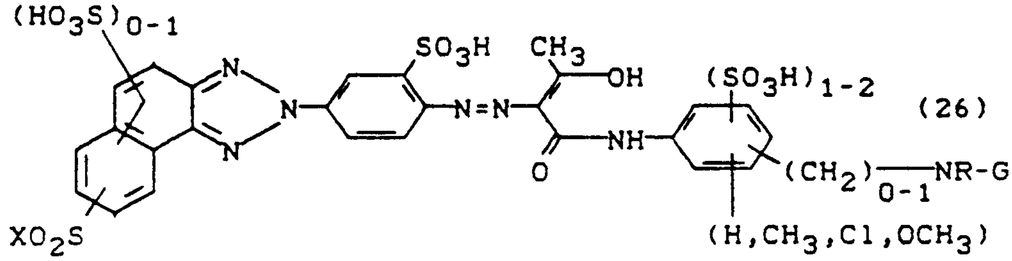

(26)

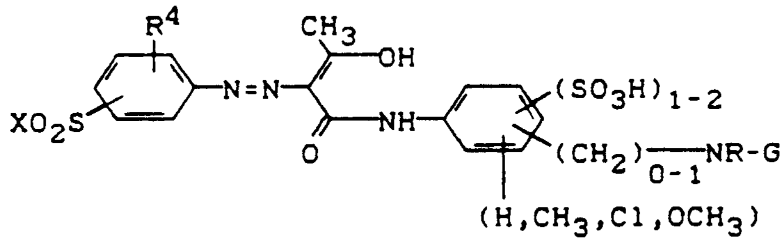

(27)

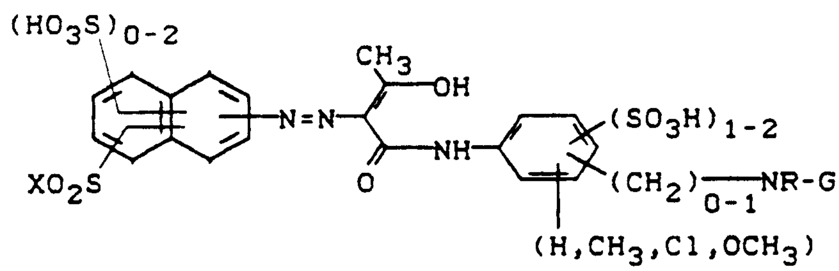

(28)

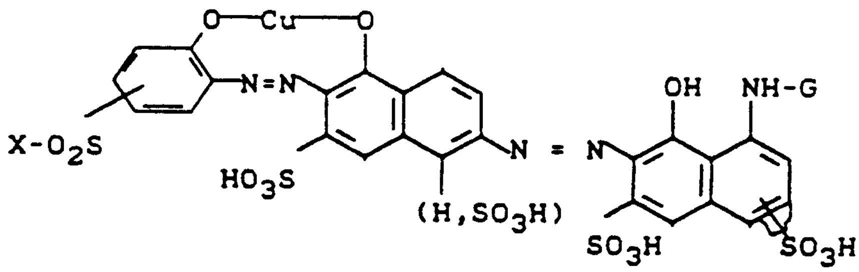

(29)

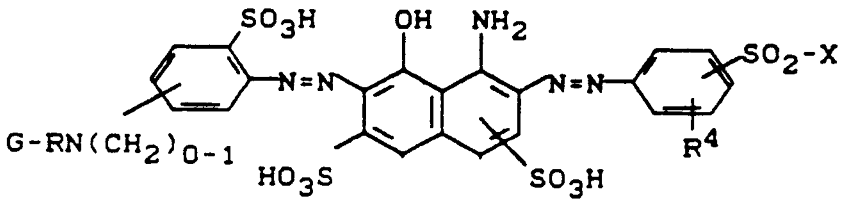

(30)

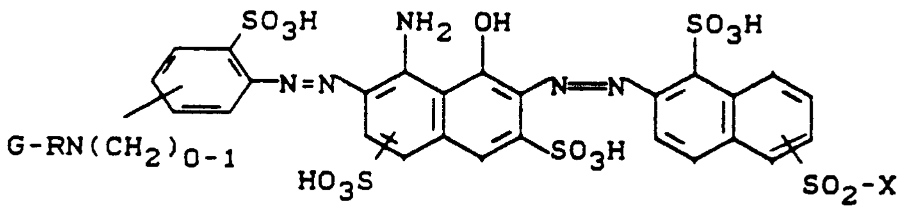

(31)

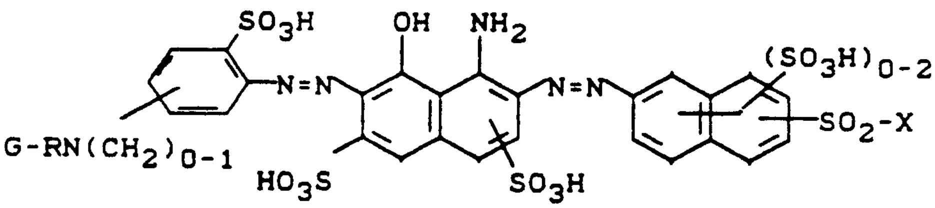

(32)

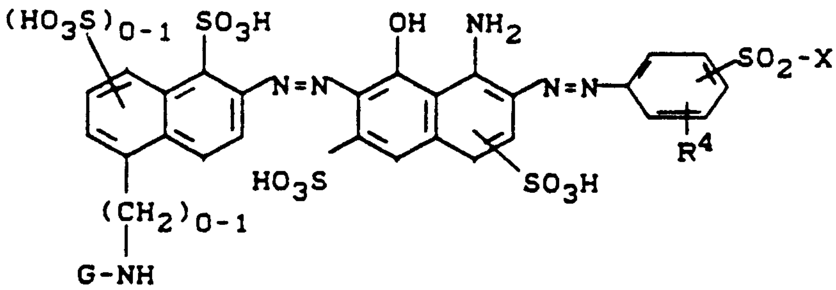

(33)

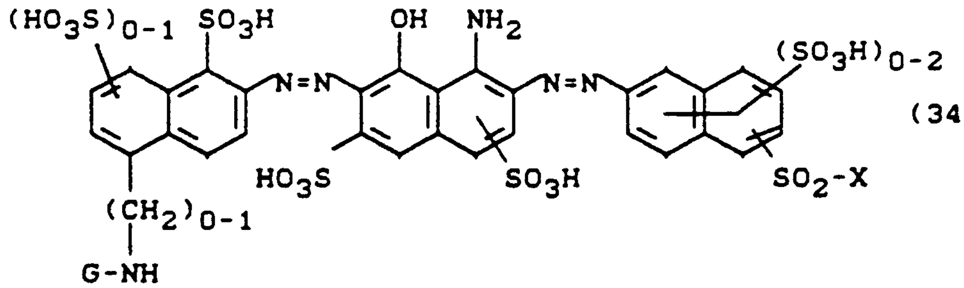

(34)

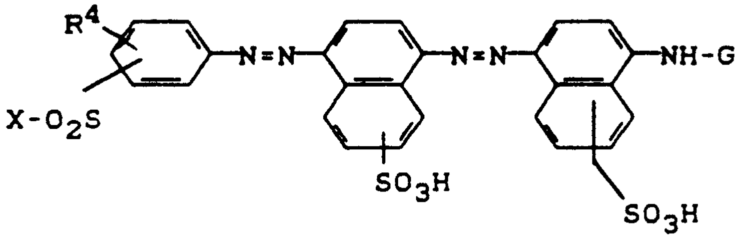

(35)

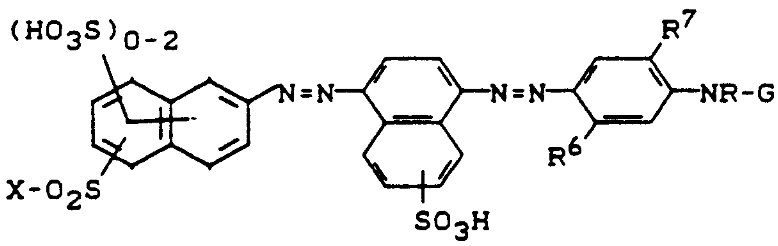

(36)

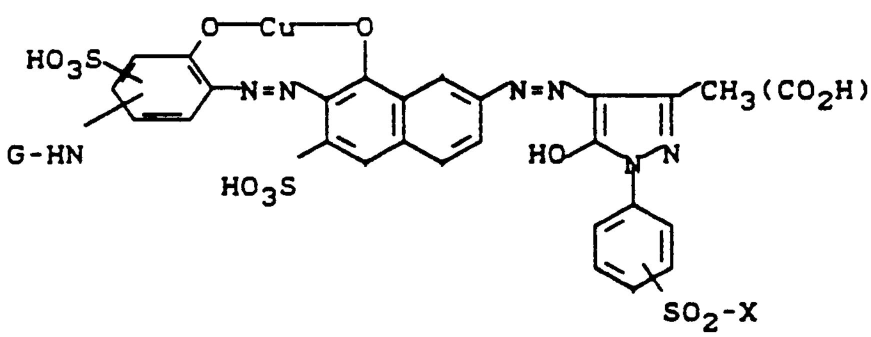

(37)

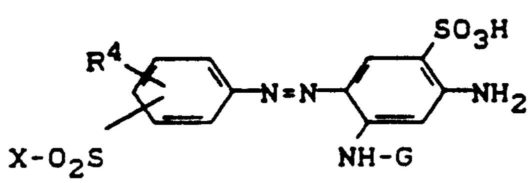

(38)

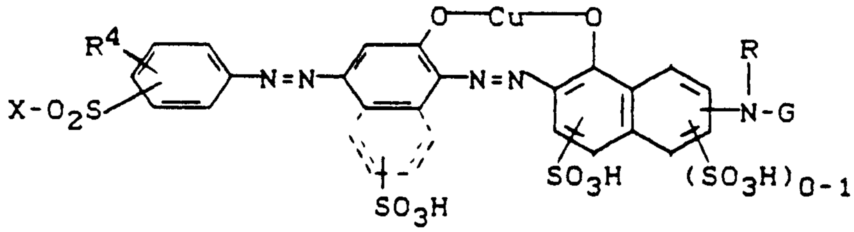

(39)

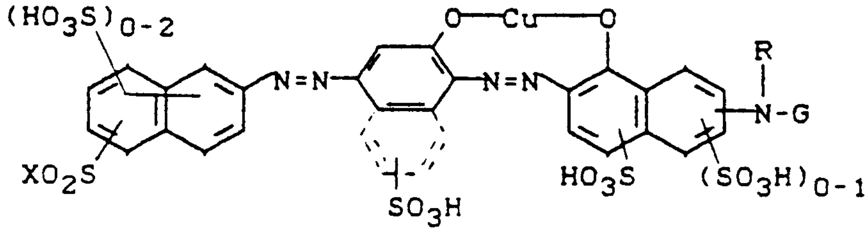

(40)

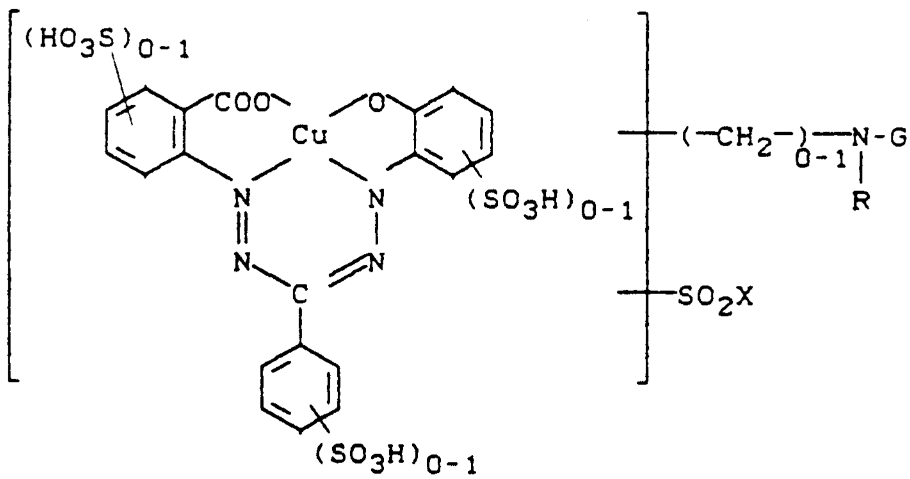

(41)

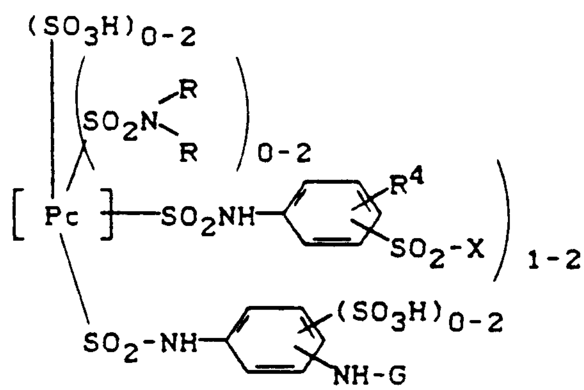

(42)

worin Pc für einen Cu- oder Ni-Phthalocyaninrest steht und die Gesamtzahl der Substituenten am Pc-Gerüst maximal 4 beträgt.

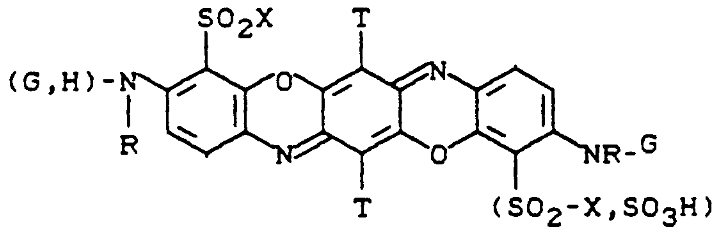

(43)

wobei

T = Cl, Br, $OCH_3$

Besonders bevorzugte Farbstoffe (1) sind solche mit

X = $CH_2CN_2OSO_3H$ oder $CH=CH_2$ und

G' =

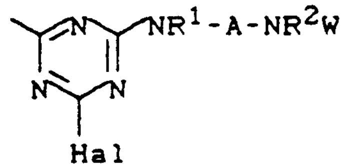

worin

W = Rest der Formeln (3a) bis (3e),

und dabei insbesondere solche mit 1-6 wasserlöslichmachenden Gruppen, vorzugsweise Sulfogruppen, insbesondere die folgenden der Formeln (44) bis (74):

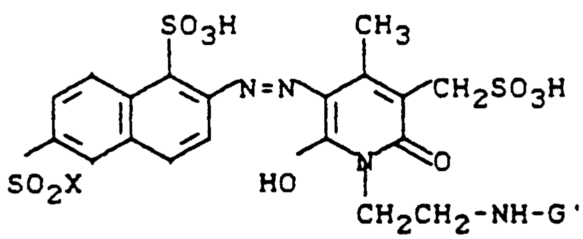

(44)

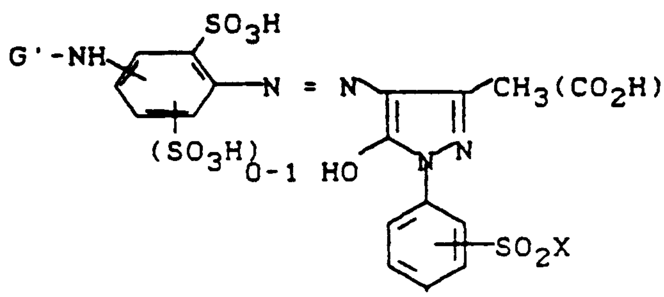

(45)

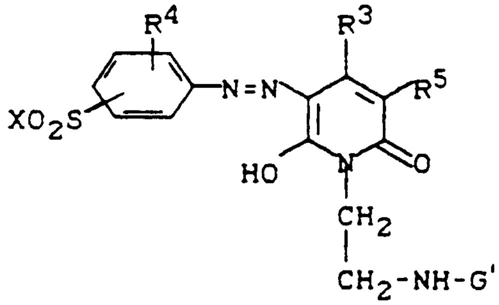

(46)

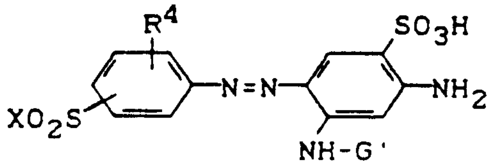

(47)

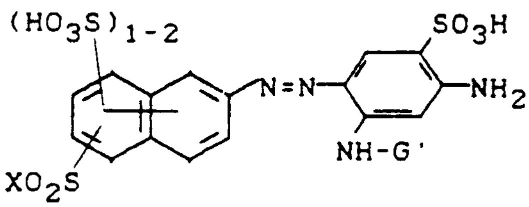

(48)

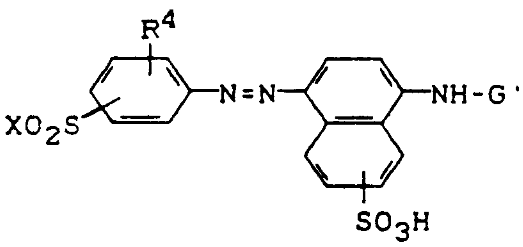

(49)

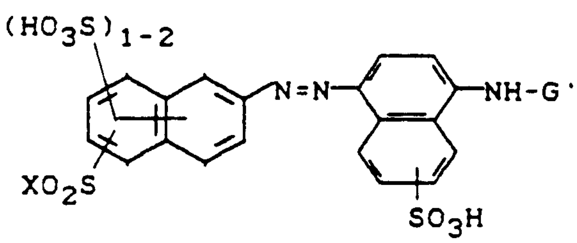

(50)

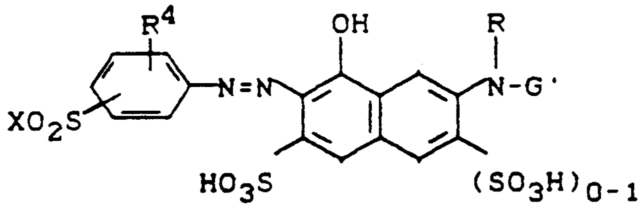

(51)

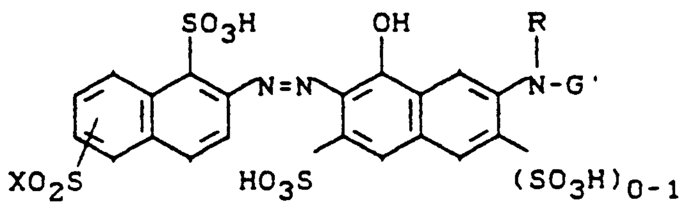

(52)

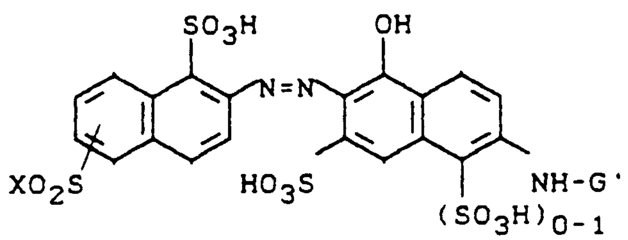

(53)

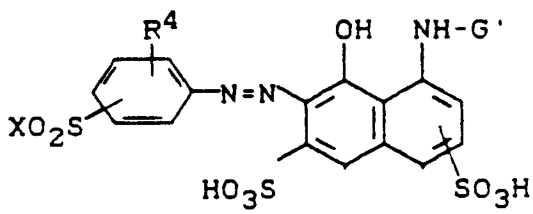

(54)

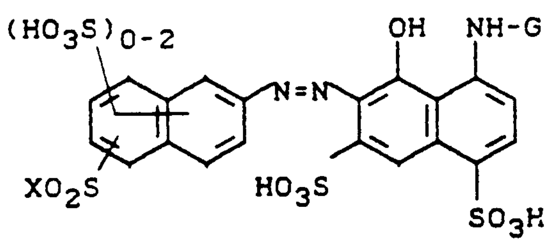

(55)

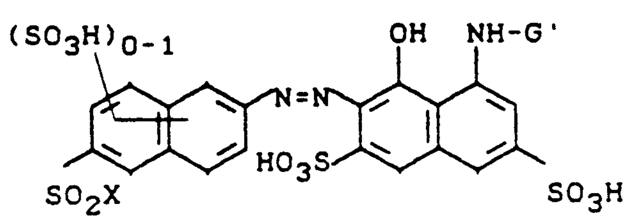

(56)

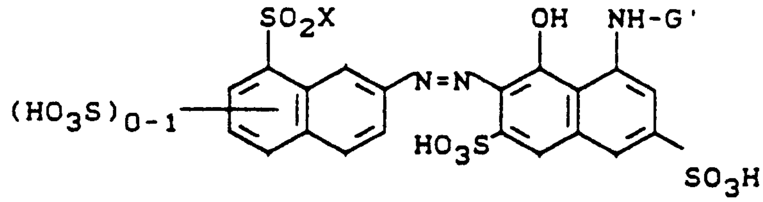

(57)

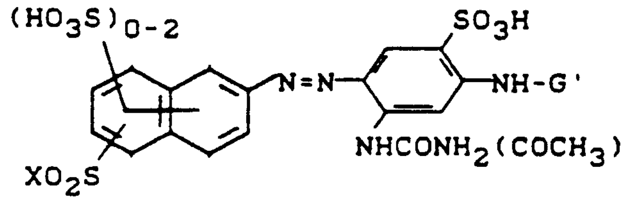

(58)

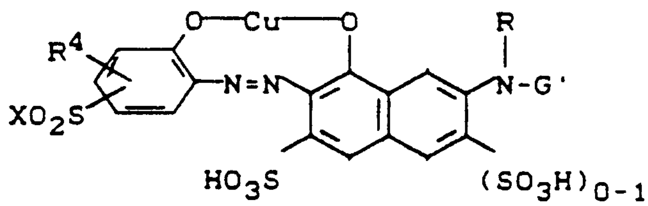

(59)

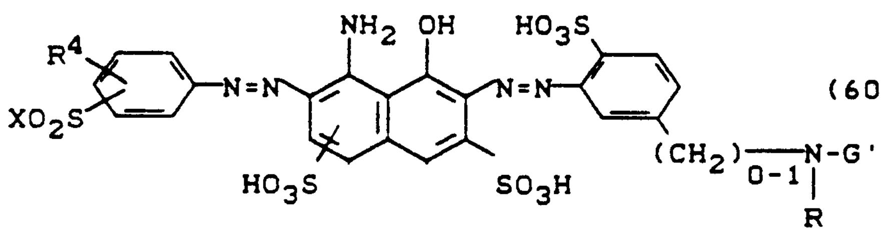

(60)

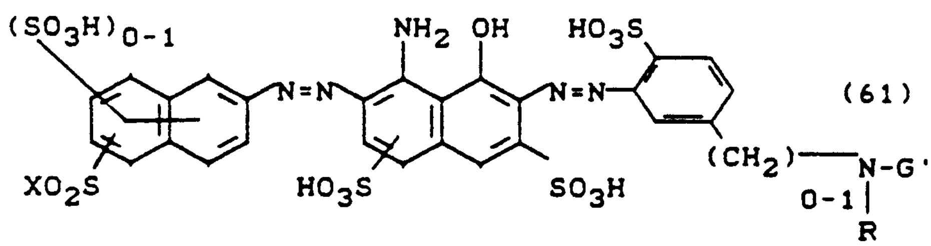

(61)

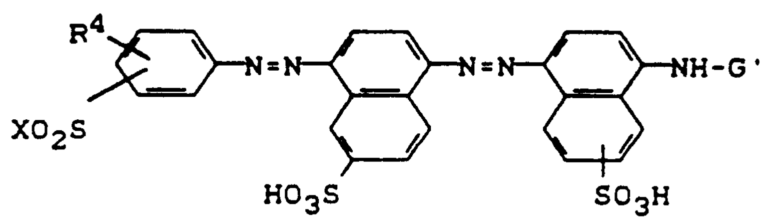

(62)

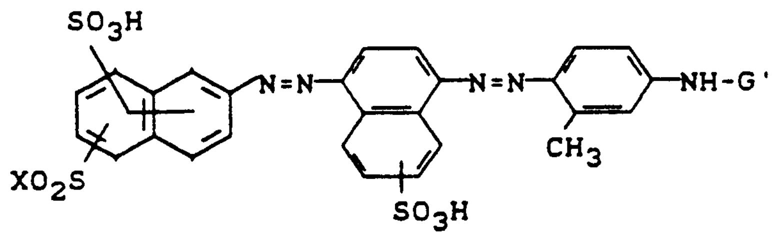

(63)

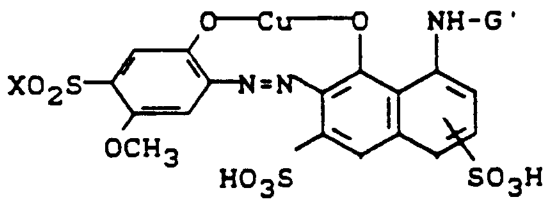

(64)

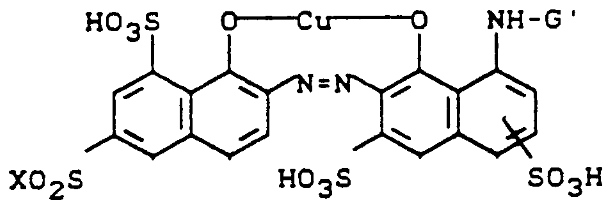

(65)

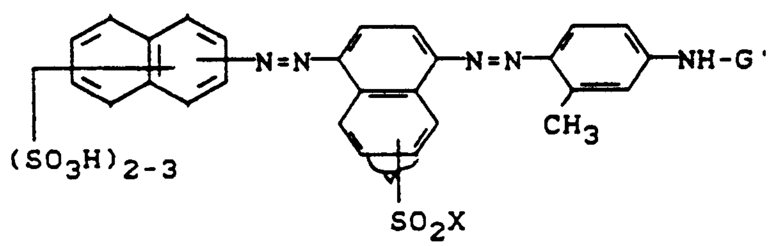

(66)

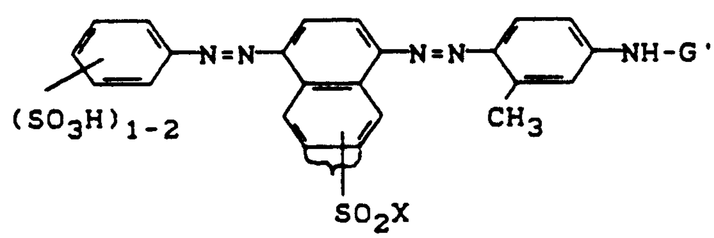

(67)

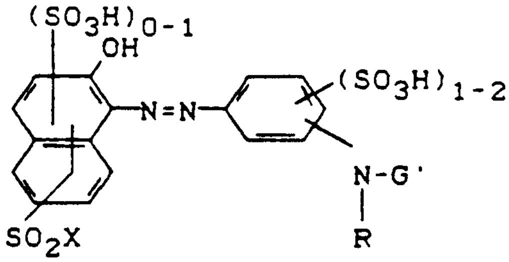

(68)

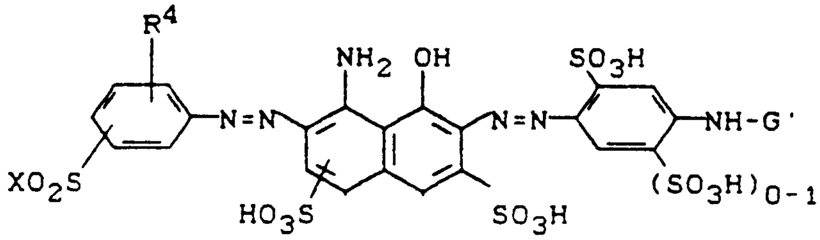

(69)

Bevorzugte Farbstoffe sind weiterhin solche, bei denen Fb für einen Farbstoffrest aus der Phthalocyanin-, Formazan- und insbesondere der Triphendioxazinreihe steht.

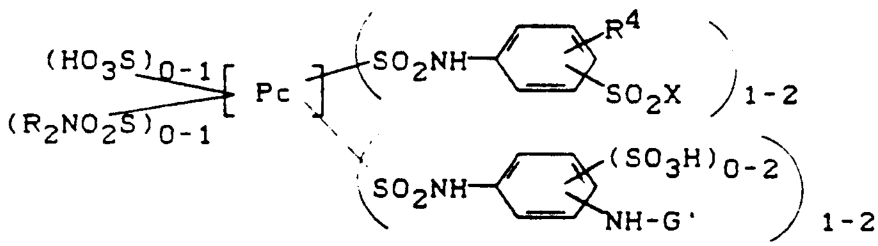

(70)

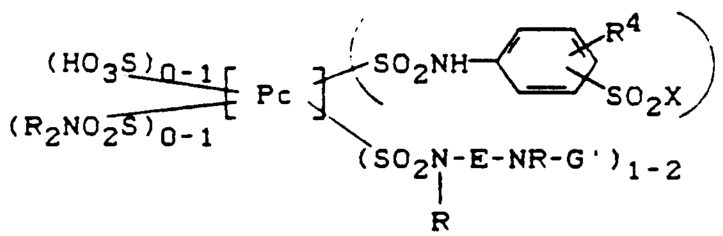

(71)

worin Pc für einen Cu- oder Ni-Phthalocyaninrest steht und die Gesamtzahl der Substituenten am Pc-Gerüst maximal 4 beträgt; E = aliphatisches Brückenglied, insbesondere $C_2$-$C_4$-Alkylen und R die obengenannte Bedeutung besitzt.

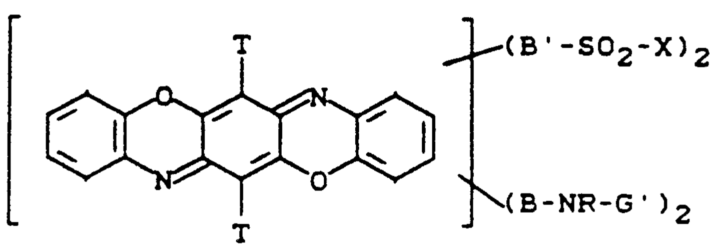

(72)

vorzugsweise

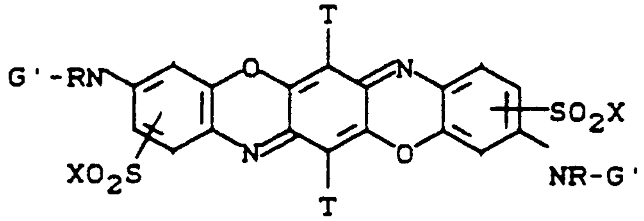

(73)

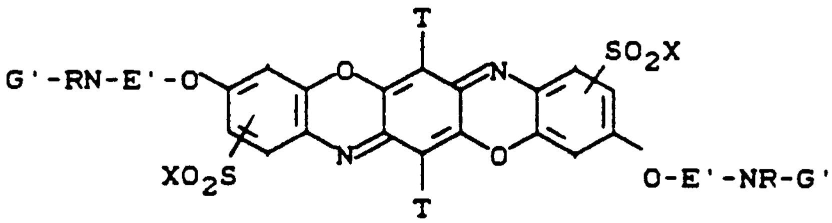

(74)

wobei E′ = aliphatisches oder aromatisches Brückenglied, insbesondere gegebenenfalls substituiertes $C_2$-$C_4$-Alkylen oder gegebenenfalls substituiertes Phenylen und T, R, B, B′, G′, X die obengenannte Bedeutung haben.

Ganz besonders bevorzugte Farbstoffe der Formel (2) sind solche, bei denen

Hal = Cl oder F,

R, $R^1$, $R^2$ = H oder $CH_3$,

A = $-CH_2CH_2-$, $-CH_2-CH(CH_3)-$, $-CH_2-CH_2-CH_2-$,

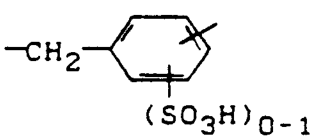

,

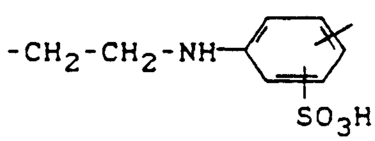

,

sowie der Rest $NR^1$-A-$NR^2$- für

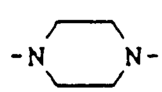

oder

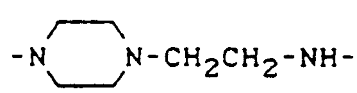

steht,

und

W =

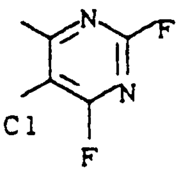 , 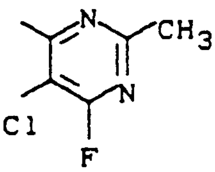 , 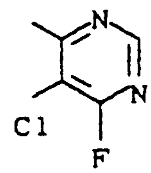 ,

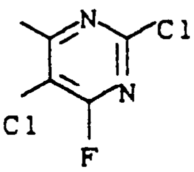 , 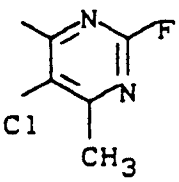 , 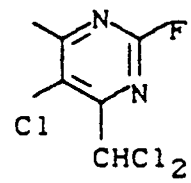 ,

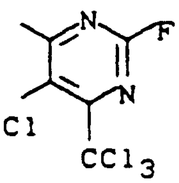 , 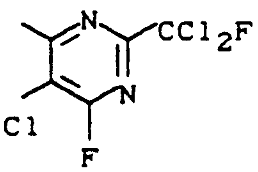 , 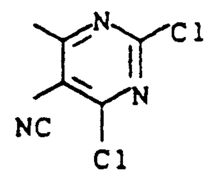 ,

oder

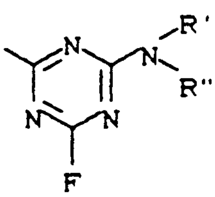

mit

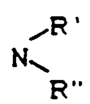 = $NH_2$, $N(CH_3)_2$,

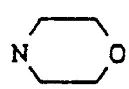 ,

$NHCH_2CH_2OH$, $N(CH_2CH_2OH)_2$,

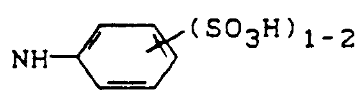 ,

$NHCH_2CH_2SO_3H$, $N(CH_3)CH_2SO_3H$.

Die neuen Farbstoffe lassen sich nach den verschiedenartigsten in der Farbstoffchemie üblichen Herstellungsverfahren erhalten. Beispielhaft seien die folgenden genannt:

1) Farbstoffe der Formeln

$$(XO_2S{-}B')_{1 oder 2}\left[Fb\right]{-}(B{-}\overset{R}{N}{-}H)_{1 oder 2} \quad (75)$$

werden in bekannter Weise mit 1 oder 2 Äquivalenten Cyanurfluorid, Cyanurchlorid bzw. Cyanurbromid unter Abspaltung von H-Hal zu Verbindungen der Formel

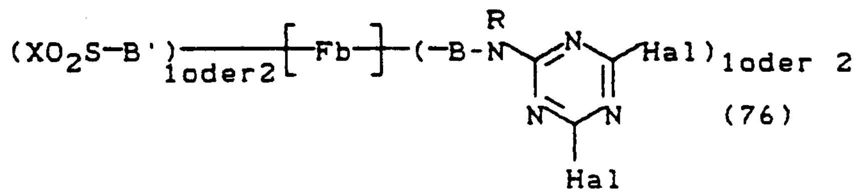

(76)

umgesetzt und nachfolgend mit einem Diamin- oder Hydrazinderivat $HNR^1\text{-}A\text{-}NR^2H$ bei pH 6-8 zu Farbbasen der Formel

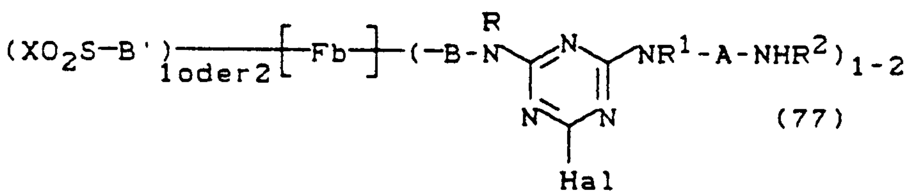

(77)

kondensiert. Durch erneute Kondensation mit einer Reaktivkomponente, wie z.B. Hal-Z, gelangt man unter Abspaltung von H-Hal zu Farbstoffen der Formel (1).

2) Farbstoffe der Formel (75) werden in analoger Weise wie unter 1) (pH 6-8) mit Verbindungen der Formel

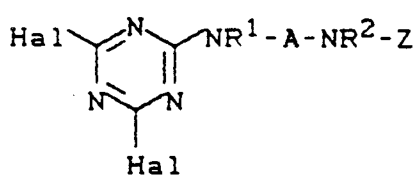

(78)

zu den erfindungsgemäßen Farbstoffen (1) kondensiert. Die Verbindung (78) erhält man ihrerseits durch Umsetzung von Cyanurhalogenid mit Diaminen der Formel $HNR^1\text{-}A\text{-}NHR^2$ und anschließende Reaktion mit Reaktivkomponenten Hal-Z.

3) Farbstoffe der Formel (76) werden in entsprechendem Molverhältnis mit Verbindungen $HNR^1\text{-}A\text{-}NR^2\text{-}Z$, die durch Kondensation der Diamine mit Hal-Z resultieren, zu polyfunktionellen Farbstoffen (1) umgesetzt.

4) Farbstoffe der Formel (77) mit B = direkte Bindung sind zugänglich, indem man Farbstoffe der Formel (75) mit B = direkte Bindung mit Verbindungen der Formel

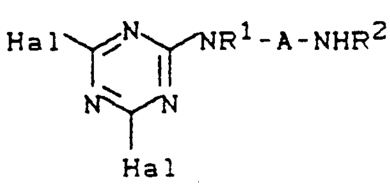

(79)

bei pH-Werten von 4 bis 5,5 unter H-Hal-Abspaltung kondensiert.

5) Farbstoffe der Formeln (1) und (2) mit dem Rest $-SO_2X = SO_2CH_2CH_2OH$ werden in bekannter Weise zu den Farbstoffen der Formeln (1) und (2) mit dem Rest $-SO_2X = SO_2CH_2CH_2OSO_3H$ sulfatiert.

6) Vorprodukte von Fb mit 1 oder 2 Resten -$SO_2X$ bzw. 1 oder 2 Resten der Formel

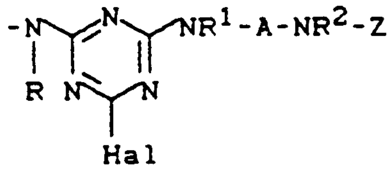

(80)

werden miteinander beispielsweise durch Kondensation oder, wie im Falle von Diazo- bzw. Kupplungskomponenten, durch Azokupplung umgesetzt und anschließend gegebenenfalls metallisiert.

Solche Vorprodukte sind beispielsweise bekannte Diazokomponenten, Kupplungskomponenten, 1-Amino-4-bromanthrachinon-2-sulfonsäure-Verbindungen, aromatische oder aliphatische primäre oder sekundäre Amine, Phthalocyaninsulfochloride, Aminophenolverbindungen und Aminobenzoesäure-Verbindungen. Solche Ausgangsverbindungen und deren Reaktionsweisen sind in großer Zahl in der Literatur für die Herstellung von bekannten Farbstoffen beschrieben.

Als Diazokomponenten, die 1 bis 2 Gruppen -$SO_2X$ enthalten, seien genannt:

Anilin-4-β-sulfatoethylsulfon, Anilin-4-β-thiosulfatoethylsulfon, Anilin-4-vinylsulfon, Anilin-4-β-chlorethylsulfon, Anilin-3-β-sulfatoethylsulfon, Anilin-3-vinylsulfon, 2-Methoxy-anilin-5-β-sulfatoethylsulfon, 2-Methoxy-anilin-5-β-thiosulfatoethylsulfon, 2-Methoxyanilin-5-vinylsulfon, 4-Methoxy-anilin-3-β-sulfatoethylsulfon, 4-Methoxy-anilin-3-β-vinylsulfon, 2,5-Dimethoxyanilin-4-β-sulfatoethylsulfon, 2,5-Dimethoxy-anilin-4-vinylsulfon, 2,5-Dimethoxy-anilin-4-β-sulfatoethylsulfon, 2-Methoxy-5-methyl-anilin-4-β-sulfatoethylsulfon, Anilin-2-β-sulfatoethylsulfon, 2-Chloranilin-5-β-sulfatoethylsulfon, 4-Chloranilin-3-β-sulfatoethylsulfon, 3-(3- oder 4-Aminobenzoyl)-aminophenyl-β-sulfatoethylsulfon, 2-Methoxy-5-methyl-anilin-4-vinylsulfon, 6-Carboxy-anilin-3-β-sulfatoethylsulfon, 6-Carboxy-anilin-3-vinylsulfon, 2-Sulfoanilin-4-β-sulfatoethylsulfon, 2-Sulfoanilin-4-vinylsulfon, 2,4-Disulfoanilin-5-vinylsulfon, 2-Hydroxyanilin-5-β-sulfatoethylsulfon, 2-Hydroxy-anilin-4-β-sulfatoethylsulfon, 3-Sulfo-2-hydroxy-anilin-5-β-sulfatoethylsulfon, 2-Naphthylamin-8-β-sulfatoethylsulfon, 2-Naphthylamin-6-β-sulfatoethylsulfon, 1-Sulfo-2-naphthylamin-6-β-sulfatoethylsulfon, 1-Naphthylamin-4-β-sulfatoethylsulfon, 1-Sulfo-2-napthylamin-5-β-sulfatoethylsulfon, 6-Sulfo-2-naphthylamin-8-β-sulfatoethylsulfon, 2-Amino-3-sulfonaphthalin-6,8-bis-(β-sulfatoethylsulfon),2-Brom-1-aminobenzol-4-β-sulfatoethylsulfon, 2,6-Dichlor-1-aminobenzol-4-β-sulfatoethylsulfon, 1-Naphthylamin-5-β-sulfatoethylsulfon, 2-Naphthylamin-5-β-sulfatoethylsulfon, 2-Naphthylamin-8-β-sulfatoethylsulfon, 8-Sulfo-2-napthylamin-6-β-sulfatoethylsulfon.

Geeignete Diazokomponenten mit dem Rest

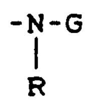

sind beispielsweise

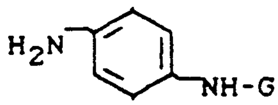 , 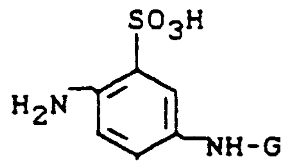 , 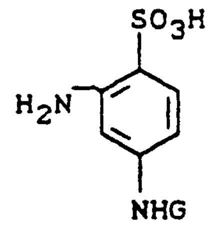

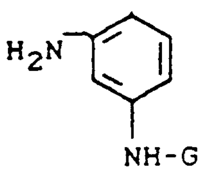 , 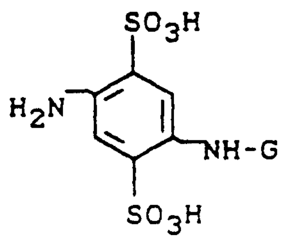 , 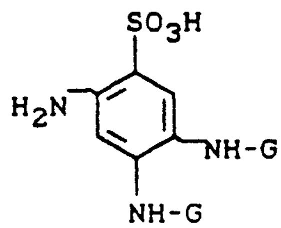 .

Aromatische Monoamine und Diamine, die sowohl als Diazo-als auch als Kupplungskomponente bei der Herstellung von erfindungsgemäßen Disazoverbindungen verwendet werden können, sind beispielsweise: Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetylaminobenzol-1-sulfonsäure, 1-Naphthylamin-6-β-sulfatoethylsulfon, 1-Naphthylamin-7-β-sulfatoethylsulfon, 1,3-Diaminobenzol, 1,3-Diamino-4-methyl- oder -methoxy-benzol, 1,3-Diaminobenzol-4-sulfonsäure, 1-Aminonaphthalin, 1-Aminonaphthalin-6- oder -7-sulfonsäure, 3-Acetylamino-anilin, 2-Amino-8-naphthol-6-sulfonsäure, 2-Amino-8-naphthol-4,6-disulfonsäure, 2-Amino-5-naphthol-7-sulfonsäure, 3-Amino-5-naphthol-7-sulfonsäure, 1-Amino-5-naphthol-7-sulfonsäure, 1-N-Acetoacetylamino-4-aminobenzol, 1-N-Acetoacetylamino-4-N-methyl-aminobenzol, 1-N-Acetoacetylamino-3-methyl-4-aminobenzol, 1-N-Aceto-acetylamino-3-methoxy-4-aminobenzol, 4-Amino-3-sulfo-acetoacetylanilid, 1-(3′-Amino-phenyl)-3-methyl-pyrazolon(5), 1-(4′-Aminophenyl)-3-methyl-pyrazolon(5), 1-(3′- oder 4′-Aminophenyl)-3-carboxy-pyrazolon(5), 1-(3′-Sulfo-4′-aminophenyl)-3-carbethoxy-pyrazolon(5), 1-(3′-Amino-4′-sulfo-phenyl)-3-carboxy-pyrazolon(5), 1-(2′,4′,6′-Trimethyl-3′-amino-5′-sulfophenyl)-3-carbethoxy-pyrazolon(5), 1-(4′-Amino-phenyl)-3-methyl-pyrazolon(5), 1-(3′-Amino-6′-methyl-phenyl)-3-carboxy-pyrazolon(5).

Aromatische Diamine, die als Tetrazokomponenten zur Herstellung von erfindungsgemäßen Disazo-Verbindungen dienen können, sind beispielsweise:
1,3-Diaminobenzol, 1,3-Diaminobenzol-4-sulfonsäure, 1,4-Diaminobenzol, 1,4-Diaminobenzol-2-sulfonsäure, 1,4-Diamino-2-methyl-benzol, 1,4-Diamino-2-methoxy-benzol, 1,3-Diamino-4-methyl-benzol, 1,3-Diaminobenzol-5-sulfonsäure, 1,3-Diamino-5-methyl-benzol, 1,6-Diaminonaphthalin-4-sulfonsäure, 2,5-Diamino-4,8-disulfo-naphthalin, 3,3′-Diamino-diphenylsulfon, 4,4′-Diamino-diphenylsulfon, 3,3′-Diamino-diphenylsulfon-disulfonsäure, 4,4′-Diamino-stilben-2,2′-disulfonsäure, 4,4′-Diaminodiphenylsulfon, 2,7-Diamino-diphenylensulfon-4,5-disulfonsäure, 4,4′-Diamino-benzophenon, 4,4′-Diamino-3,3′-dinitro-benzophenon, 3,3′-Diamino-4,4′-dichlor-benzophenon, 4,4′- oder 3,3′-Diamino-diphenyl, 4,4′-Diamino-3,3′-dichlor-diphenyl, 4,4′-Diamino-3,3′-dimethoxy- oder -3,3′-dimethyl- oder -2,2′-dimethyl-oder -2,2′-dichlor-oder -3,3′-diethoxy-diphenyl, 4,4′-Diamino-3,3′-dimethyl-6,6′-dinitro-diphenyl, 4,4′-Diamino-2,2′- oder 3,3′-disulfo-diphenyl, 4,4′-Diamino-3,3′-dimethyl- oder -3,3′-dimethoxy- oder -2,2′-dimethoxy-6,6′-disulfodiphenyl, 4,4′ -Diamino-2,2′ ,5,5′ -tetrachlor-diphenyl, 4,4′-Diamino-3,3′-dinitro-diphenyl, 4,4′-Diamino-2,2′-dichlor-5,5′-dimethoxy-diphenyl, 4,4′-Diamino-2,2′- oder -3,3′-dicarbonsäure, 4,4′-Diamino-3,3′-dimethyl-diphenyl-5,5′-disulfonsäure, 4,4′-Diamino-2-nitro-diphenyl, 4,4′-Diamino-3-ethoxy- oder -3-sulfo-diphenyl, 4,4′-Diamino-3,3′-dimethyl-5-sulfo-diphenyl, 4,4′-Diaminodiphenylmethan, 4,4′-Diamino-3,3′-dimethyl-diphenylmethan, 4,4′-Diamino-2,2′,3,3′-tetramethyl-diphenylmethan, 4,4′-diamino-diphenylethan, 4,4′-Diaminostilben, 4,4′-Diamino-diphenylmethan-3,3′-dicarbonsäure, 1,2-Di-(4′-amino-phenoxy)-ethan.

Kupplungskomponenten, die in den erfindungsgemäßen Mono- oder Disazofarbstoffen enthalten sein können oder zu deren Herstellung dienen, sind insbesondere beispielsweise die Verbindungen der Formeln:

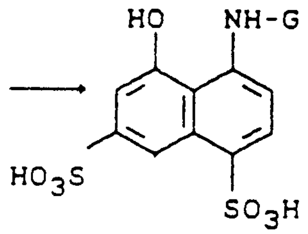
,
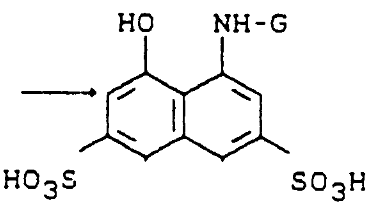
,

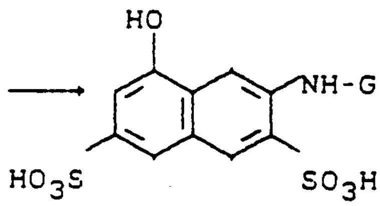
,
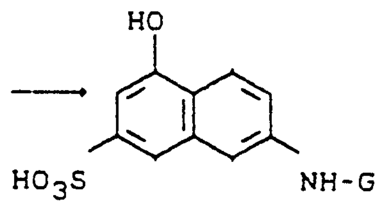
,

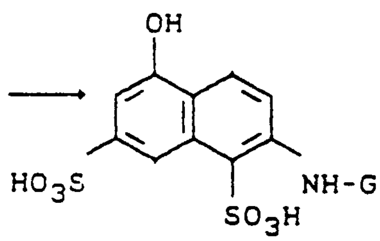
,
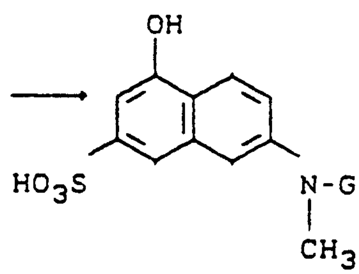
,

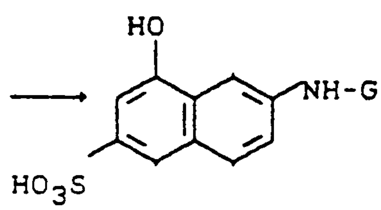
,
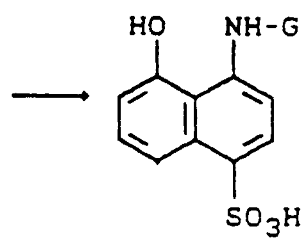
,

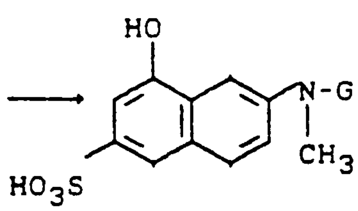
,
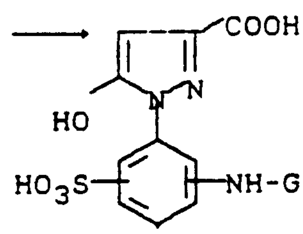

Zur Herstellung der erfindungsgemäßen Mono- und Disazoverbindungen und auch deren Metallkomplexfarbstoffe kann in üblicher Weise vorgegangen werden, indem beispielsweise analog den bekannten Diazotierungs- und Kupplungsmethoden Umsetzung der diazotierten aromatischen Amine mit den Kupplungskomponenten erfolgt und diese Azoverbindungen gegebenenfalls durch nachfolgende Metallisierung analog bekannten Verfahrensweisen (s. Houben-Weyl, "Methoden der Organischen Chemie", 4. Ausgabe (1965), Band 10/3, S. 452 ff.; Angewandte Chemie 70, 232-238 (1958); Angewandte Chemie 64, 397 (1952)) in die entsprechenden Schwermetallkomplexverbindungen, wie die Kupfer-, Kobalt- oder Chromkomplexverbindungen, überführt.

Andere Umwandlungsreaktionen der Farbstoffe oder deren Vorprodukte, wie Metallisierungsreaktionen, Sulfierungen, Triazolierungen oder Einführung von Acylamino- oder Triazinyl-Gruppierungen, können im allgemeinen in beliebigen Stufen der Farbstoffsynthese vorgenommen werden. Einzelheiten können den nachfolgend aufgeführten Beispielen entnommen werden.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die Farbstoffe können aber auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren, sowie zum Bedrucken von Baumwolle und Zellwolle.

Man erhält bei gutem Aufbauvermögen und hohen Fixierausbeuten Färbungen mit guten Allgemeinechtheiten, insbesondere Naßechtheiten.

Beispiel 1

0,1 Mol 1-Aminoethyl-3-sulfomethyl-4-methyl-6-hydroxypyridon (2) werden in Wasser gelöst und mit 0,105 Mol 2,4,6-Trichlortriazin bei 0 bis 5 °C und pH = 7,5 umgesetzt. Während der Reaktion wird der pH-Wert mit Sodalösung konstant gehalten. Nach beendeter 1. Kondensation wird mit 0,1 Mol Ethylendiamin versetzt und die Temperatur auf 50 °C erhöht, wobei der pH-Wert mit Sodalösung bei 7,5 gehalten wird. Nachdem auch die 2. Kondensation beendet ist, wird der Ansatz auf 0 °C gekühlt und mit 0,103 Mol 5-Chlor-2,4,6-trifluorpyrimidin versetzt. Auch während der 3. Kondensation wird der pH-Wert bei 7,5 gehalten. Nach beendeter Kondensation erhält man das Kondensationsprodukt der Formel

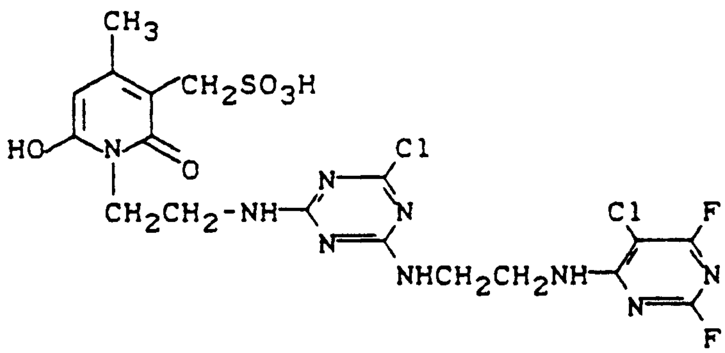

0,095 Mol 2-Amino-6-β-sulfatoethylsulfonyl-naphthalin-1-sulfonsäure werden in 300 ml Wasser gelöst und mit Natriumnitritlösung salzsauer diazotiert. Nach dem Entfernen von überschüssigem Nitrit mit Amidosulfonsäure wird die Diazotierung zu der Kupplungskomponente gegeben und der pH-Wert mit Sodalösung auf 5 - 6 eingestellt.

Nach beendeter Kupplung wird der Farbstoff ausgesalzen, abgesaugt, getrocknet und gemahlen. Es resultiert ein in Wasser leicht lösliches gelbes Farbstoffpulver, das den Farbstoff der Formel

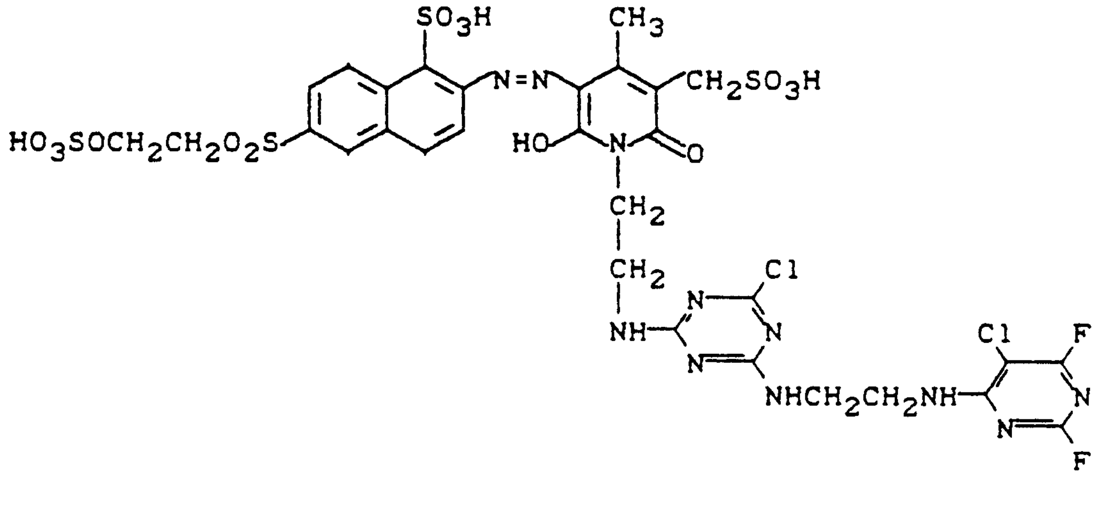

enthält. Der Farbstoff färbt Baumwolle stark grünstichig gelb.

Beispiel 2

Ersetzt man im Beispiel 1 die Diazokomponente durch die äquivalente Menge an 1-Amino-4-$\beta$-sulfatoethyl-sulfonylbenzol und arbeitet ansonsten wie in Beispiel 1 beschrieben, erhält man den Farbstoff der Formel

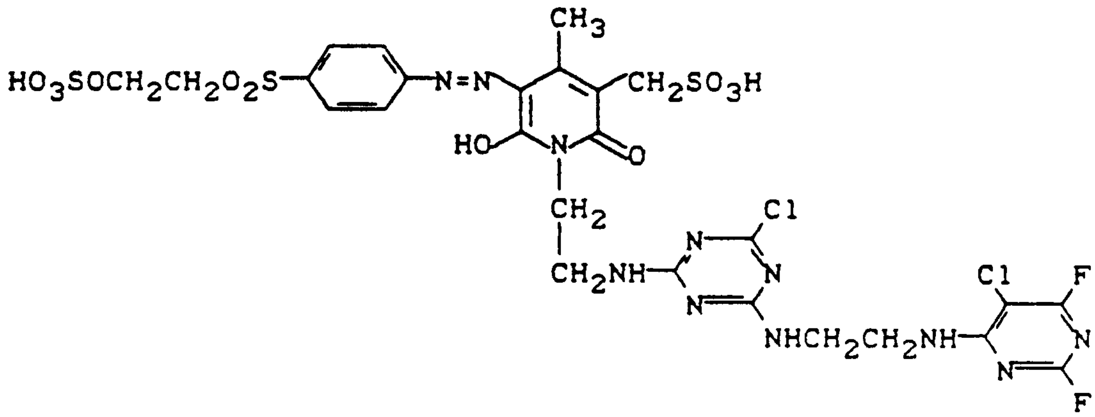

Der Farbstoff färbt Baumwolle stark grünstichig gelb.

Analog Beispiel 1 erhält man bei Verwendung der entsprechenden Ausgangsverbindungen D-$NH_2$, $NHR^1$-A-$NHR^2$, Z-F und

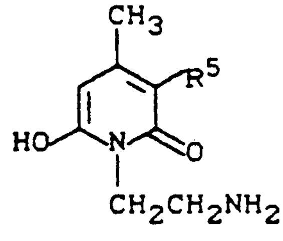

die grünstichig gelben Farbstoffe der Formel

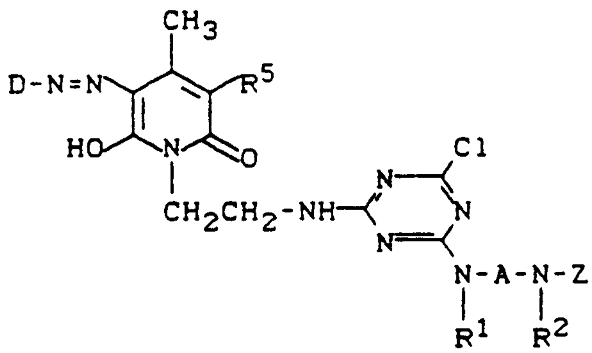

der folgenden Tabelle

| Bsp. | D | $R^5$ | $-NR^1-A-NR^2$ | Z |
|---|---|---|---|---|
| 3 | 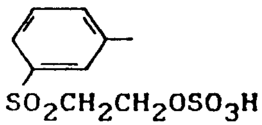 | $-CH_2SO_3H$ | 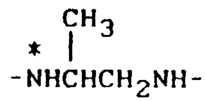 | 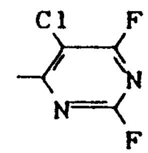 |
| 4 | 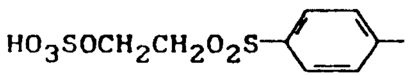 | " | " | " |
| 5 | " | " | 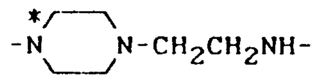 | " |
| 6 | 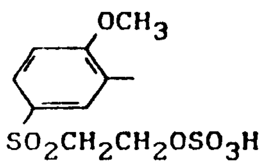 | $-CONH_2$ | " | 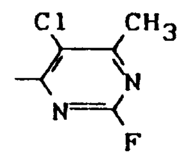 |
| 7 | 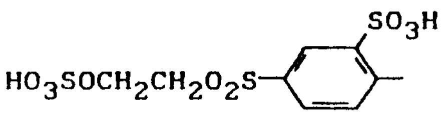 | " | " | " |
| 8 | " | $-SO_3H$ | 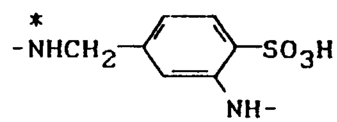 | 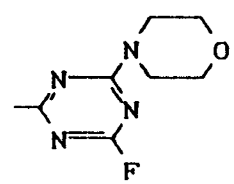 |

| Bsp. | D | $R^5$ | $-NR^1-A-NR^2$ | Z |
|---|---|---|---|---|
| 9 | 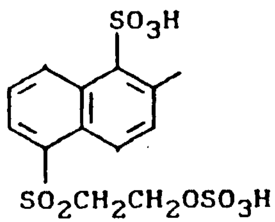 | $-CH_2SO_3H$ | 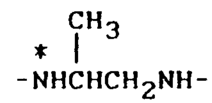 | 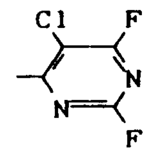 |
| 10 | " | " | 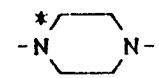 | " |
| 11 | 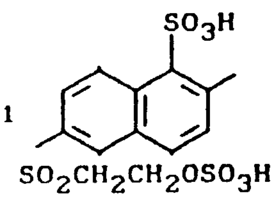 | " | " | 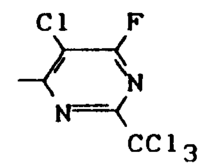 |
| 12 | " | $-CONH_2$ | 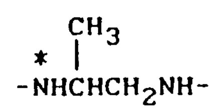 | 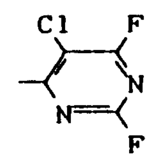 |
| 13 | " | " | 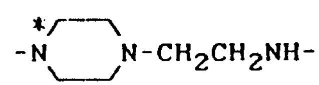 | " |

| Bsp. | D | $R^5$ | $-NR^1-A-NR^2$ | Z |
|---|---|---|---|---|
| 14 | 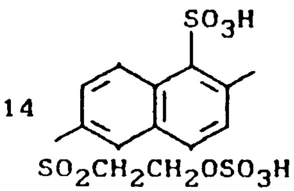 | $-SO_3H$ | 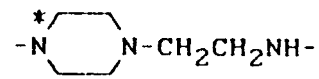 | 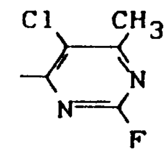 |
| 15 | " | $-CH_2SO_3H$ | " | 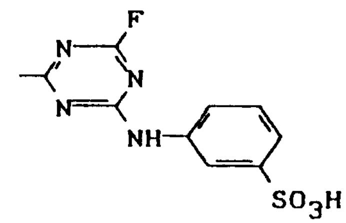 |
| 16 | " | " | 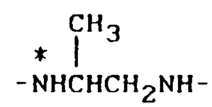 | " |
| 17 | " | " | 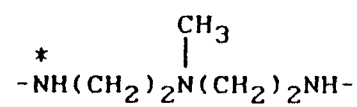 | " |
| 18 | 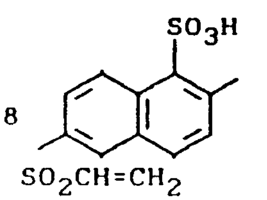 | " | 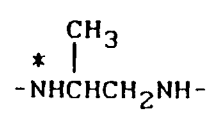 | " |

| Bsp. | D | $R^5$ | $-NR^1-A-NR^2$ | Z |
|---|---|---|---|---|
| 19 | 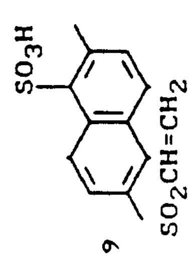 | $-CH_2SO_3H$ | 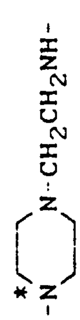 | 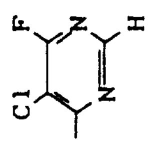 |
| 20 | " | " | 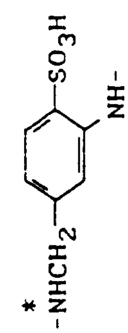 | 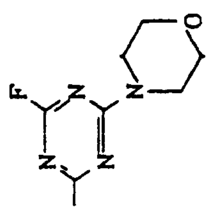 |

Beispiel 21

0,1 Mol 2,4-Diaminobenzolsulfonsäure werden in 400 ml Wasser mit Natronlauge neutral gelöst. Nach Zugabe von 0,105 Mol einer 2,4,6-Trichlortriazinanschlämmung in Wasser, Eis und Emulgator läßt man bei 0 bis 5 °C den pH-Wert auf 4 fallen und hält ihn dort mit Sodalösung. Sobald die Kondensation vollständig ist, versetzt man mit 0,1 Mol N-2-Amino-ethyl-piperazin und erhöht den pH-Wert auf 5,5 bis 6,5. Nachdem wiederum die Kondensation vollständig ist, versetzt man bei 0 bis 5 °C mit 0,1 Mol 5-Chlor-2,4,6-trifluorpyrimidin und kondensiert bei pH 6,5, wobei die entstehende Fluorwasserstoffsäure mit Sodalösung neutralisiert wird. Nach Ende der Reaktion wird pH-kontrolliert bei pH 2,8 mit Natriumnitritlösung und HCl

diazotiert. Nach Entfernen des überschüssigen Nitrits mit Amidosulfonsäure wird die Diazotierung zu einer Lösung von 6-Hydroxy-4-methyl-1-(3'-β-Sulfatoethylsulfophenyl)-3-sulfomethyl-pyridon-(2) gegeben und bei pH 5 bis 6 (Soda) gekuppelt. Der Farbstoff wird ausgesalzen, abgesaugt, getrocknet und gemahlen. Es resultiert ein in Wasser leicht lösliches gelbes Pulver, das auf Baumwolle stark grünstichig gelbe Färbungen ergibt.

Der Farbstoff entspricht der Formel

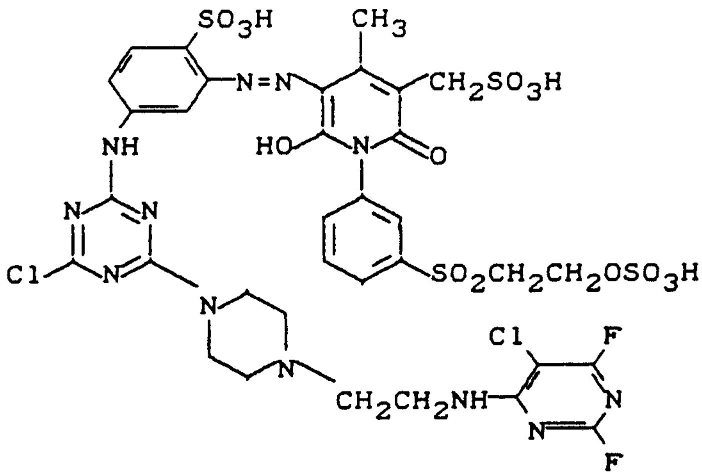

Beispiel 22

Ersetzt man in Beispiel 21 die Kupplungskomponente durch 1-(4'-β-Sulfatoethylsulfophenyl)-pyrazol-5-on-3-carbonsäure und arbeitet ansonsten wie im Beispiel 21 angegeben, erhält man den Farbstoff der Formel

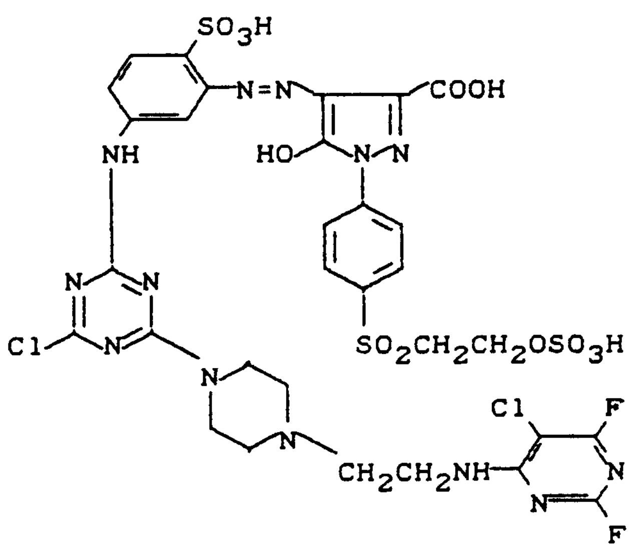

der Baumwolle in grünstichig gelben Tönen färbt.

Beispiel 23

Ersetzt man in Beispiel 21 die 2,4-Diaminobenzolsulfonsäure durch die 2,5-Diaminobenzolsulfonsäure, erhält man die Diazokomponente der Formel

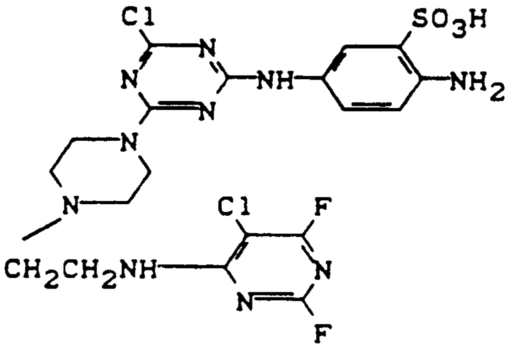

Durch Diazotierung und Kupplung mit der in Beispiel 22 genannten Kupplungskomponente erhält man den Farbstoff der Formel

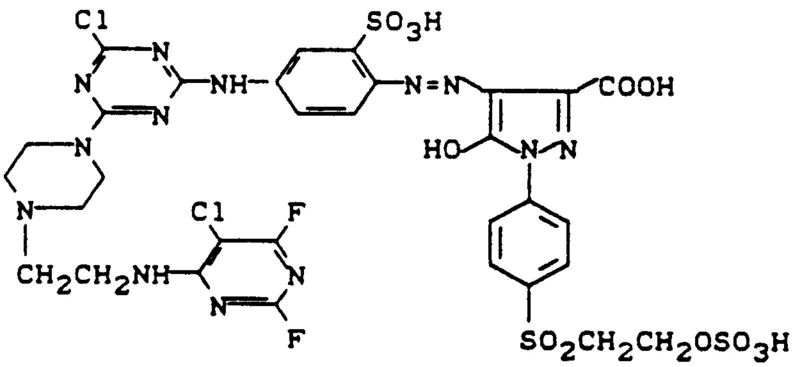

Dieser Farbstoff färbt Baumwolle in goldgelben Tönen. Analog zu den beschriebenen Farbstoffen lassen sich auch die in der folgenden Tabelle aufgeführten Farbstoffe herstellen, die Baumwolle in den angegebenen Farbtönen färben.

| Beispiel | Farbstoff / Farbton |
| --- | --- |
| 24 | 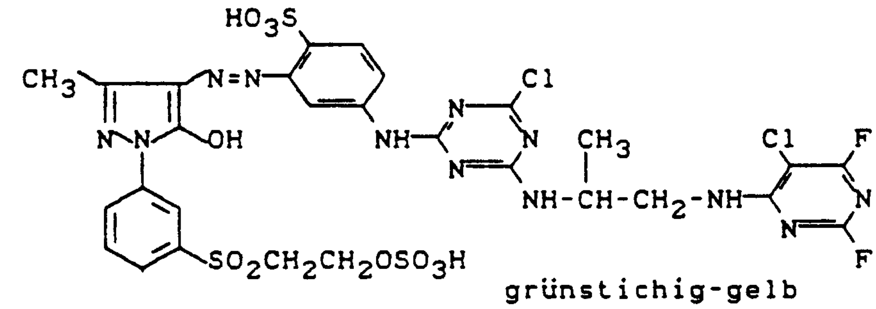 grünstichig-gelb |
| 25 | 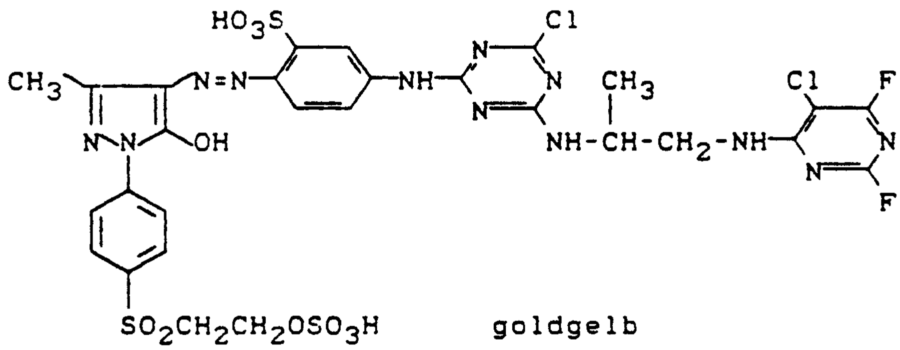 goldgelb |
| 26 | 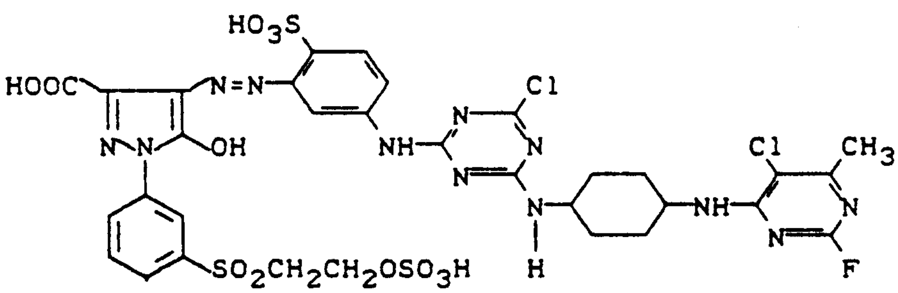 grünstichig-gelb |

| Beispiel | Farbstoff / Farbton |
|---|---|
| 27 | 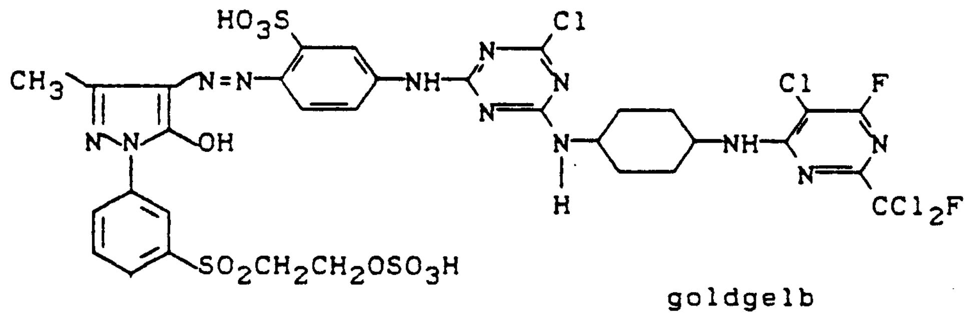<br>goldgelb |
| 28 | 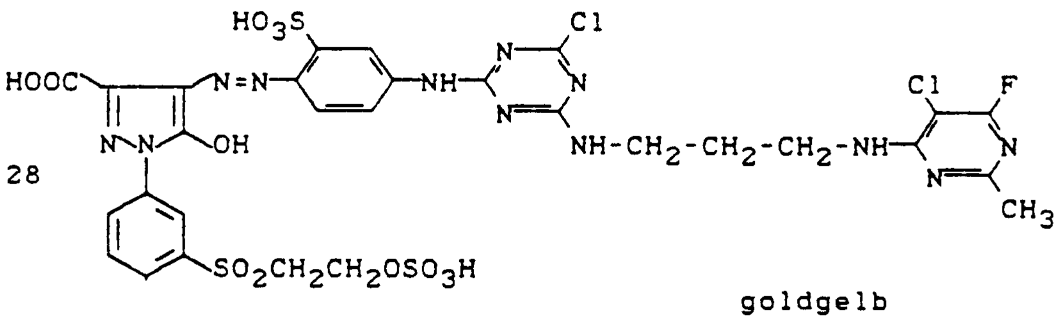<br>goldgelb |
| 29 | 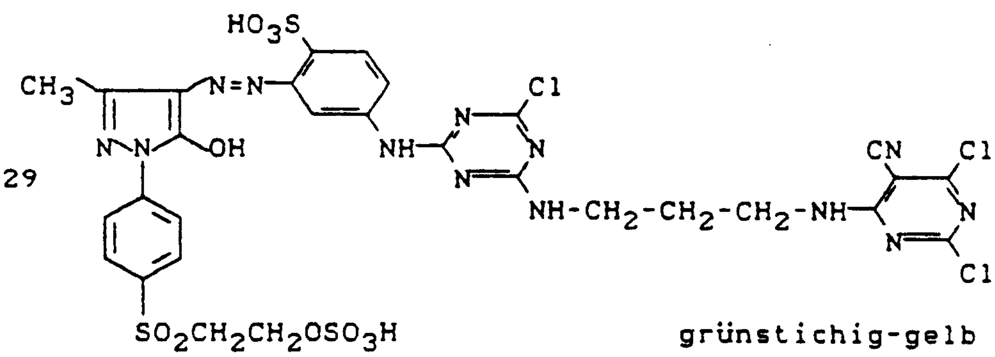<br>grünstichig-gelb |

| Beispiel | Farbstoff / Farbton |
|---|---|
| 30 | 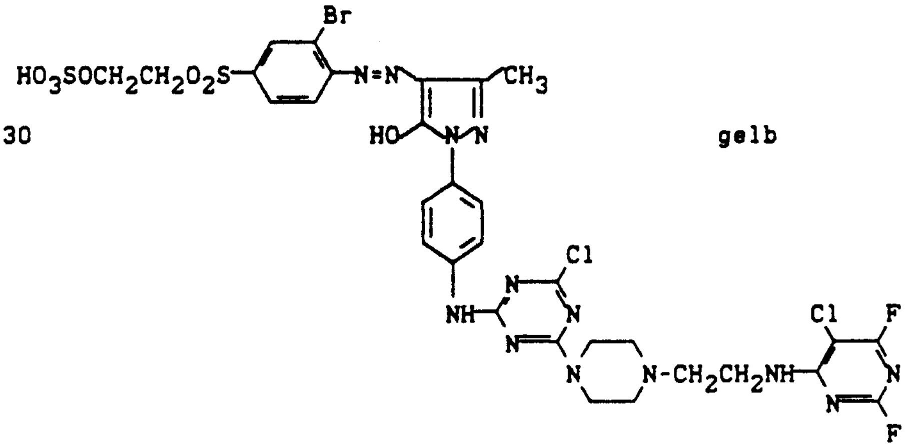 gelb |
| 31 | 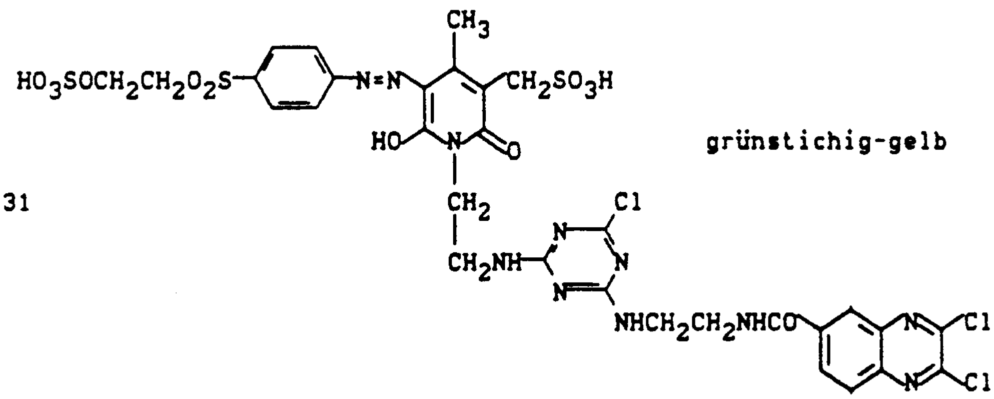 grünstichig-gelb |
| 32 | 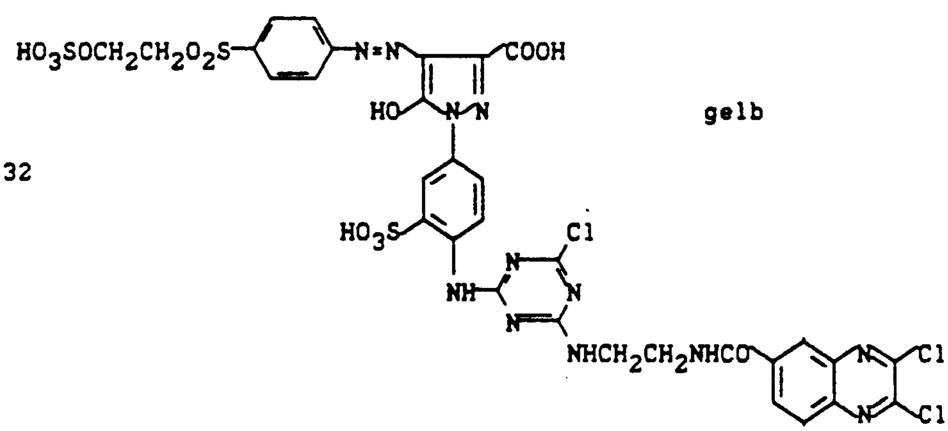 gelb |

| Beispiel | Farbstoff / Farbton |
| --- | --- |
| 33 | 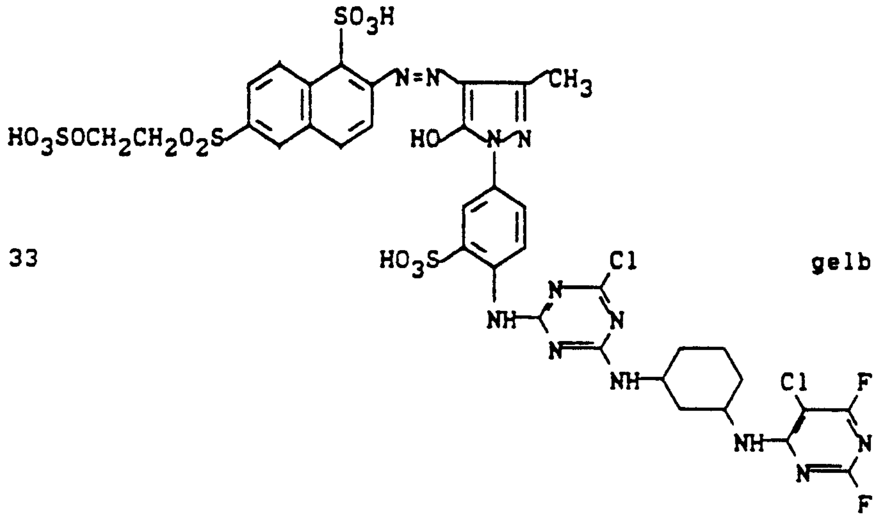 gelb |
| 34 | 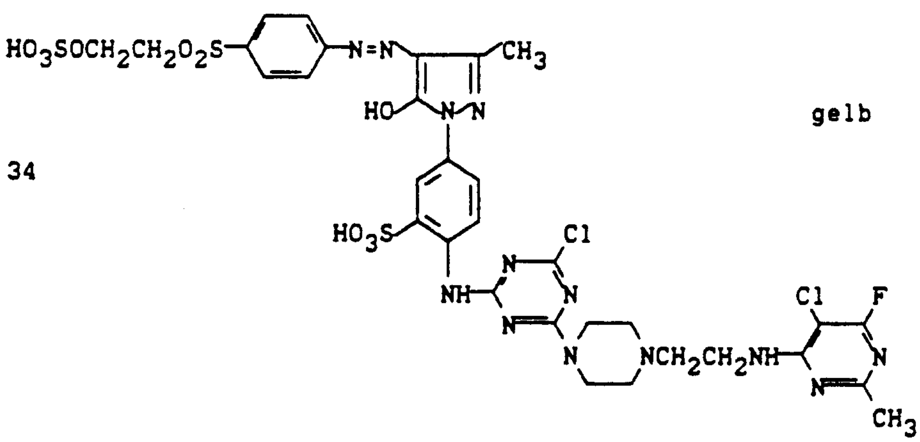 gelb |
| 35 | 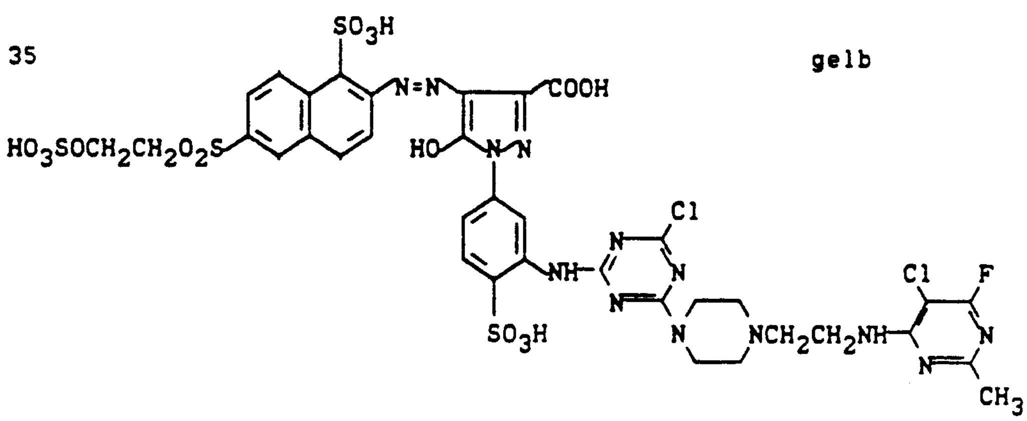 gelb |

Beispiel 36

Die analog Beispiel 2 hergestellte Diazotierung von 1-Amino-4-sulfatoethylsulfonylbenzol wird mit 4-Acetylamino-2-amino-benzol-1-sulfonsäure versetzt und der pH mit Natriumacetatlösung auf pH 2 angehoben und gehalten. Nach beendeter Kupplung wird bei pH 4 und 0 ° C mit 2,4,6-Trichlortriazin acyliert, wobei

entstehende Salzsäure mit Sodalösung neutralisiert wird. Nach Ende der Kondensation wird mit β-Aminoethylpiperazin bei pH 5,5 und 5 °C und anschließend bei pH 6,5 mit 5-Chlor-2,4,6-trifluorpyrimidin umgesetzt, wobei der pH-Wert jeweils durch Zutropfen von Natriumhydrogencarbonatlösung konstant gehalten wird. Nach beendeter Kondensation wird der Farbstoff ausgesalzen, isoliert, getrocknet und gemahlen. Der Farbstoff der Formel

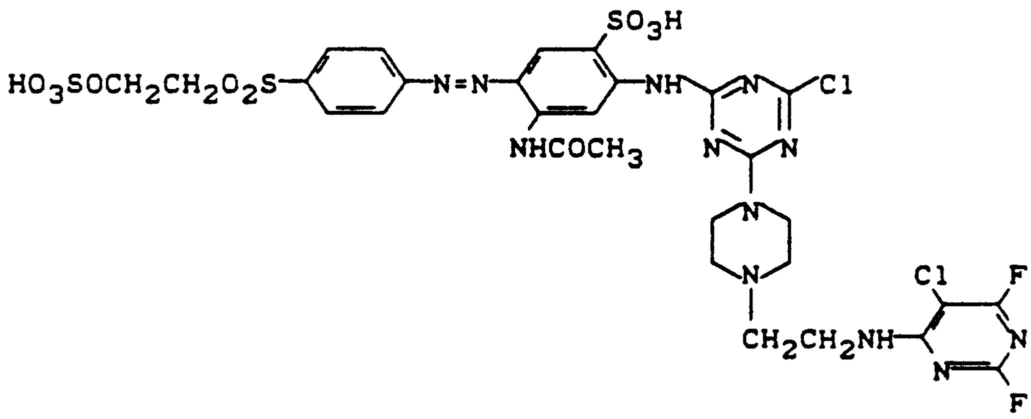

färbt Baumwolle in gelben Tönen.

Beispiel 37

Bei Verwendung der entsprechenden Komponenten läßt sich analog Beispiel 36 der Farbstoff der Formel

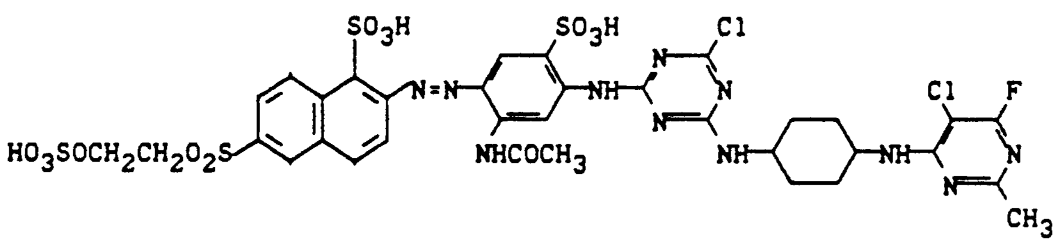

herstellen, der Baumwolle in gelben Tönen färbt.

Analog der Beispiele 36 und 37 lassen sich such die folgenden Farbstoffe herstellen, die Baumwolle in gelben Tönen färben:

Beispiel

38

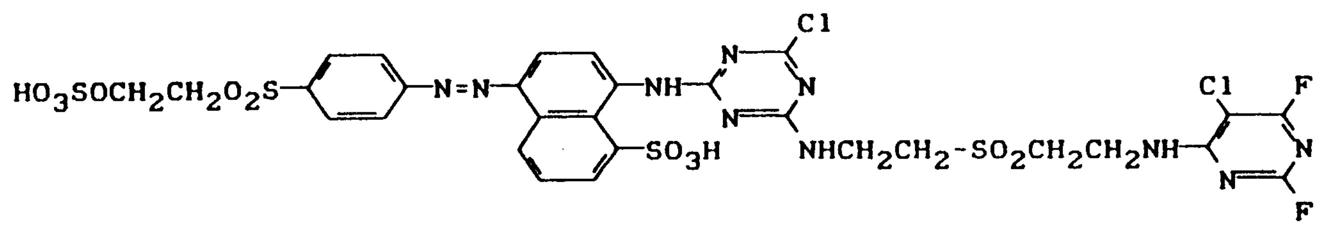

39

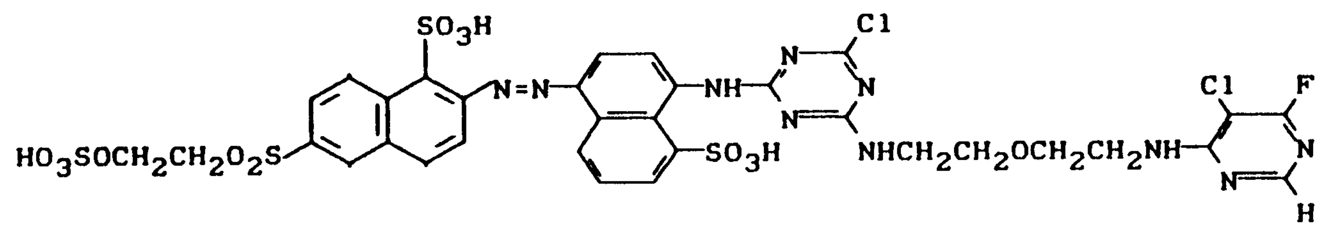

40

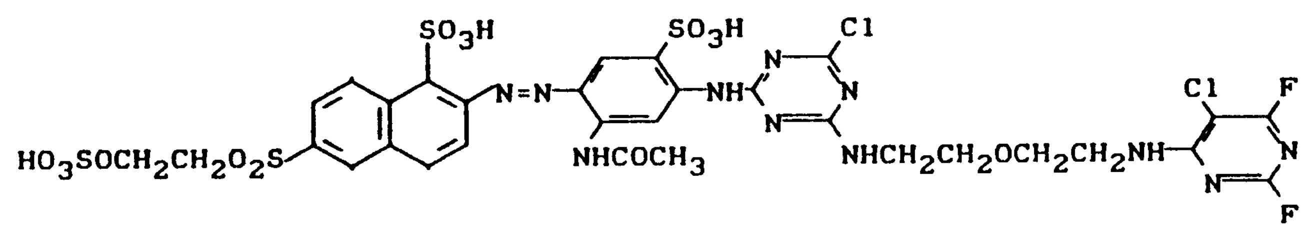

| Beispiel | |
| --- | --- |
| 41 | 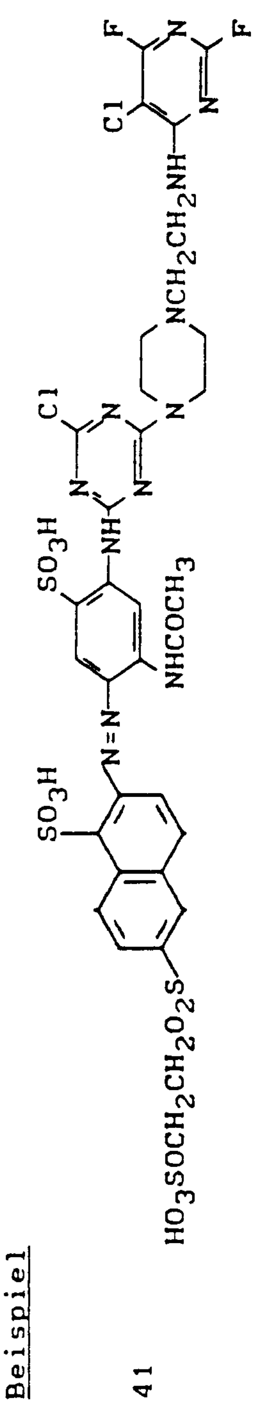 |
| 42 | 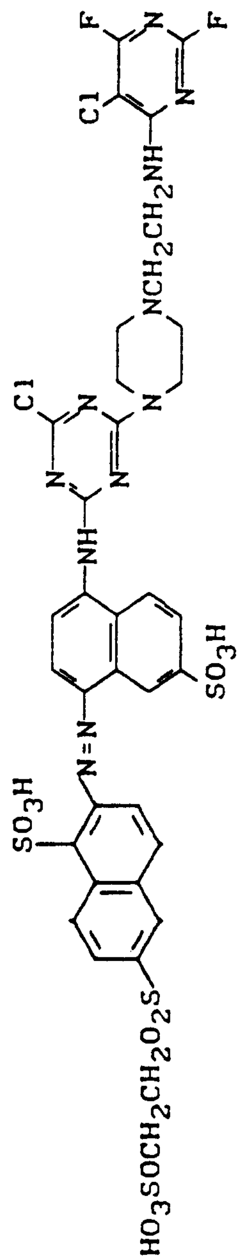 |
| 43 | 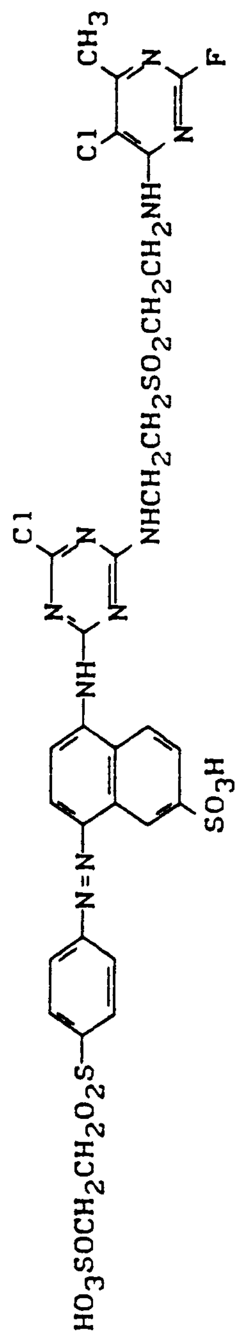 |

Beispiel 44

0,1 Mol H-Säure werden in 350 ml Wasser alkalisch gelöst, mit Salzsäure auf pH 4 gestellt und mit 0,105 Mol 2,4,6-Trichlortriazin bei 0 °C acyliert, wobei der pH mit Natriumcarbonat bei 4 gehalten wird. Nach beendeter Kondensation ist das Umsetzungsprodukt in Lösung und wird geklärt. Danach wird bei pH 7,5 und 30 °C mit 1,4-Cyclohexylendiamin kondensiert. Zu diesem Produkt gibt man das Kondensationsprodukt aus 2-Aminobenzol-sulfonsäure mit 2,4,6-Trifluortriazin und kondensiert erneut bei pH 7,5 und 10 °C. Bei beiden Kondensationen wird der pH-Wert mit Sodalösung gehalten. Nun werden 0,095 Mol 2-Amino-6-sulfatoethylsulfonyl-naphthalin-1-sulfonsäure in 300 ml Waser gelöst und mit Natriumnitritlösung salzsauer diazotiert. Nach dem Entfernen von überschüssigem Nitrit mit Amidosulfonsäure wird die Diazotierung zu der Kupplungskomponente gegeben und mit Sodalösung pH 6,5 bis 7 eingestellt und gehalten. Nach beendeter Kupplung wird der Farbstoff ausgesalzen, isoliert, getrocknet und gemahlen. Der so erhaltene Farbstoff der Formel

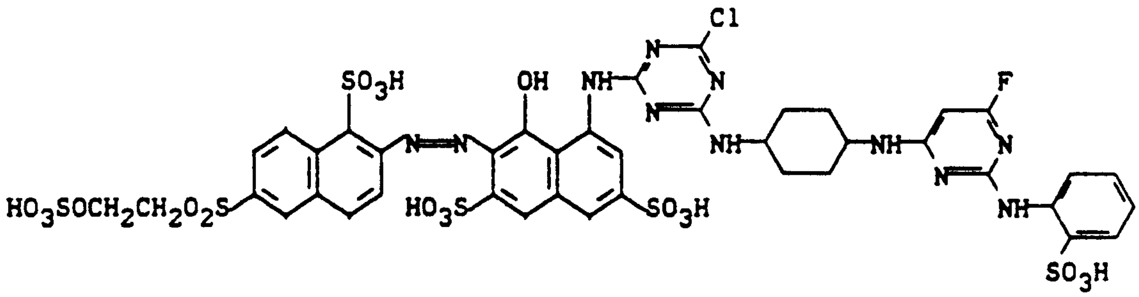

färbt Baumwolle in blaustichig roten Tönen.

Beispiel 45

0,095 Mol 1-Amino-4-sulfatoethylsulfonylbenzol werden in Wasser angeschlagen und mit Natriumnitritlösung diazotiert. Man läßt 30 Minuten nachrühren und entfernt dann überschüssiges Nitrit mit Amidosulfonsäure. Die Diazotierung wird zu der in Beispiel 44 hergestellten Kupplungskomponente gegeben und mit Natriumcarbonatlösung pH 6 bis 7 eingestellt. Nachdem die Kupplung beendet ist, wird der Farbstoff ausgesalzen, isoliert, getrocknet und gemahlen.

Der Farbstoff der Formel

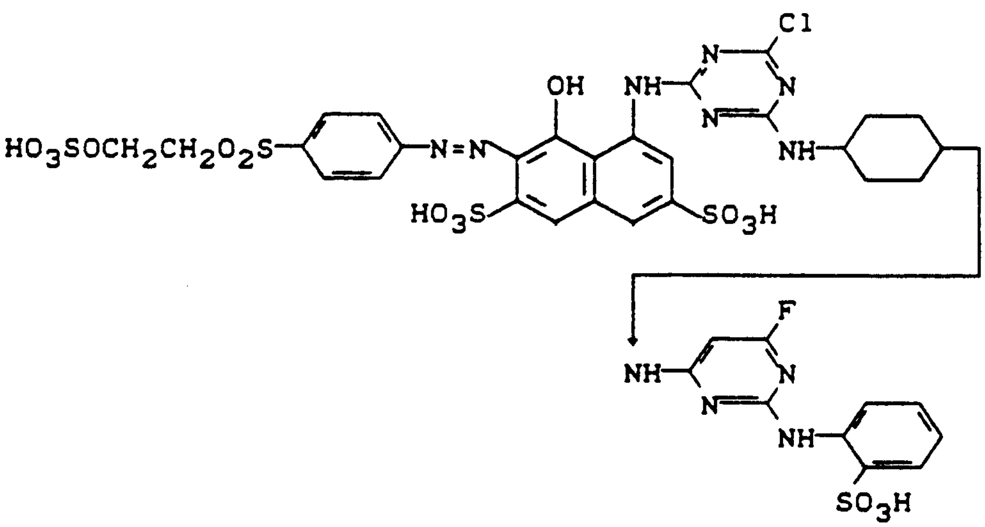

färbt Baumwolle in klaren roten Tönen.

Beispiel 46

Arbeitet man entsprechend dem Beispiel 44 und ersetzt die H-Säure durch die K-Säure, erhält man den Farbstoff der Formel

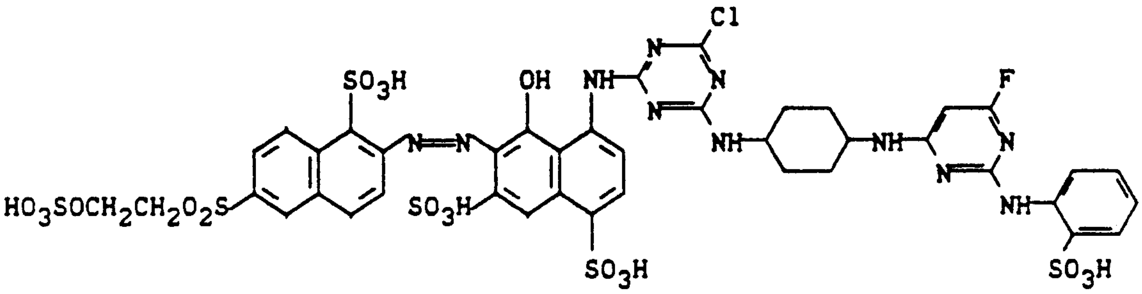

mit dem Baumwolle in klaren roten Tönen bedruckt wird.

Beispiel 47

Arbeitet man entsprechend dem Beispiel 45 und ersetzt die H-Säure durch die K-Säure, erhält man den Farbstoff der Formel

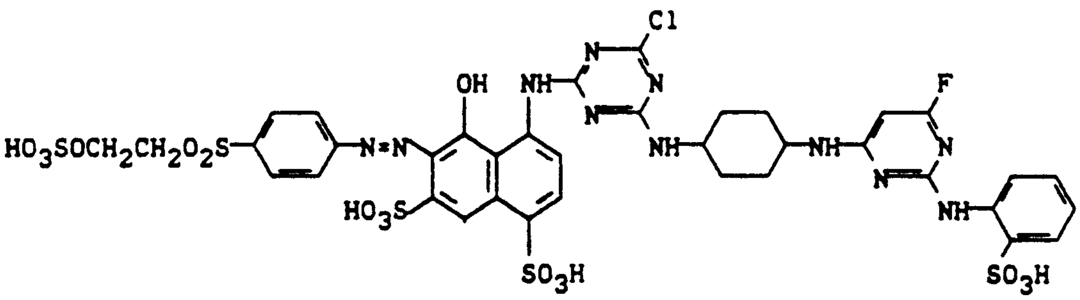

mit dem Baumwolle in klaren gelbstichig roten Tönen zu färben bzw. zu bedrucken ist.

Analog den in den voranstehenden Beispielen beschriebenen Verfahren lassen sich bei Verwendung der entsprechenden Ausgangsverbindungen D-$NH_2$, K-$H_2$,

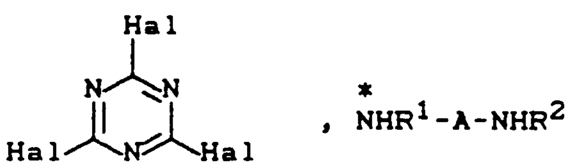

und Z-F die Farbstoffe der Formel

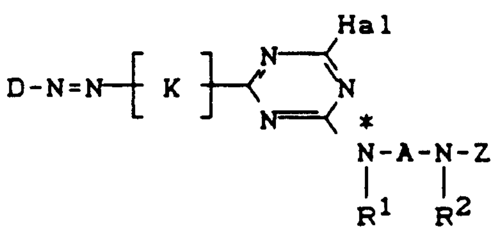

der Beispiele 48 bis 100 erhalten.

| Bei-spiel | D- | -K- | Hal | $-\underset{R^1}{\overset{*}{N}}-A-\underset{R^2}{N}-$ | -Z | Farbton |
|---|---|---|---|---|---|---|
| 48 | 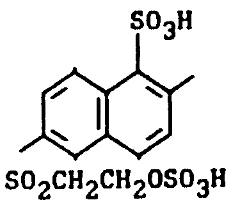 | 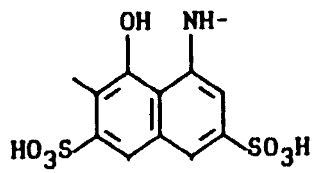 | Cl | 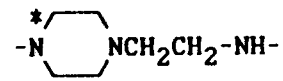 | 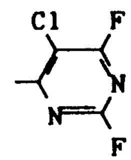 | blaustichig rot |
| 49 | " | " | Cl | $-\underset{H}{N}-CH_2CH_2\underset{CH_3}{N}CH_2CH_2-\underset{H}{N}-$ | " | " |
| 50 | " | " | Cl | $-\underset{H}{N}-CH_2CH_2OCH_2CH_2-\underset{H}{N}-$ | " | " |
| 51 | " | " | Cl | $-\underset{H}{N}-CH_2CH_2CH_2-\underset{H}{N}-$ | " | " |
| 52 | " | " | Cl | " | 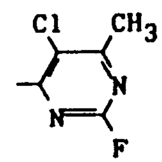 | " |
| 53 | " | " | Cl | 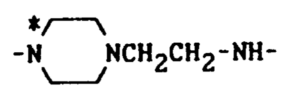 | " | " |

| Beispiel | D- | -K- | Hal | * -N-A-N- $R^1$ $R^2$ | -Z | Farbton |
|---|---|---|---|---|---|---|
| 54 | 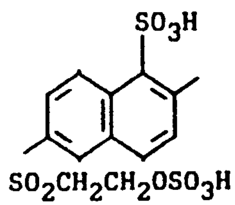 | 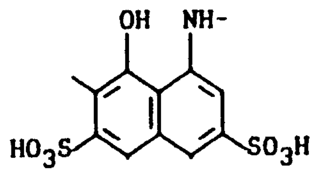 | F | 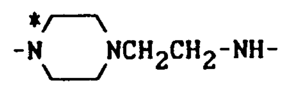 | 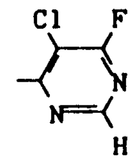 | blaustichig rot |
| 54 a | " | " | Cl | " | " | " |
| 55 | " | " | Cl | " | 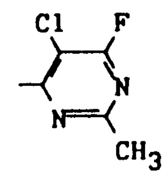 | " |
| 56 | " | 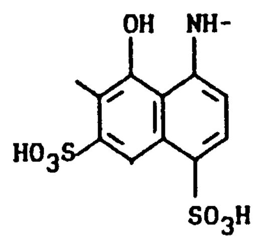 | Cl | " | " | rot |
| 57 | " | " | Cl | " | 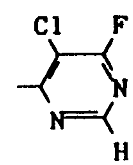 | " |

| Beispiel | D- | -K- | Hal | $-\overset{*}{N}-A-N-$<br>$R^1$ $R^2$ | -Z | Farbton |
|---|---|---|---|---|---|---|
| 58 | 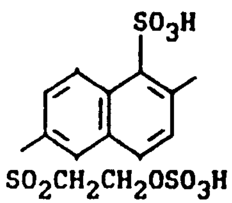 | 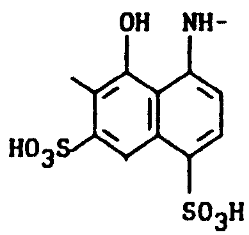 | F | 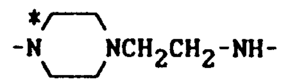 | 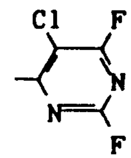 | rot |
| 58 a | " | " | Cl | " | " | " |
| 59 | " | " | Cl | $-N-CH_2CH_2OCH_2CH_2-N-$<br>H H | " | " |
| 60 | " | " | Cl | 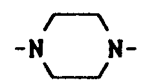 | " | " |

| Bei-spiel | D- | -K- | Hal | 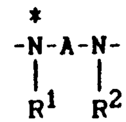 | -Z | Farbton |
|---|---|---|---|---|---|---|
| 61 | 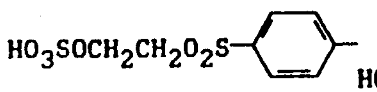 | 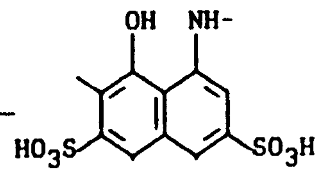 | Cl | 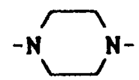 | 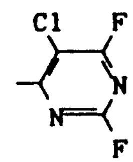 | gelbstichig rot |
| 62 | " | " | Cl | 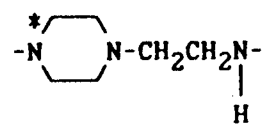 | " | " |
| 63 | " | " | Cl | " | 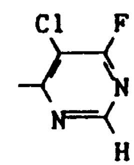 | " |
| 64 | " | " | Cl | 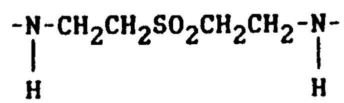 | 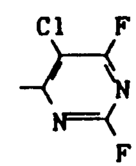 | " |
| 65 | " | " | Cl | 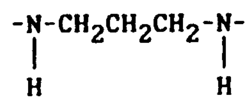 | " | " |

| Beispiel | D- | -K- | Hal | *<br>-N-A-N-<br>$R^1$ $R^2$ | -Z | Farbton |
|---|---|---|---|---|---|---|
| 67 | 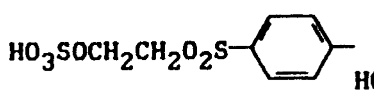 | 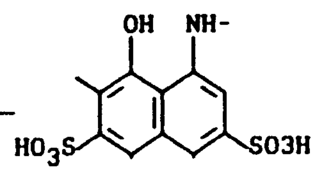 | Cl | 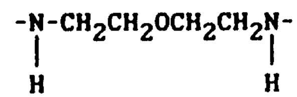 | 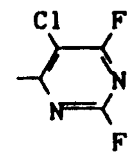 | gelbstichig rot |
| 67 | " | " | F | " | " | " |
| 68 | " | 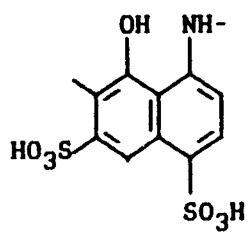 | Cl | " | " | " |
| 69 | " | " | Cl | 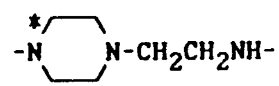 | " | " |
| 70 | " | " | Cl | 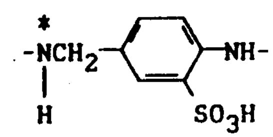 | 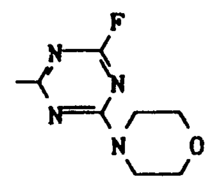 | " |

| Beispiel | D- | -K- | Hal | 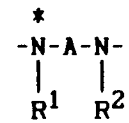 | -Z | Farbton |
|---|---|---|---|---|---|---|
| 71 | 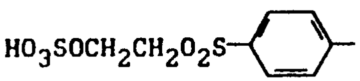 | 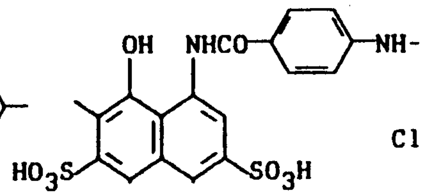 | Cl | 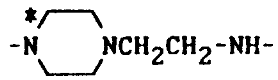 | 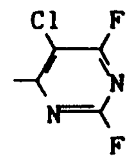 | gelbstichig rot |
| 72 | " | 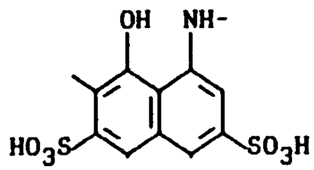 | Cl | " | " | " |
| 73 | 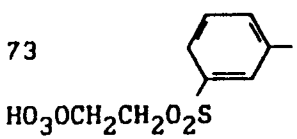 | " | Cl | " | " | " |
| 74 | 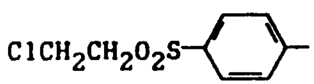 | " | Cl | " | " | " |
| 75 | 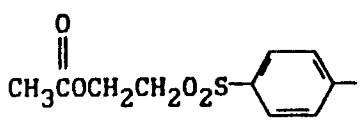 | " | Cl | " | " | " |

| Beispiel | D- | -K- | Hal | 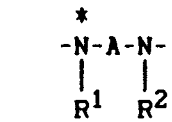 | -Z | Farbton |
|---|---|---|---|---|---|---|
| 76 | 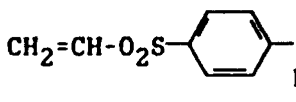 | 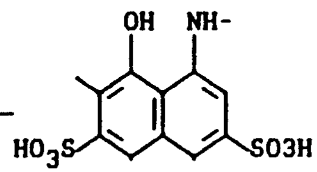 | Cl | 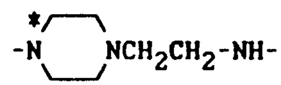 | 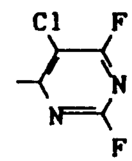 | gelbstichig rot |
| 77 | 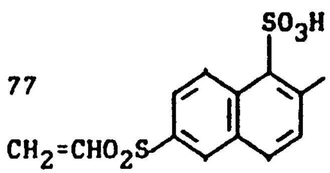 | " | Cl | " | " | blaustichig rot |
| 78 | 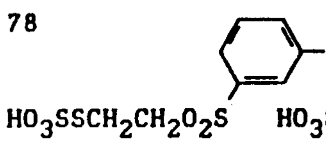 | 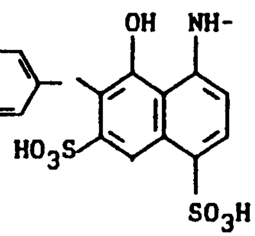 | Cl | 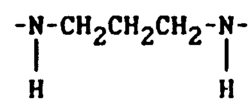 | 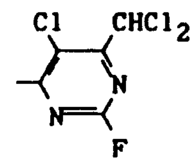 | gelbstichig rot |
| 79 | " | " | Cl | " | 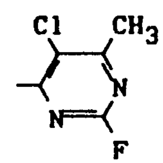 | " |

| Beispiel | D- | -K- | Hal | 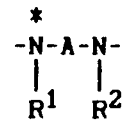 | -Z | Farbton |
|---|---|---|---|---|---|---|
| 80 | 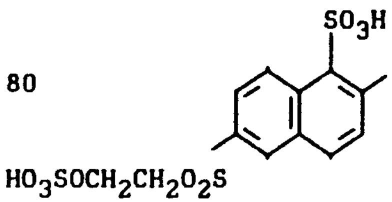 | 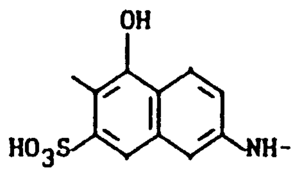 | Cl | 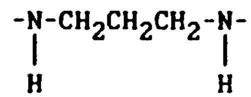 | 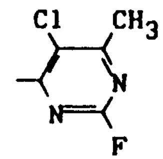 | scharlach |
| 81 | " | " | Cl | " | 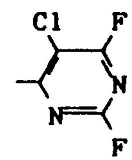 | " |
| 82 | " | " | Cl | " | 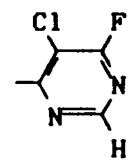 | " |
| 83 | " | " | Cl | 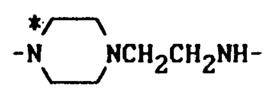 | " | " |
| 84 | " | " | Cl | " | 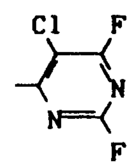 | " |

| Beispiel | D- | -K- | Hal | 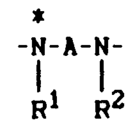 | -Z | Farbton |
|---|---|---|---|---|---|---|
| 85 | 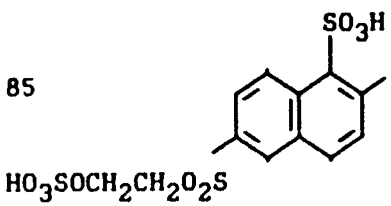 | 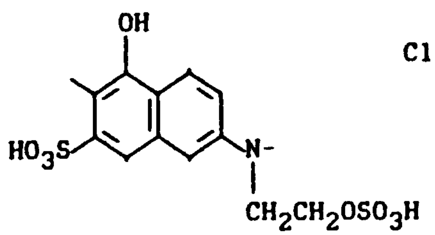 | Cl | 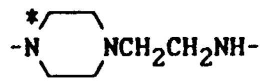 | 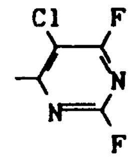 | scharlach |
| 86 | " | " | Cl | 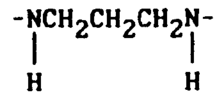 | " | " |
| 87 | " | 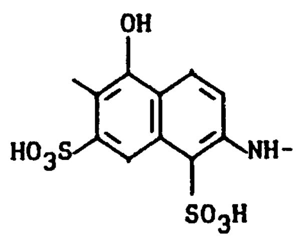 | Cl | " | " | " |
| 89 | " | " | F | " | " | " |
| 90 | " | " | Cl | 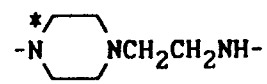 | " | " |

| Bei-spiel | D- | -K- | Hal | $\overset{*}{-N}-A-N-$ $R^1$ $R^2$ | -Z | Farbton |
|---|---|---|---|---|---|---|
| 91 | 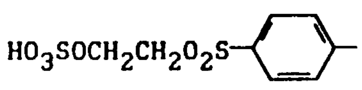 | 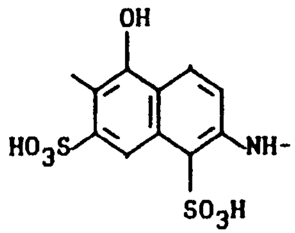 | Cl | 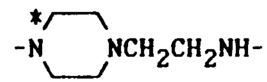 | 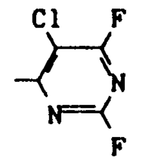 | orange |
| 92 | " | " | Cl | 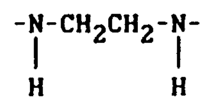 | 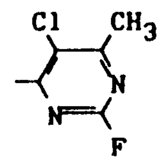 | " |
| 93 | " | 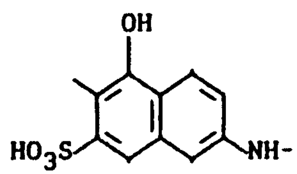 | Cl | " | " | " |
| 94 | " | " | Cl | 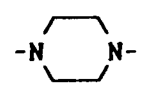 | 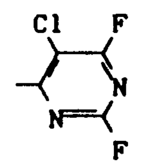 | " |

| Beispiel | D- | -K- | Hal | 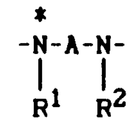 | -Z | Farbton |
|---|---|---|---|---|---|---|
| 95 | 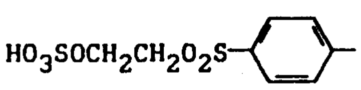 | 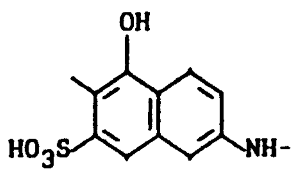 | Cl | 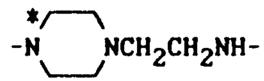 | 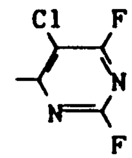 | orange |
| 96 | " | " | Cl | " | 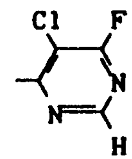 | " |
| 97 | " | 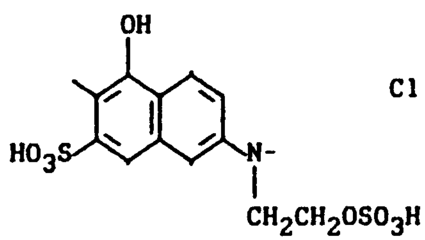 | Cl | " | 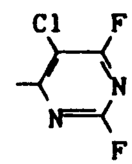 | " |
| 98 | " | " | Cl | 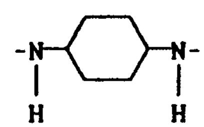 | " | " |

| Bei-spiel | D- | -K- | Hal | 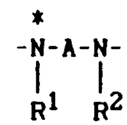 | -Z | Farbton |
|---|---|---|---|---|---|---|
| 99 | 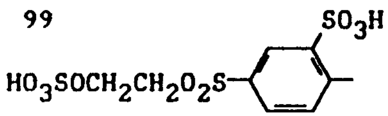 | 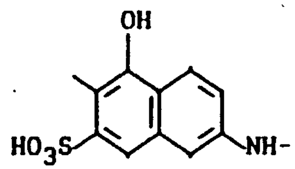 | Cl | 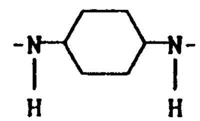 | 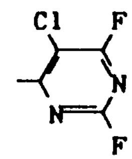 | orange |
| 100 | " | " | Cl | 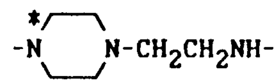 | " | " |
| 101 | " | 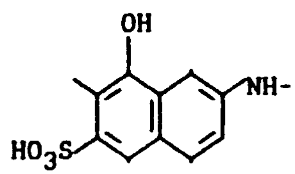 | Cl | " | " | scharlach |
| 102 | 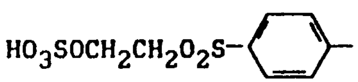 | " | Cl | 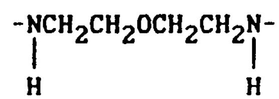 | " | " |
| 103 | " | " | Cl | 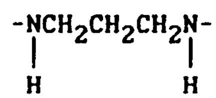 | " | " |

| Beispiel | D- | -K- | Hal | $\overset{*}{-N}-A-N-$ <br> $R^1$ $R^2$ | -Z | Farbton |
|---|---|---|---|---|---|---|
| 104 | $HO_3SOCH_2CH_2O_2S-$ 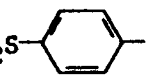 | 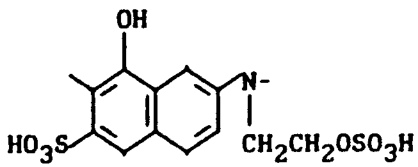 | Cl | $-NCH_2CH_2CH_2N-$ <br> H H | 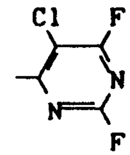 | scharlach |
| 105 | $HO_3SOCH_2CH_2O_2S-$ 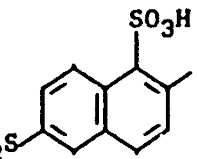 | " | Cl | " | " | " |
| 106 | " | 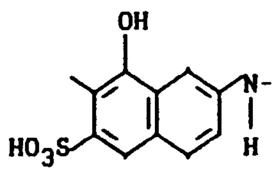 | Cl | " | 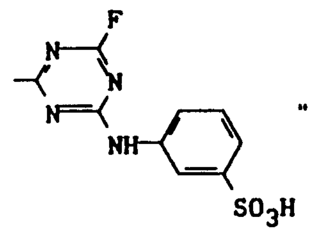 | " |
| 107 | " | 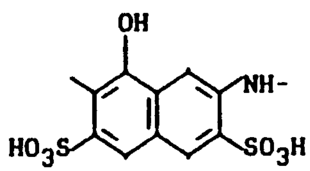 | Cl | " | 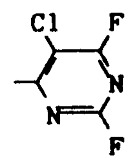 | " |
| 108 | " | " | Cl | 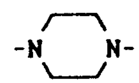 | " | " |

| Beispiel | D- | -K- | Hal | 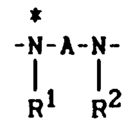 | -Z | Farbton |
|---|---|---|---|---|---|---|
| 109 | 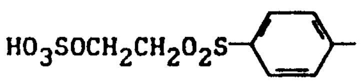 | 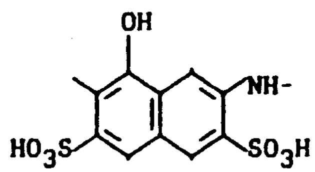 | Cl | 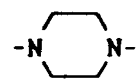 | 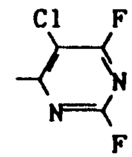 | scharlach |
| 110 | " | " | Cl | 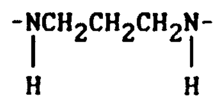 | " | " |

Beispiel 111

0,1 Mol des Azofarbstoffes der Formel

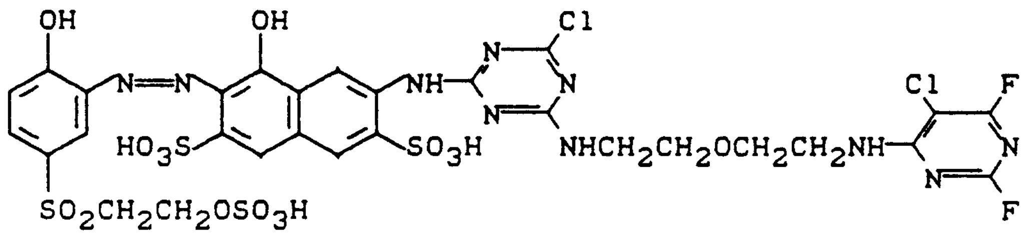

werden in 1 l Wasser neutral gelöst. Man streut bei Raumtemperatur 28 g Kupfersulfat ($CuSO_4 \cdot 5H_2O$) ein und hält durch gleichzeitiges Eintropfen von Sodalösung den pH zwischen 5,5 und 6,5. Nach beendeter Kupferung wird der Farbstoff mit Kochsalz ausgesalzen, abgesaugt, getrocknet und gemahlen.

Man erhält ein dunkles Pulver, das sich leicht in Wasser löst und Baumwolle nach einem der für Reaktivfarbstoffe üblichen Färbeverfahren rubin färbt. Der Farbstoff entspricht der Formel

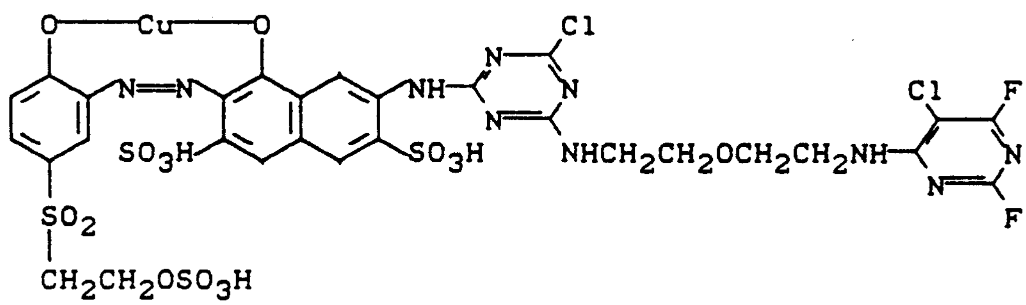

Der in diesem Beispiel verwendete Azofarbstoff wird erhalten, indem man 2-Amino-4-sulfatoethylsulfonylphenol diazotiert und bei pH 5,5 bis 6,5 auf das Kondensationsprodukt kuppelt, das man durch Acylierung von 2-Amino-8-hydroxy-naphthalin-3,6-disulfonsäure mit 2,4,6-Trichlortriazin, Kondensation mit dem Diaminoether und Acylierung mit 5-Chlor-2,4,6-trifluorpyrimidin erhält.

Beispiel 112

In die analog Beispiel 2 hergestellte Diazotierung von 1-Amino-4-sulfatoethylsulfonylbenzol wird das bei pH 4 und 40 °C hergestellte Kondensationsprodukt aus 1-Hydroxy-3-sulfo-7-(2′-sulfo-4′-aminophenylamino)-naphthalin, 2,4,6-Trichlortriazin, β-Aminoethylpiperazin und 5-Chlor-2,4,6-Trifluorpyrimidin gegeben. Durch Einstellen eines pH-Wertes von 6 bis 7 mit Sodalösung wird der Farbstoff der Formel

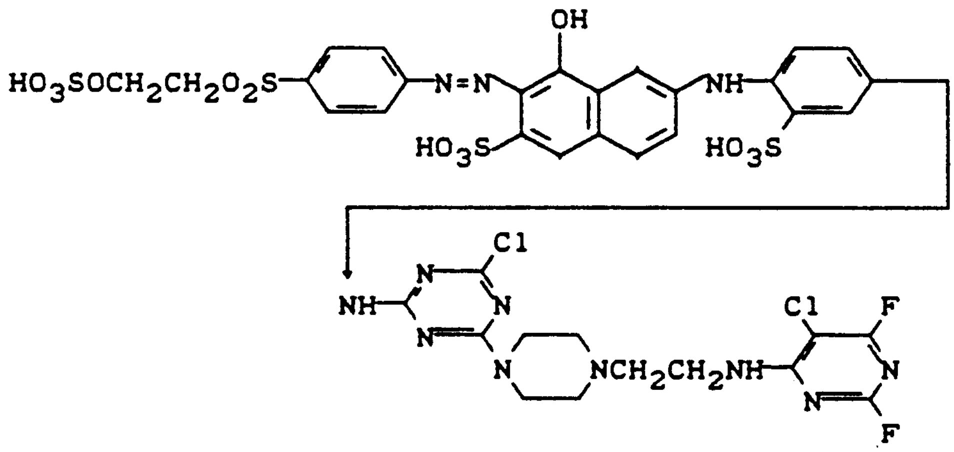

hergestellt. Nach beendeter Kupplung wird der Farbstoff ausgesalzen, isoliert, getrocknet und gemahlen. Man erhält ein dunkelbraunes, leicht in Wasser lösliches Pulver, das Baumwolle braun färbt.

Beispiel 113

Ersetzt man im Beispiel 112 die dort angegebene Diazotierung durch die im Beispiel 1 beschriebene Diazotierung, erhält man nach der gleichen Verfahrensweise den Farbstoff der Formel

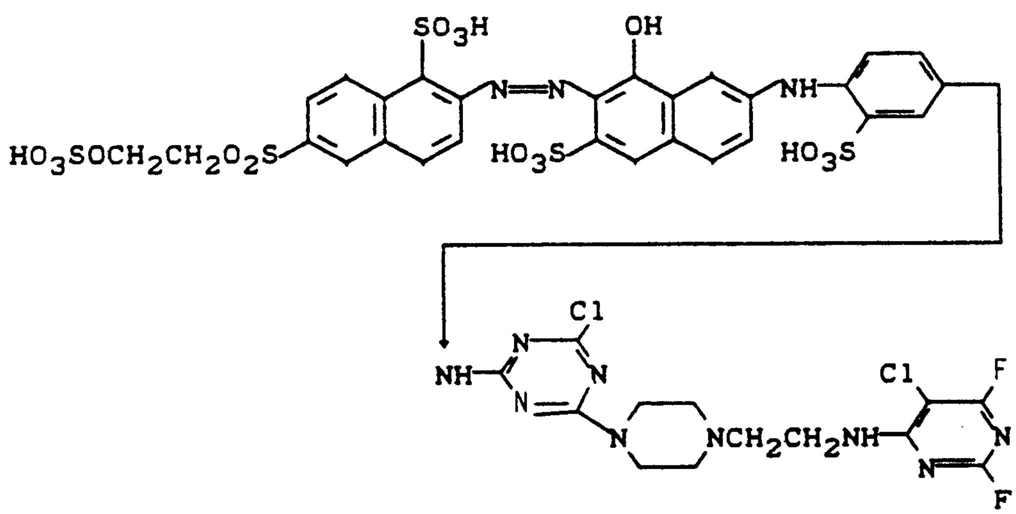

der Baumwolle ebenfalls in braunen Tönen färbt.

Beispiel 114

0,1 Mol des Diazofarbstoffes der Formel

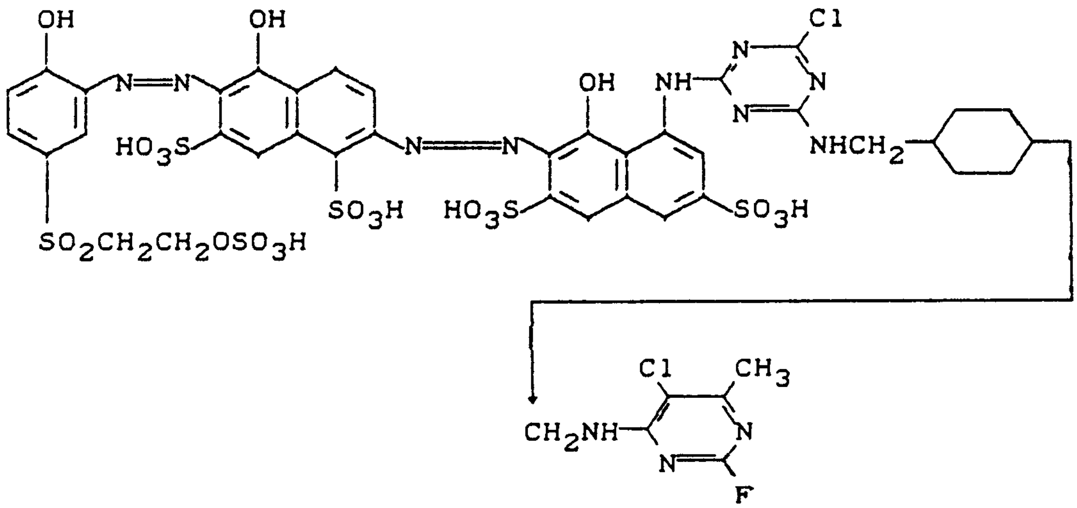

werden in 1 l Wasser neutral gelöst, bei Raumtemperatur mit 28 g Kupfersulfat ($CuSO_4 \cdot 5H_2O$) versetzt und durch Eintropfen von Sodalösung bei pH 5,5 bis 6,5 gehalten. Nach beendeter Kupferung wird der Farbstoff mit Kochsalz ausgesalzen, abgesaugt, getrocknet und gemahlen.

Man erhält ein dunkelbraunes Pulver, das sich leicht in Wasser löst und Baumwolle nach einem der für Reaktivfarbstoffe üblichen Färbeverfahren in marineblauen Tönen färbt. Der Farbstoff entspricht der Formel

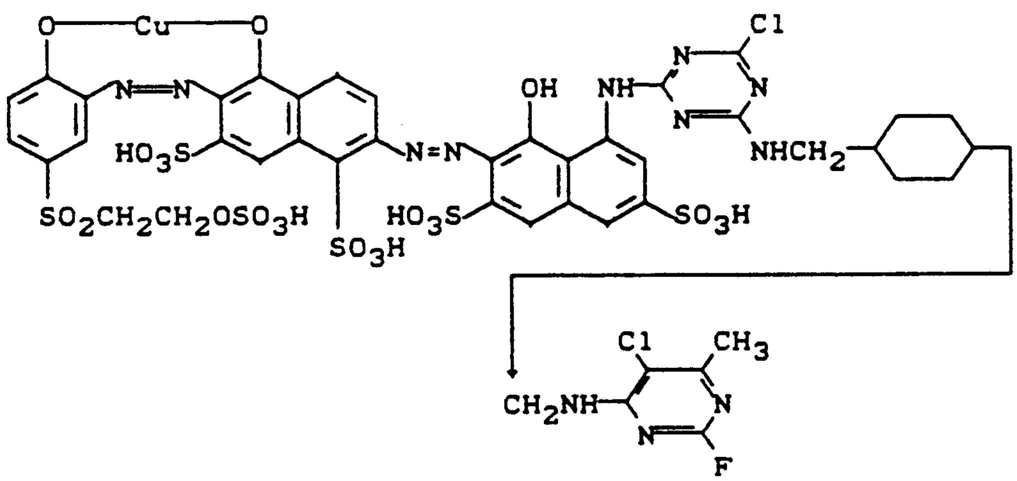

Der in diesem Beispiel verwendete Disazofarbstoff wird erhalten, indem man 2-Amino-4-sulfatoethylsulfonylphenol diazotiert, bei pH 5,5 bis 6,5 auf 2-Amino-5-hydroxynaphthalin-1,7-disulfonsäure kuppelt, den resultierenden Aminoazofarbstoff diazotiert und bei pH 5,5 bis 6,5 auf das Kondensationsprodukt kuppelt, das man durch Acylierung von 1-Amino-8-hydroxy-naphthalin-3,6-disulfonsäure mit 2,4,6-Trichlortriazin, Kondensation mit dem entsprechenden Diamin und Umsetzung mit 5-Chlor-2,4-difluor-6-methylpyrimidin erhält.

Beispiel 115

0,1 Mol des Azofarbstoffes der Formel

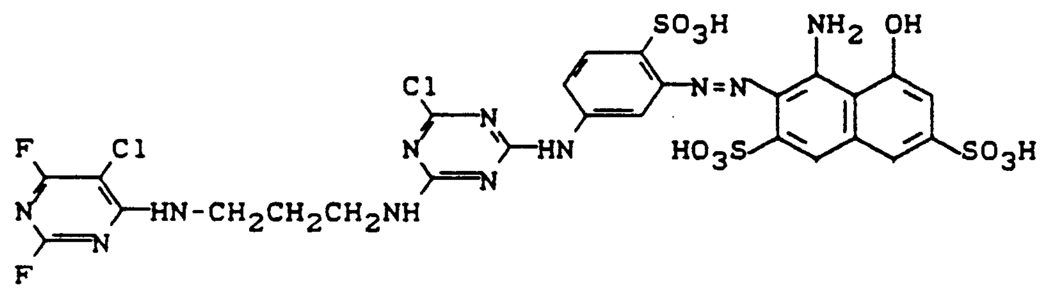

werden in Wasser bei 10 °C und pH 7,5 angerührt. Dazu fügt man die wäßrig-salzsaure Diazotierung einer äquivalenten Menge an 2-Amino-6-(2-sulfatoethyl)sulfonyl-1-naphthalinsulfonsäure und hält gleichzeitig durch Zudosieren vom Kaliumhydrogencarbonatlösung den pH konstant zwischen 6,5 und 7,5. Nach beendeter Kupplung wird der Farbstoff ausgesalzen, isoliert, getrocknet und gemahlen. Man erhält ein schwarzes Pulver, das Baumwolle in marineblauen Tönen färbt. Der Farbstoff entspricht der Formel

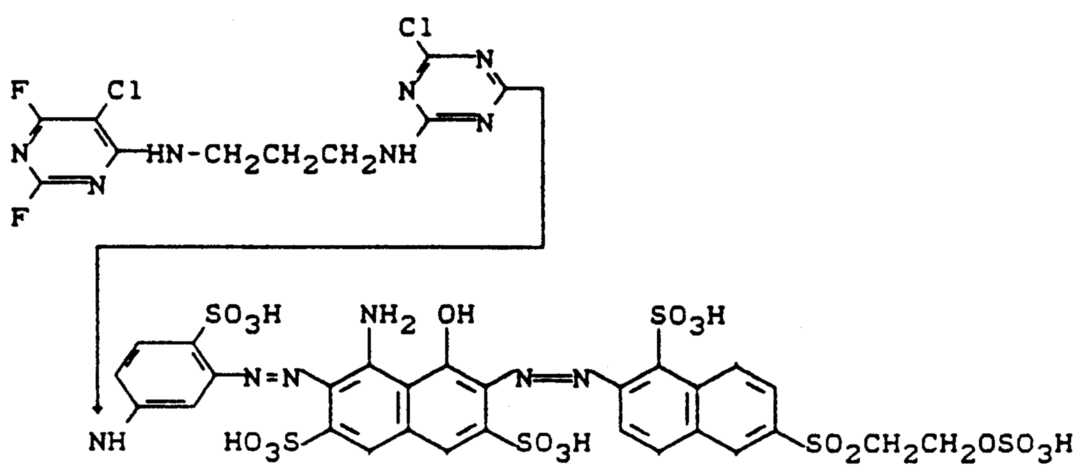

Beispiel 116

Durch Variation der Diazokomponenten erhält man in analoger Arbeitsweise Beispiel 116:

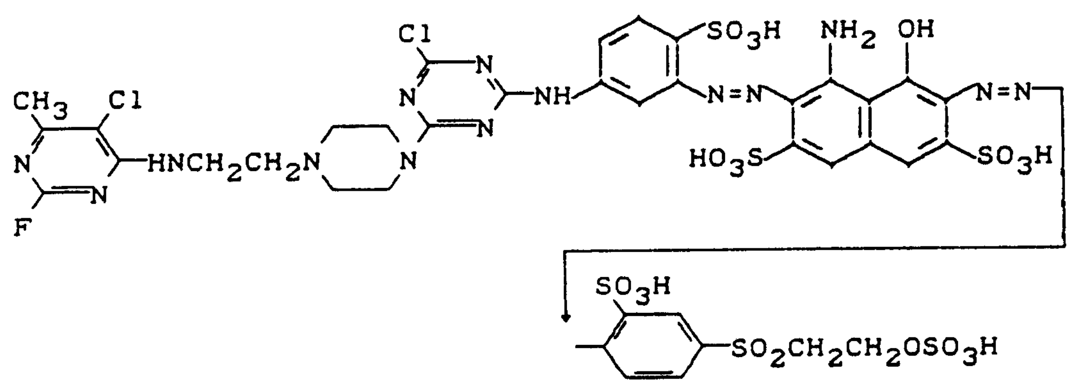

Beispiel 117

0,1 Mol 2,4-Diaminobenzolsulfonsäure werden in Wasser bei pH 4 und 0 °C mit 2,4,6-Trichlortriazin acyliert. Durch Umsetzung mit Piperazin und erneuter Kondensation mit 5-Chlor-2,4,6-trifluorpyrimidin erhält man die Diazokomponente der Formel

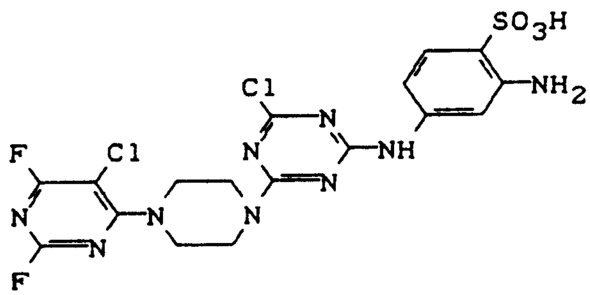

Die bei den Kondensationen entstehende Salzsäure bzw. Flußsäure wird mit Sodalösung neutralisiert.

Die wäßrig-salzsaure Diazotierung dieses Kondensationsproduktes wird zu dem Azofarbstoff der Formel

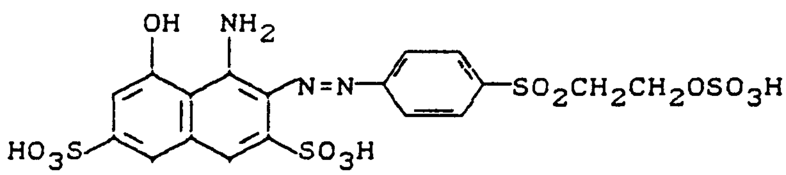

gegeben und der pH-Wert durch Eintropfen von Sodalösung bei 6,5 gehalten. Nach beendeter Kupplung wird der Farbstoff ausgesalzen, isoliert, getrocknet und gemahlen. Man erhält ein schwarzes Pulver, das Baumwolle in marineblauen Tönen färbt. Der Farbstoff entspricht der Formel

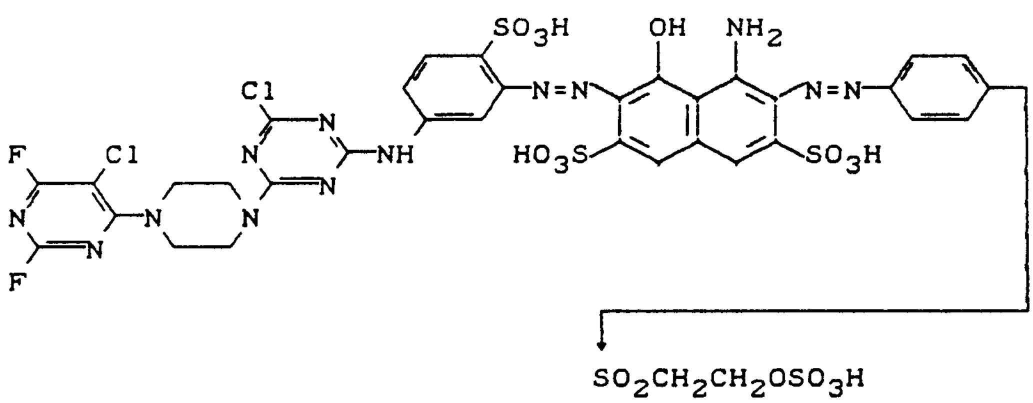

Beispiel 118

0,1 Mol wäßrig-salzsauer diazotiertes 2-Amino-6-sulfatoethylsulfonylnaphthalin wird mit der äquivalenten Menge neutral gelöster 1-Amino-8-hydroxy-naphthalin-3,6-disulfonsäure tropfenweise versetzt. Nachdem die saure Kupplung beendet ist, gibt man die Diazotierung aus Beispiel 117 hinzu und stellt mit Sodalösung pH 6,5 ein. Nach beendeter Kupplung wird der Farbstoff ausgesalzen isoliert, getrocknet und gemahlen. Man erhält ein schwarzes Pulver, das Baumwolle in marineblauen bis schwarzen Tönen färbt. Der Farbstoff entspricht der Formel

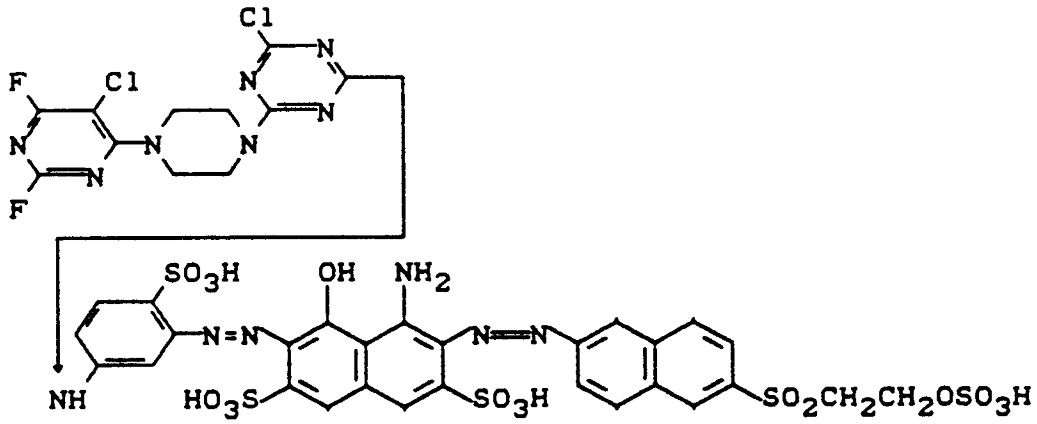

Analog zu den beschriebenen Methoden lassen sich auch die in der folgenden Tabelle aufgeführten Farbstoffe herstellen, die Baumwolle im angegebenen Farbton färben.

| Beispiel | Farbstoff | Farbton |
| --- | --- | --- |
| 119 | 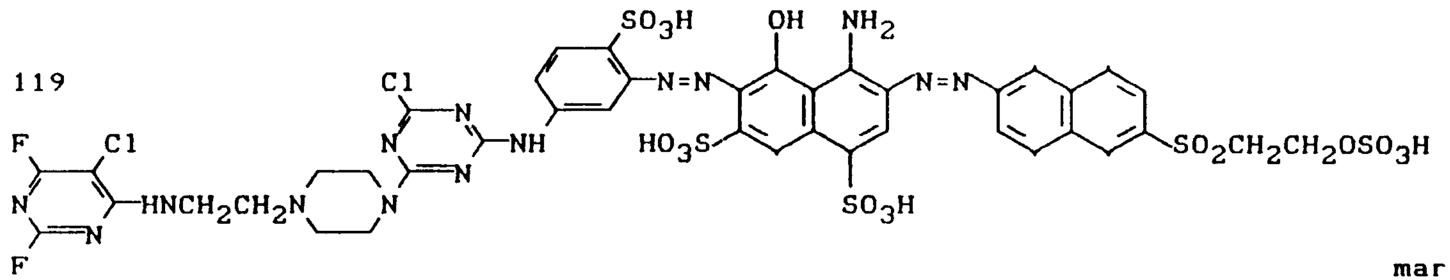 | marineblau |
| 120 | 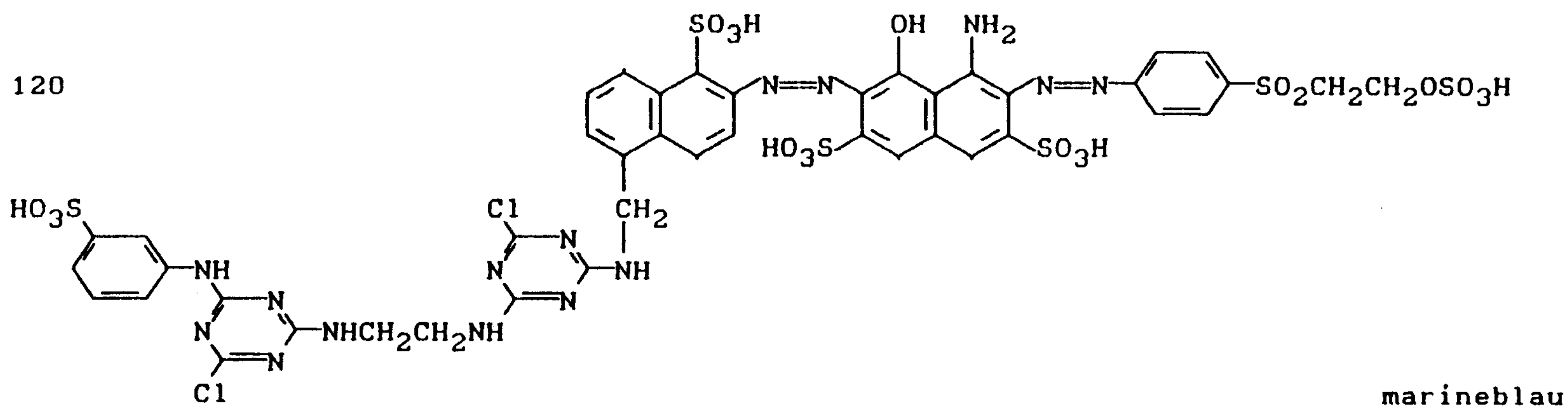 | marineblau |

| Beispiel | Farbstoff | Farbton |
|---|---|---|
| 121 | 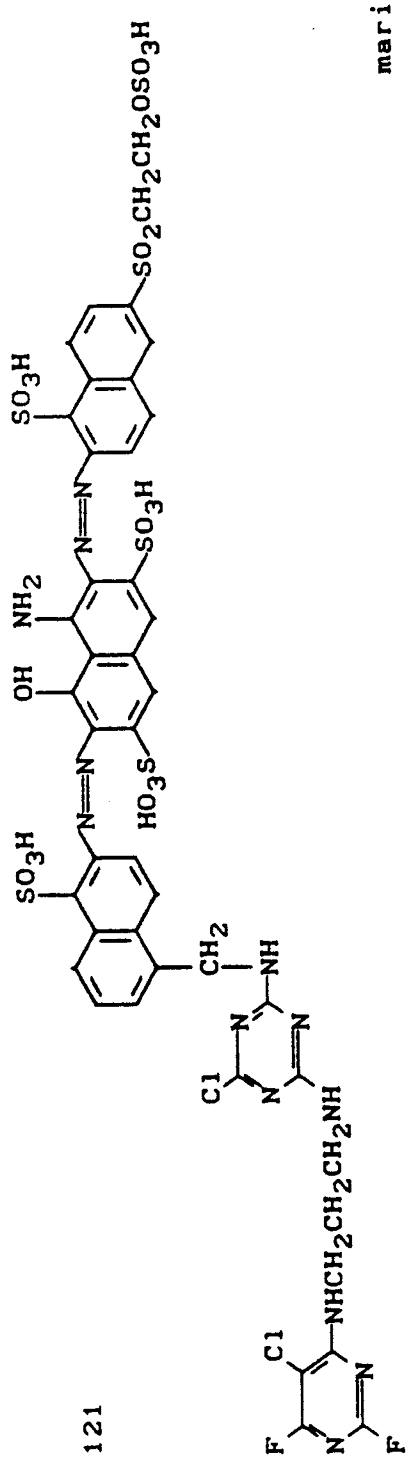 | marineblau |
| 122 | 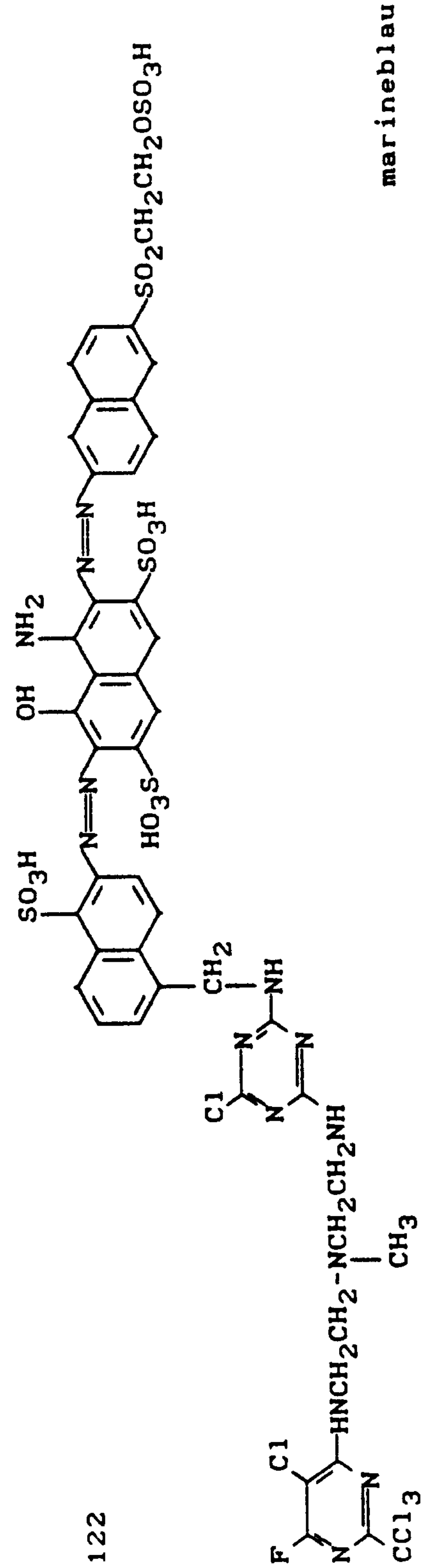 | marineblau |

Beispiel 123

Zu der analog Beispiel 2 hergestellten Diazotierung von 1-Amino-4-sulfatoethylsulfonylbenzol wird die äquivalente Menge an 5-Amino-2-naphthalinsulfonsäure gegeben und der pH-Wert durch Zugabe von

Natriumacetatlösung auf 4,5 gestellt. Nach 2 Stunden Rühren bei 10 bis 15 °C ist keine Diazotierung mehr nachweisbare. Es wird auf 0 bis 5 °C abgekühlt und salzsauer mit Natriumnitritlösung diazotiert. Nach 1 Stunde wird überschüssige salpetrige Säure mit Amidosulfonsäure zerstört. In die Diazotierung wird 8-Amino-1-naphthalinsulfonsäure eingetragen, der pH-Wert auf 4 bis 5 mit Sodalösung angehoben und 2 Stunden nachgerührt. Nach beendeter Kupplung wird mit dem Kondensationsprodukt der Formel

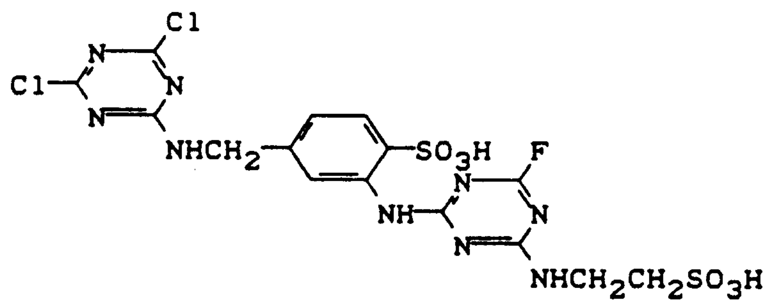

acyliert. Der Farbstoff wird ausgesalzen, isoliert, getrocknet und gemahlen. Man erhält ein dunkelbraunes Farbstoffpulver, das den Farbstoff der Formel

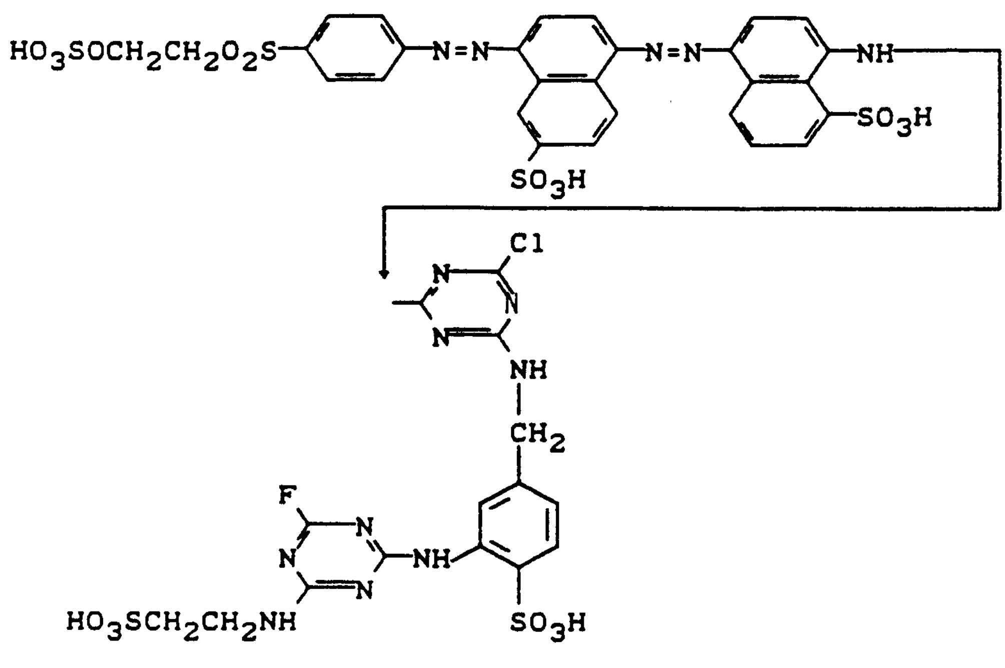

enthält und Baumwolle in braunen Tönen färbt.

Beispiel 124

Nach der Arbeitsweise des Beispiels 123 erhält man unter Verwendung der Diazotierung von 2-Amino-6-sulfatoethylsulfonyl-naphthalin-1-sulfonsäure den Farbstoff der Formel

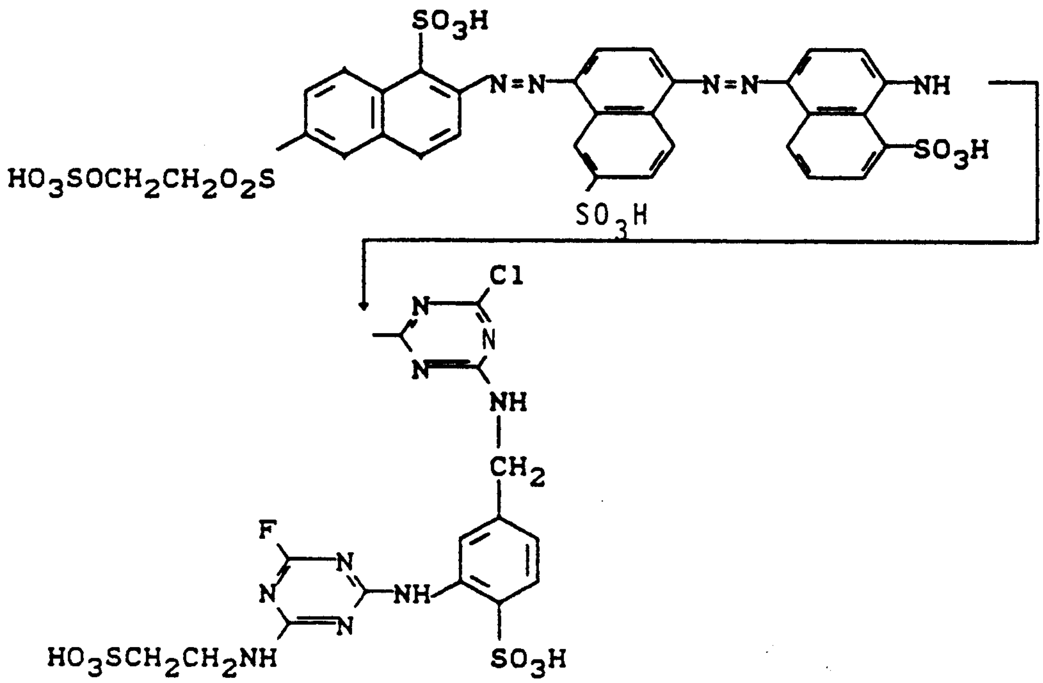

der Baumwolle nach den für Reaktivfarbstoffe üblichen Applikationsmethoden in braunen Tönen färbt.

Beispiel 125

Nach der Arbeitsweise des Beispiels 123 erhält man unter Verwendung der Diazotierung von 7-Amino-3-sulfatoethylsulfonyl-naphthalin-1-sulfonsäure, m-Toluidin als 2. Kupplungskomponente und Morpholin als Schutzamin, den Farbstoff der Formel

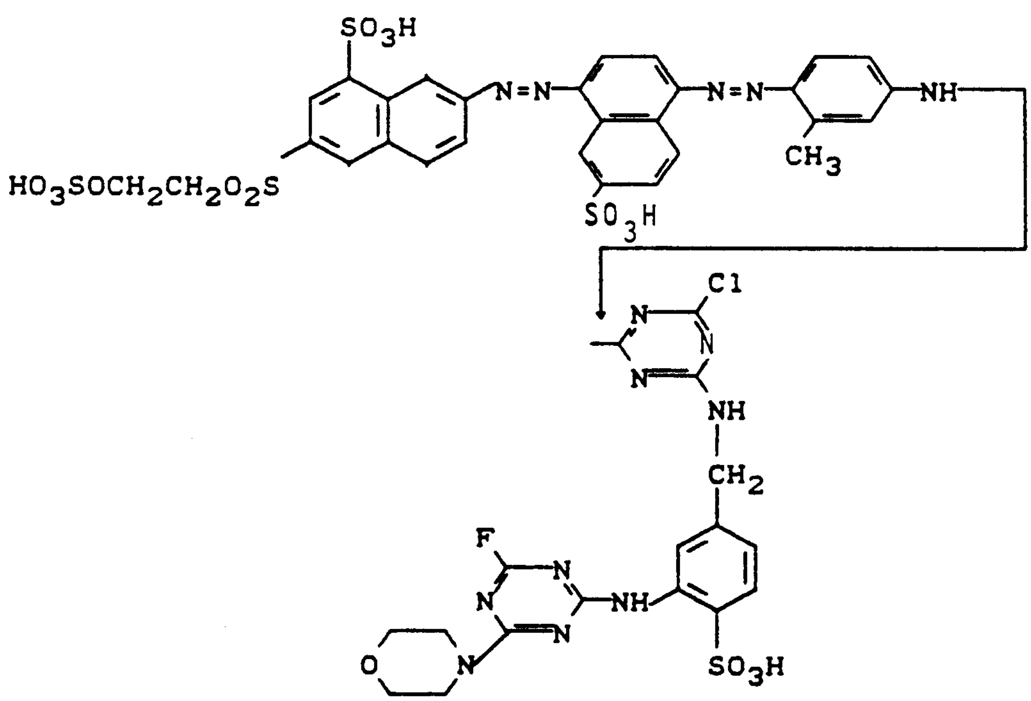

der Baumwolle in braunen Tönen färbt.

Analog zu den beschriebenen Methoden lassen sich auch die in der folgenden Tabelle aufgeführten Farbstoffe herstellen, die Baumwolle im angegebenen Farbton färben.

| Beispiel | Farbstoff | Farbton |
| --- | --- | --- |
| 126 | 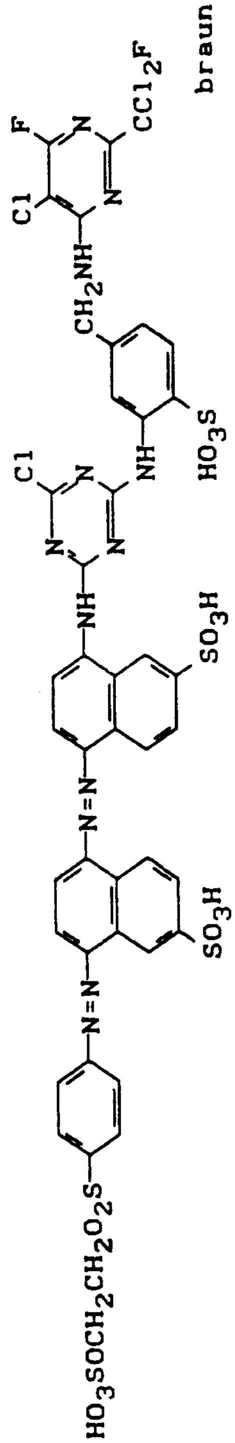 | braun |
| 127 | 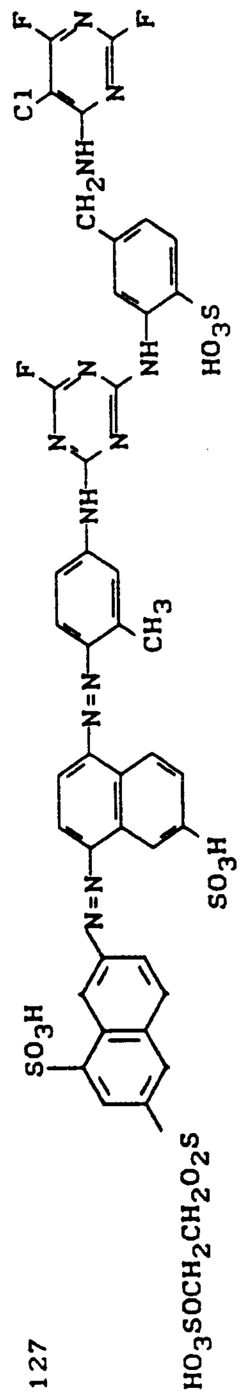 | braun |
| 128 | 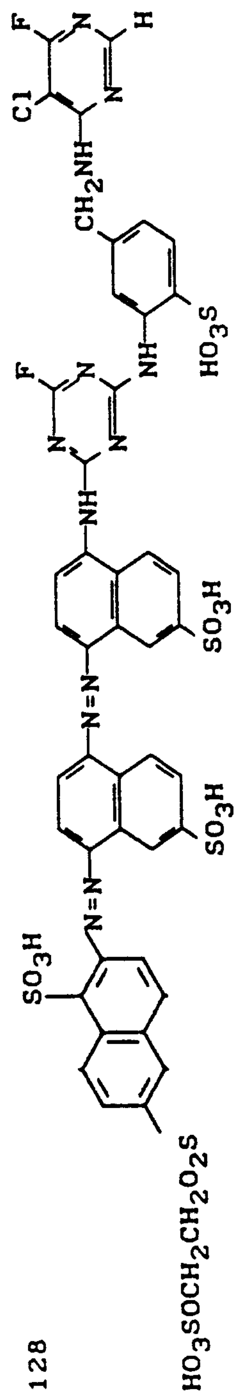 | braun |

Beispiel 129

30,3 Teile 2-Naphthylamin-4,β-disulfonsäure werden in 400 Volumenteilen Eiswasser suspendiert. Es werden 25 Gewichtsteile conc. Salzsäure zugefügt und mit 20 Volumenteilen 5n-Natriumnitritlösung diazotiert. Es wird noch 1 Stunde bei 0 bis 5 °C nachgerührt und dann überschüssige salpetrige Säure mit wenig Amidosulfonsäure zerstört. Dann werden 33,1 Teile 1-Naphthylamin-6-β-sulfatoethylsulfon zugegeben und durch Natriumacetat wird der pH-Wert langsam auf 4,5 erhöht. Bei diesem pH-Wert wird noch 2 Stunden bei 10 bis 15 °C nachgerührt, bis keine freie Diazoniumverbindung mehr nachweisbar ist. Dann wird wieder auf 0 bis 5 °C abgekühlt, 35 Teile einer conc. Salzsäure und anschließend 22 Volumenteile einer 5n-Natriumnitritlösung zugefügt. Es wird 1 Stunde bei 0 bis 5 °C nachgerührt und dann wenig Amidosulfonsäure zugegeben.

In die Lösung werden dann 22,5 Teile 1-Naphthylamin-8-sulfonsäure eingetragen und mit etwa 15 Teilen Soda wird ein pH-Wert von 4 bis 5 eingestellt und gehalten, wobei 2 Stunden nachgerührt wird. Die Farbstofflösung wird dann auf pH 5,5 bis 6,0 gestellt und auf 20 °C erwärmt. Bei dieser Temperatur und bei diesem pH-Wert gibt man die äquivalente Menge des Kondensationsproduktes aus Beispiel 123 hinzu, hält den pH-Wert mit Sodalösung und läßt dann 1 Stunde nachrühren. Der Farbstoff wird mit Kalium- und Natriumchlorid aus der Lösung isoliert.

Nach dem Trocknen bei 40 bis 50 °C und Mahlen erhält man ein schwarzes Farbstoffpulver der Formel

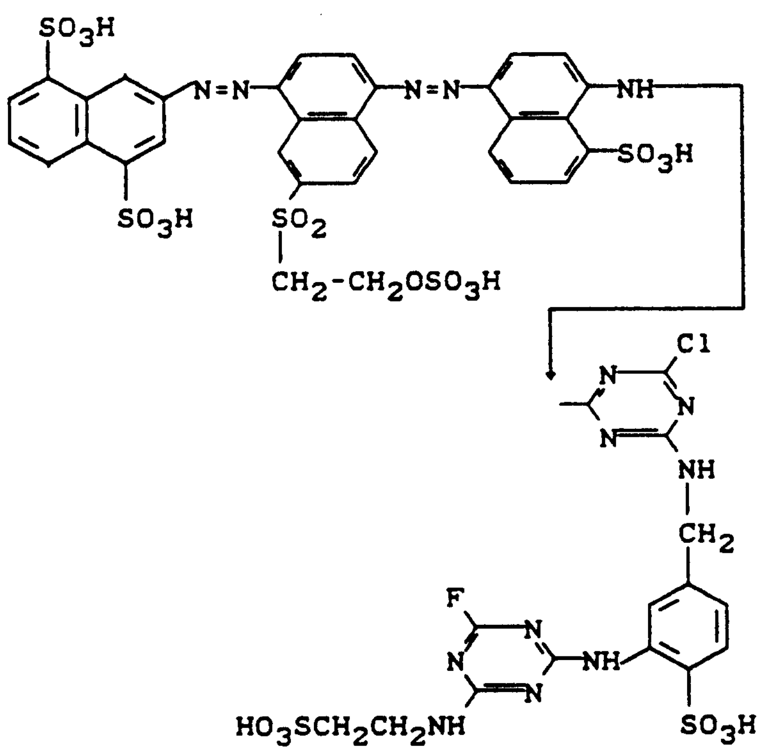

Diese Verbindung besitzt sehr gute Farbstoffeigenschaften und färbt Baumwolle und Wolle nach den üblichen Färbe- und Druckmethoden für Reaktivfarbstoffe in braunen Tönen mit sehr guten Naßechtheitseigenschaften.

Durch Verwendung der in den Beispielen 115 und 119 eingesetzten Diazokomponenten als Kupplungskomponenten lassen sich die folgenden Farbstoffe herstellen:

Farbton

Beispiel 129

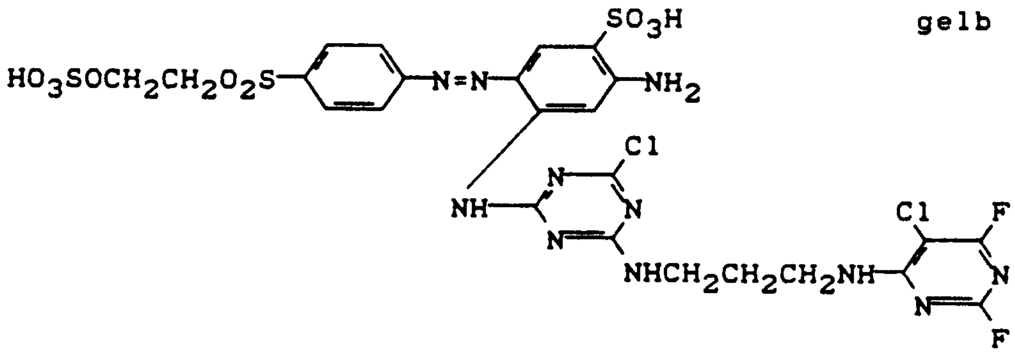

gelb

Beispiel 130

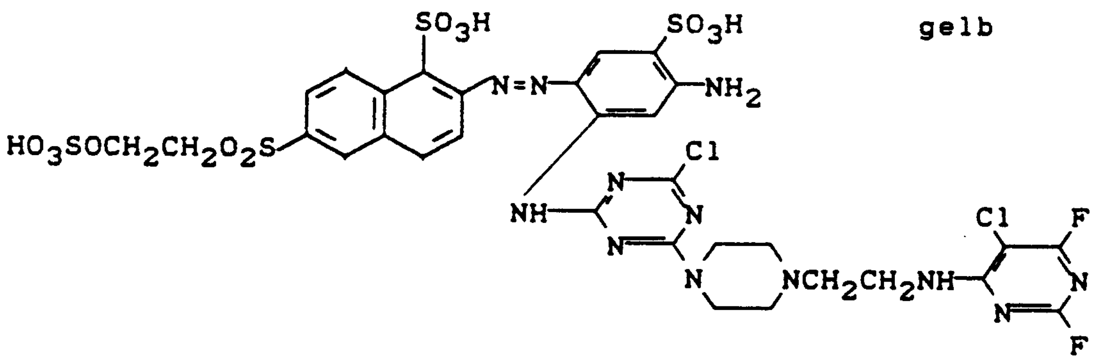

gelb

Beispiel 131

0,2 Mol der Verbindung

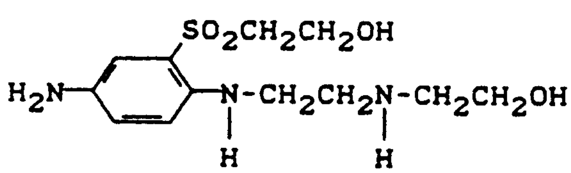

dargestellt durch Umsetzung von 1-Chlor-2-(β-Hydroxyethylsulfonyl)-4-nitrobenzol mit dem Eisessigadukt des Diamins der Formel

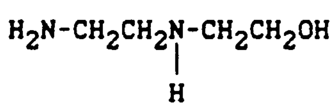

in Isopropanol und anschließender katalytischer Hydrierung mit Raney-Nickel und Wasserstoff, werden bei 80 °C mit 0,1 Mol Chloranil in Isopropanol und Gegenwart von Natriumacetat kondensiert. Das dunkelbraune, ausgefallene Produkt der Formel

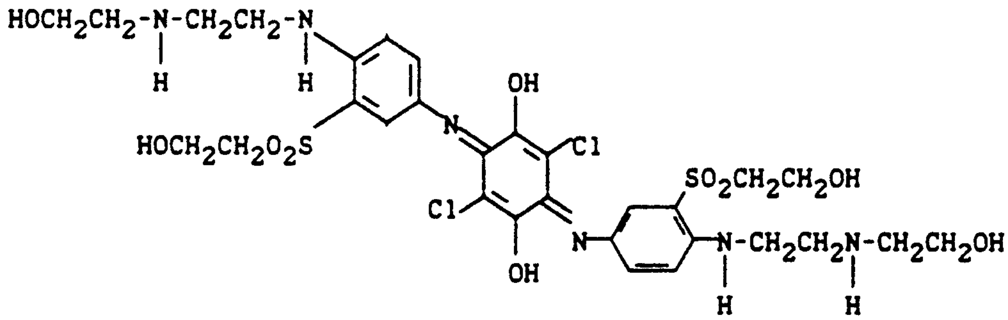

wird abgesaugt, getrocknet und in 250 ml 20%iges Oleum eingetragen. Zu diesem Ansatz fügt man Kaliumperoxodisulfat hinzu und erwärmt stufenweise bis auf 40 bis 50 °C. Anschließend wird auf Eis ausgetragen, die blaue Farbbase der Struktur

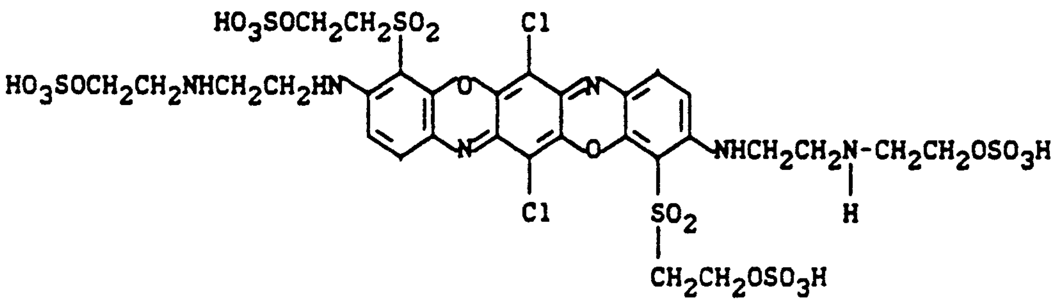

isoliert, in Wasser angeschlagen und mit 0,2 Mol des Kondensationsproduktes der Formel

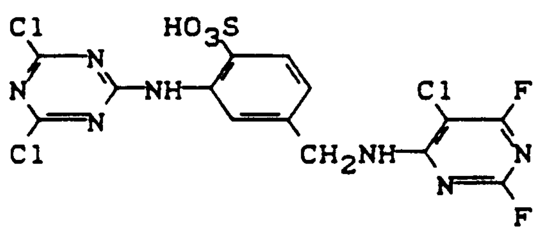

bei 20 °C und pH 6,5 bis 7,5 kondensiert.

Der Farbstoff wird mit Natriumchlorid ausgesalzen, isoliert, getrocknet und gemahlen. Man erhält ein dunkles Farbstoffpulver, das den Farbstoff der Formel

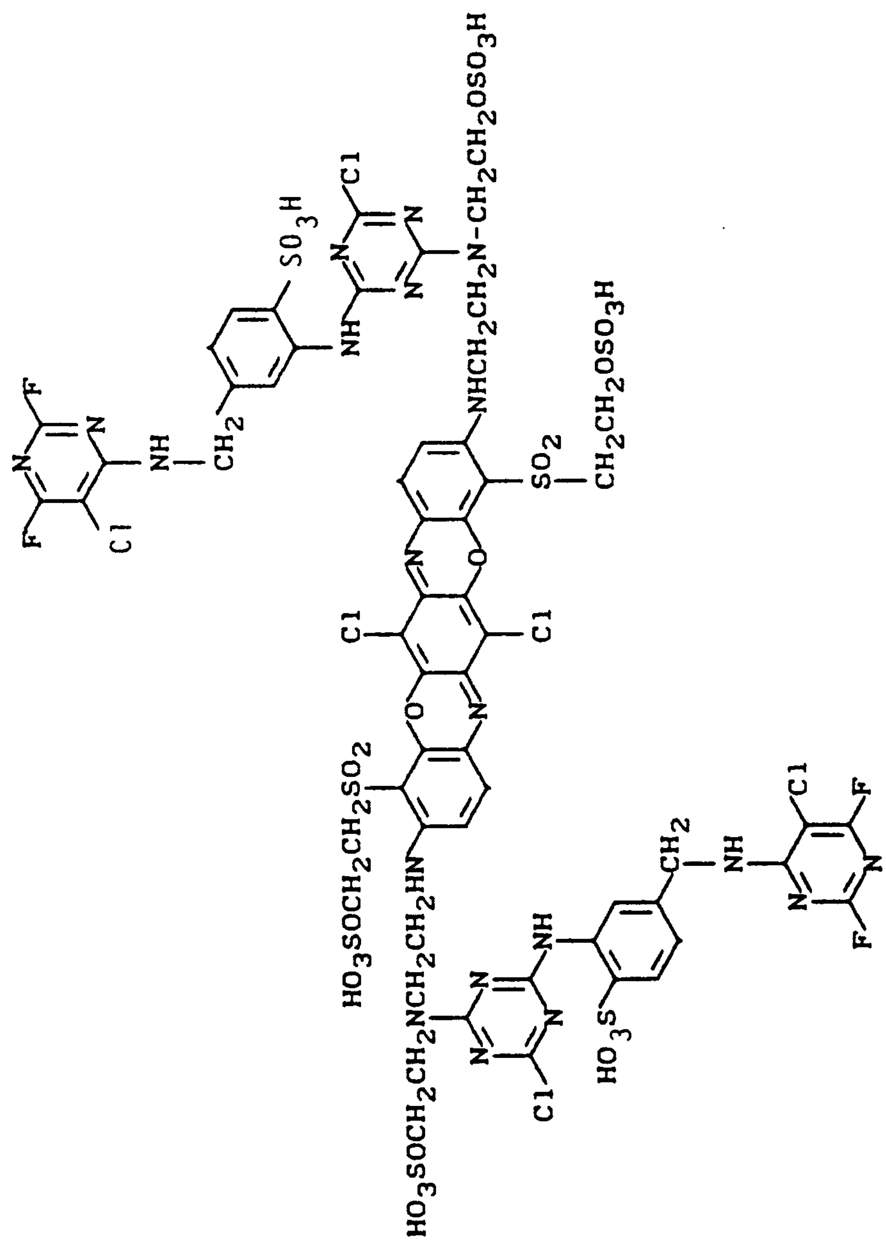

enthält und Baumwolle und Wolle nach den für Reaktivfarbstoffe üblichen Färbe- und Druckmethoden in blauen Tönen färbt.

Beispiel 132

127 g des Farbstoffes (3-Amino-4-sulfophenyl-aminosulfonyl)-(3-$\beta$-sulfatoethylsulfonyl-phenylamino-sulfonyl)-kupferphthalocyanin-disulfonsäure (hergestellt durch Mischkondensation von Kupferphthalocyanin-(3)-tetrasulfochlorid mit 1,3-Diaminobenzol-4-sulfonsäure und 3-$\beta$-Sulfatoethylsulfonyl-anilin in wäßriger Lösung in Gegenwart von Pyridin bei pH 6 bis 7,5) werden in Wasser unter Zusatz von Natriumbicarbonat neutral gelöst. Zu dieser Lösung gibt man das Kondensationsprodukt aus Beispiel 129 und hält bei 20 °C den pH durch Zutropfen von Sodalösung zwischen 6 und 6,5.

Nachdem die Kondensation beendet ist, wird geklärt und aus dem Filtrat der Farbstoff durch Zugabe von Kochsalz abgeschieden. Nach dem Absaugen, Trocknen und Mahlen erhält man ein blaues Farbstoffpulver, das sich leicht in Wasser mit türkisblauer Farbe löst.

Der Farbstoff entspricht der Formel

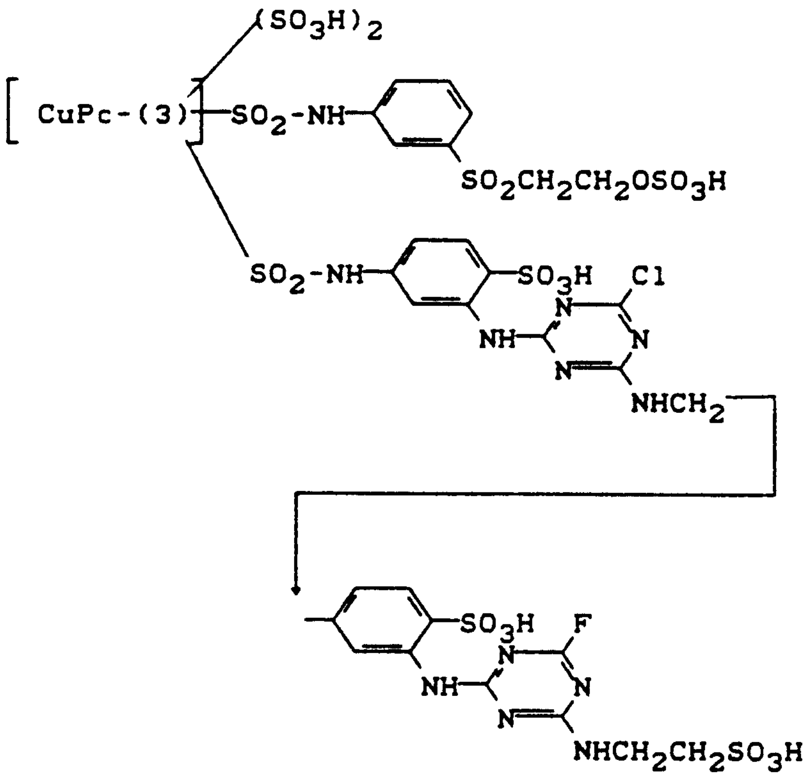

Er färbt Baumwolle in türkisblauer Nuance.

Analog zu der Arbeitsweise in Beispiel 132 lassen sich die nachfolgend aufgeführten Farbstoffe herstellen, die Baumwolle im angegebenen Farbton färben.

**Beispiel 133** **Farbton auf Baumwolle**

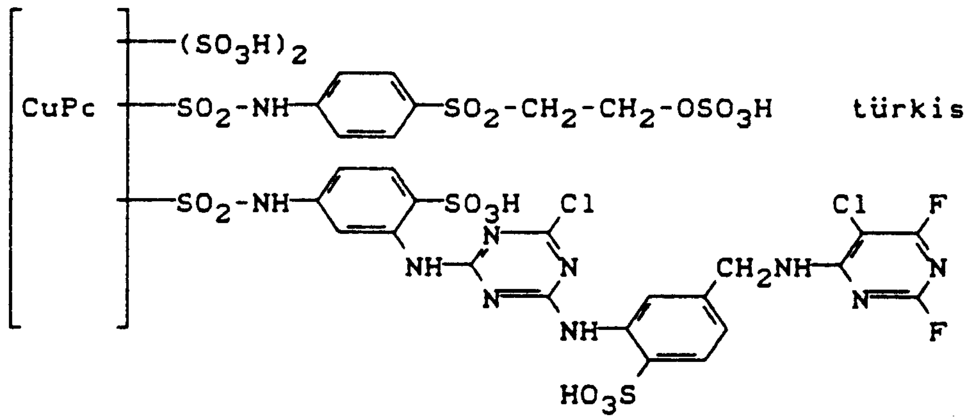

türkis

**Beispiel 134**

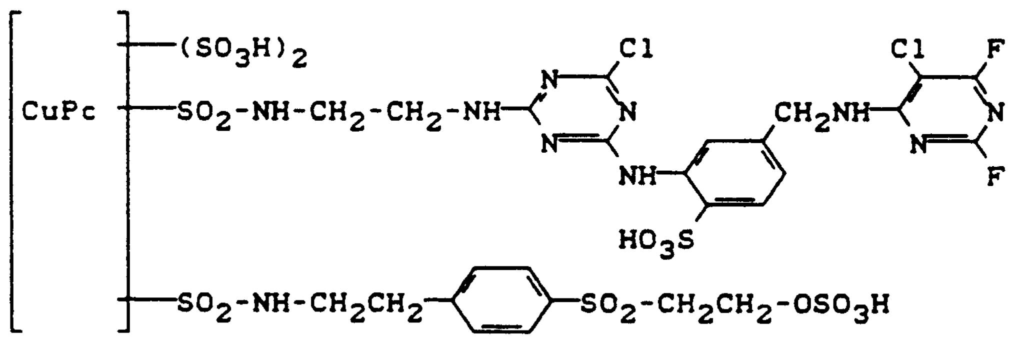

türkis

Beispiel 135

Farbton auf Baumwolle

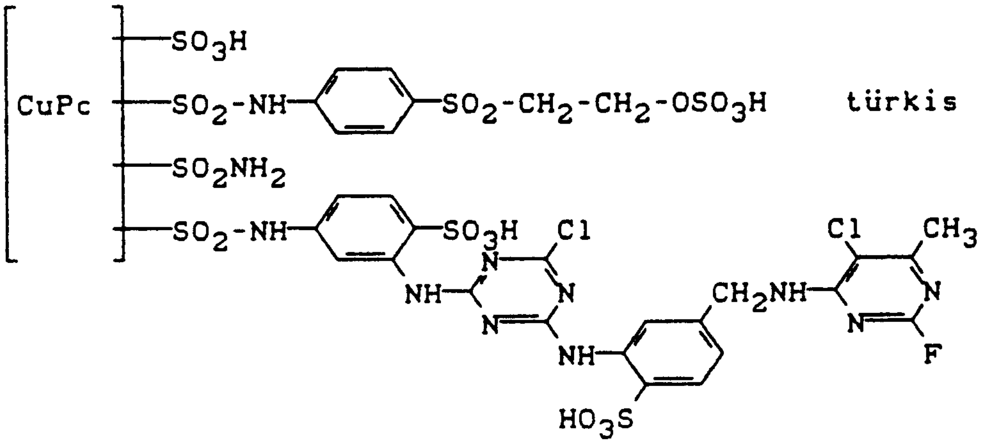

türkis

Beispiel 136

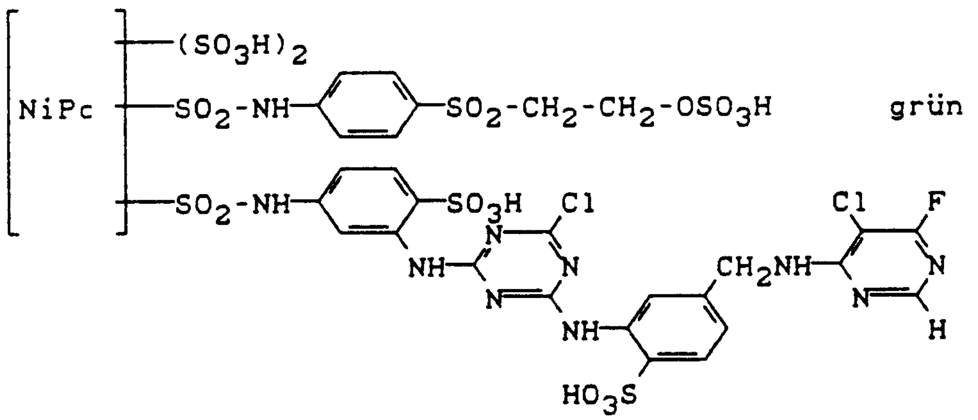

grün

Beispiel 137

135 g des Farbstoffes (3-Amino-4-β-sulfatoethylsulfonylphenylaminosulfonyl)-kupferphthalocyanin-trisulfonsäure werden neutral gelöst. Die Lösung wird auf 25 °C erwärmt, mit dem Kondensationsprodukt der Formel

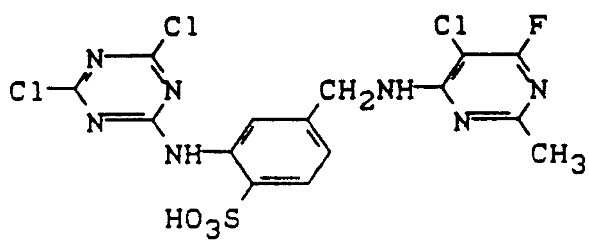

versetzt und dann hält man den pH durch Zugabe von Natriumbicarbonat bei 5,5 bis 6,0. Nach beendeter Kondensation wird die Farbstofflösung geklärt und aus dem Filtrat der Farbstoff durch Zugabe von Kochsalz ausgesalzen. Nach dem Absaugen, Trocknen und Mahlen erhält man ein blaues Farbstoffpulver, das sich mit türkisblauer Farbe in Wasser löst. Der Farbstoff entspricht der Formel

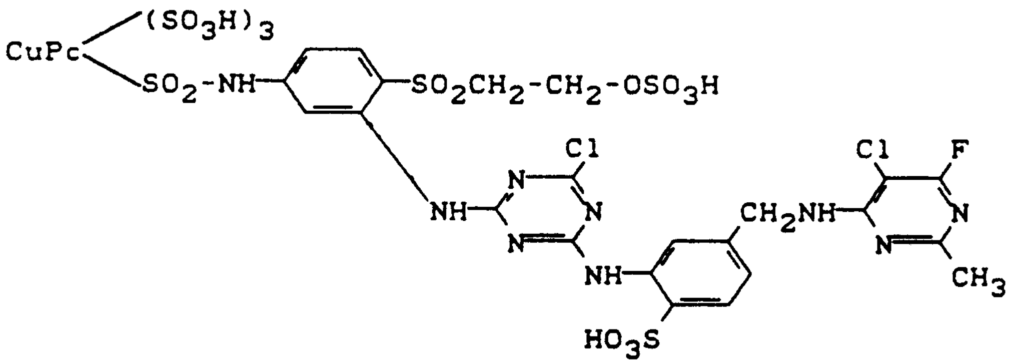

und färbt Baumwolle in echten, türkisblauen Farbtönen.

Die als Ausgangsprodukt verwendete Verbindung wird wie folgt hergestellt: Kupferphthalocyanintrisulfochloridmonosulfonsäure wird mit 1,3-Diaminobenzol-4-β-hydroxyethylsulfon in wäßriger Lösung bei pH 6 bis 7 kondensiert. Das Kondensationsprodukt wird durch Zugabe von Schwefelsäure abgeschieden, isoliert und getrocknet. Nach dem Mahlen wird die Substanz nach den üblichen Methoden in Schwefelsäure (Monohydrat) verestert. Die Mischung wird dann unter Rühren auf Eis gegeben, die ausgeschiedene Verbindung wird auf der Nutsche isoliert und unter Zusatz von Natriumbicarbonat neutral in Wasser gelöst.

Analog der geschilderten Arbeitsweise erhält man folgende Farbstoffe:

**Beispiel 138** — **Farbton auf Baumwolle**

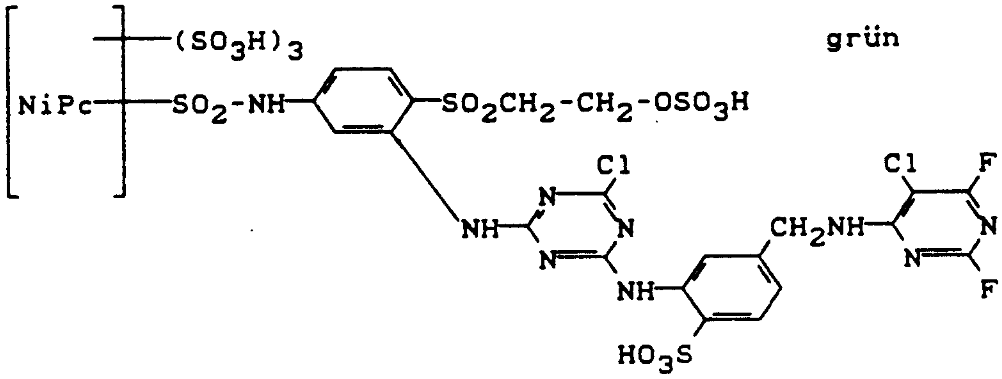

grün

**Beispiel 139**

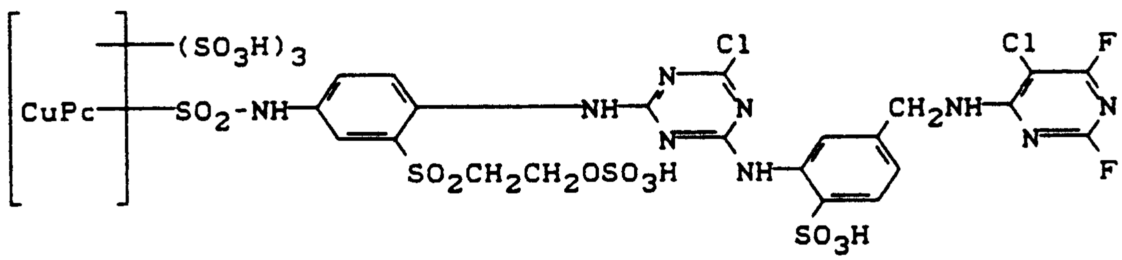

grünstichig türkis

**Beispiel 140**

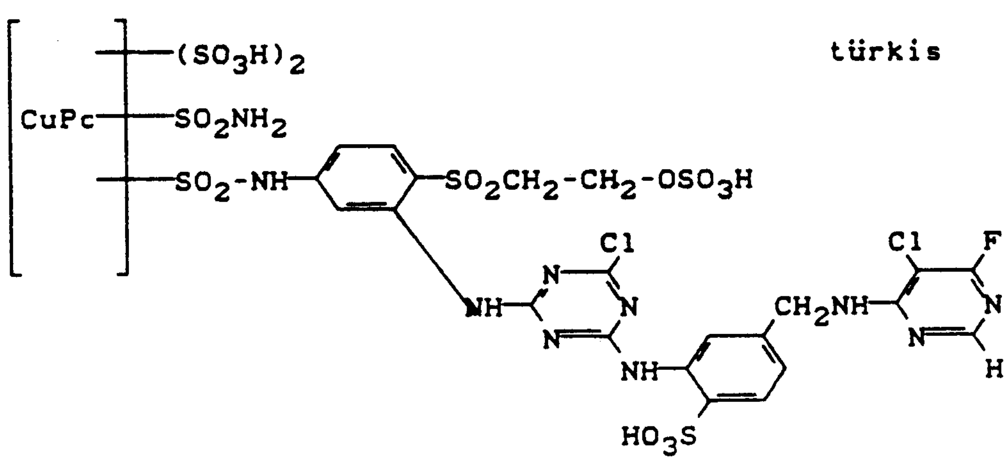

türkis

Beispiel 141

52 g des Farbstoffes 1-Amino-4-(3'-amino-4'-β-hydroxyethylsulfonyl-phenylamino)-anthrachinon-2-sulfonsäure (hergestellt durch Kondensation von 1,3-Diaminobenzol-4-β-hydroxyethylsulfon und 1-Amino-4-brom-anthrachinon-2-sulfonsäure) werden als trockene, gemahlene Ware unter Rühren in 200 g Monohydrat eingetragen. Man läßt über Nacht bei Raumtemperatur rühren und gießt die Lösung dann unter Rühren auf

eine Mischung von 500 g Eis und 150 g Kaliumchlorid.

Der ausgeschiedene Farbstoff wird dann abgesaugt, mit gesättigter Natriumchloridlösung gewaschen und in 300 Teilen Wasser unter Zugabe von Natriumbicarbonat neutral gelöst.

Nach Zugabe des Kondensationsproduktes der Formel

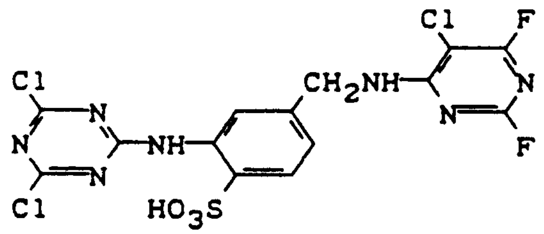

stellt man mit Sodalösung auf pH 6 und hält den pH durch Eintropfen von Sodalösung zwischen 5 und 6. Nach beendeter Kondensation wird geklärt und aus dem Filtrat der Farbstoff durch Aussalzen abgeschieden. Nach einem der für Reaktivfarbstoffe üblichen Applikationsverfahren erhält man auf Baumwolle ein klares Blau mit guten Allgemeinechtheiten.

Der Farbstoff entspricht der Formel

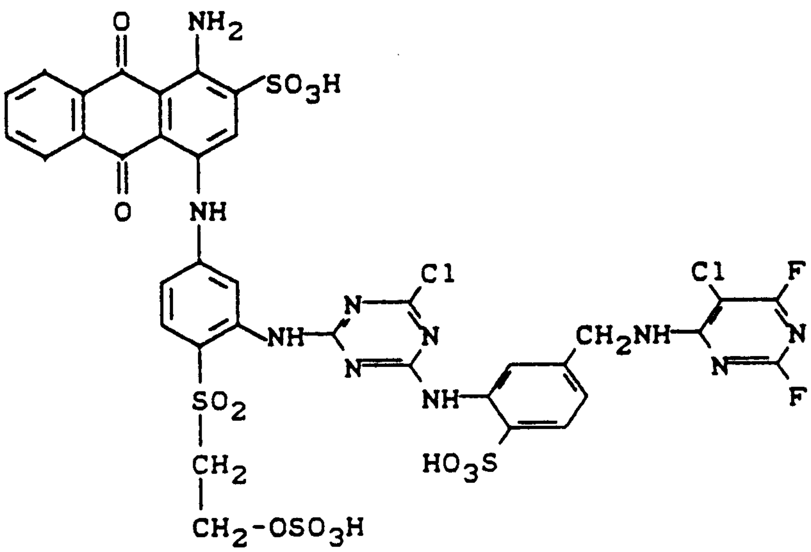

Beispiel 142

54 g des Farbstoffes 1-Amino-4-(2'-methyl-5'-amino-4'-β-hydroxyethylsulfonyl-phenylamino)-anthrachinon-2-sulfonsäure (hergestellt durch Kondensation von 1-Amino-4-brom-anthrachinon-2-sulfonsäure und 2,4-Diaminotoluol-5-β-hydroxyethylsulfon) werden analog Beispiel 141 umgesetzt.

Es wird der Farbstoff der Formel

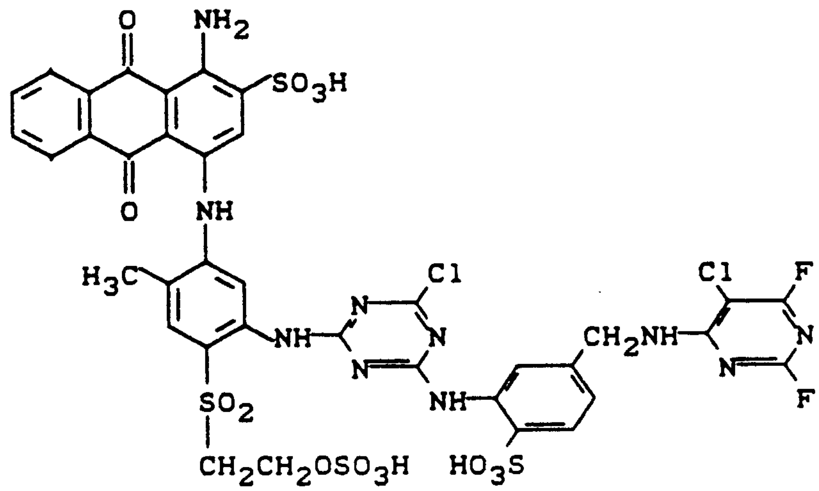

erhalten, der auf Baumwolle und Wolle ein echtes, klares Blau färbt.

Nach der Arbeitsweise von Beispiel 141 lassen sich folgende Farbstoffe herstellen

| Beispiel | Farbton auf Baumwolle |
|---|---|
| Beispiel 143 | grünstichig blau |
| Beispiel 144 | blau |

**Beispiel 143**

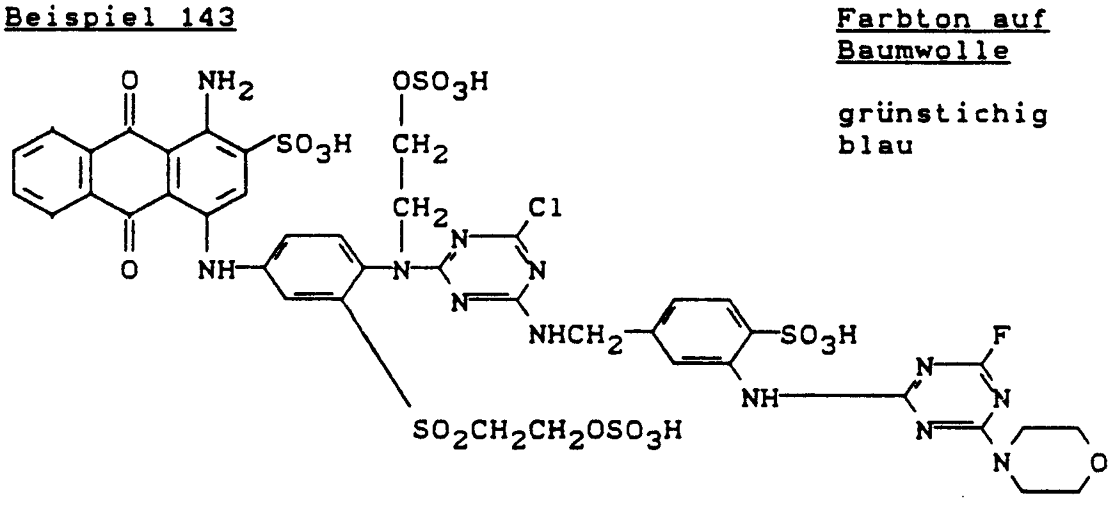

grünstichig blau

**Beispiel 144**

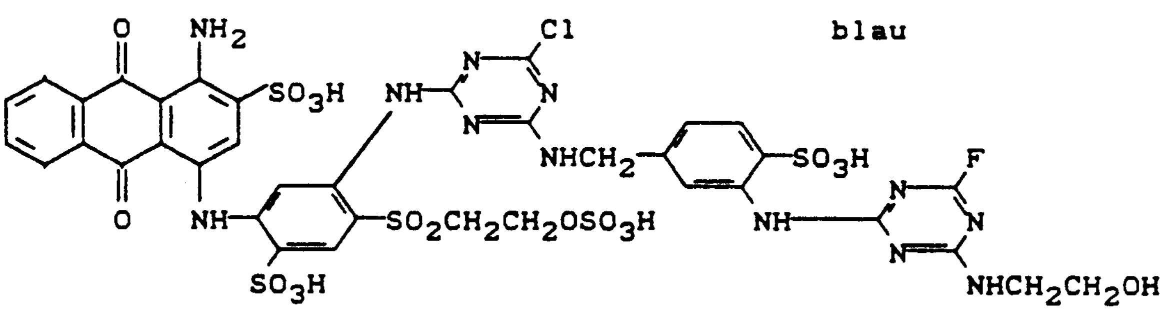

blau

Beispiel 145

23,3 g 2-Carboxyphenylhydrazin-4-sulfonsäure und 21,3 g 4-Acetaminobenzaldehyd-2-sulfonsäure werden in wäßriger Lösung kondensiert und das erhaltene Hydrazon in Gegenwart von Soda und 25 g Kupfersulfat mit der Diazoniumverbindung von 22,7 g 2-Aminophenol-4-($\beta$-hydroxyethyl)sulfon gekuppelt. Nach beendeter Reaktion wird unter Zusatz von 15 g Soda so lange bei 100 °C verseift, bis dünnschichtchromatographisch eine vollständige Verseifung der Acetylgruppe nachgewiesen werden kann. Der Farbstoff wird dann durch Zugabe von Natriumchlorid ausgeschieden, isoliert und getrocknet. Nach dem Mahlen wird das Farbstoffpulver unter Rühren in Pyridin eingetragen.

Man erwärmt auf 80 °C und gibt die gleiche Menge an Amidosulfonsäure wie an Farbstoffpulver hinzu. Die Temperatur steigt hierbei bis auf 105 °C an. Bei 100 bis 105 °C wird noch 1/2 Stunde nachgerührt. Dann wird Pyridin durch Abdestillieren und Trocknen im Vakuum entfernt, der Rückstand in Wasser gelöst und mit dem Kondensationsprodukt der Formel

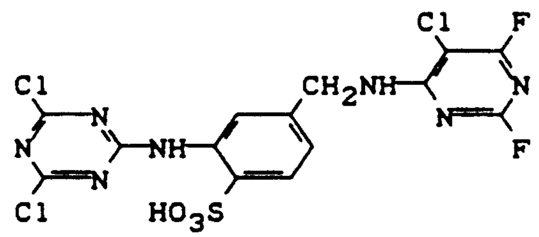

bei pH 6 bis 6,5 kondensiert. Nach beendeter Reaktion wird der Farbstoff mit Natriumchlorid abgeschieden, isoliert und getrocknet.

Nach dem Mahlen erhält man ein Farbstoffpulver, das das Natriumsalz der Verbindung der Formel

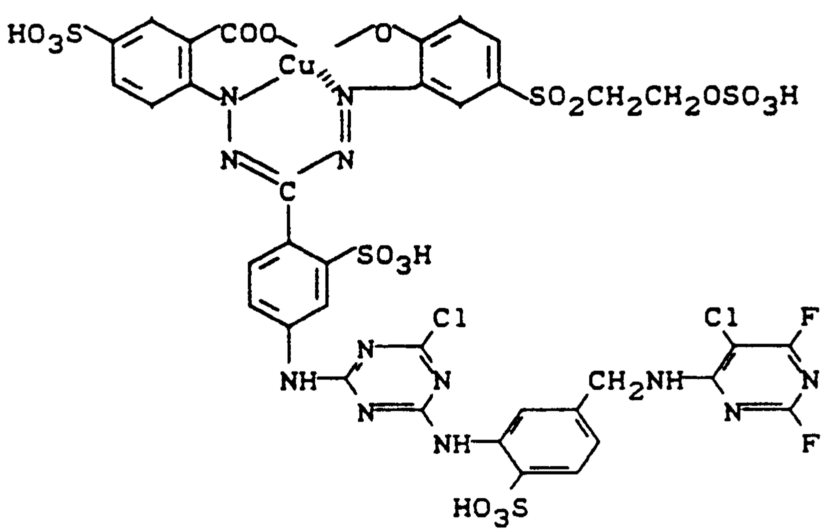

enthält und Baumwolle mit blauer Nuance färbt.

Weitere erfindungsgemäße blaue Reaktivfarbstoffe erhält man, wenn man wie in Beispiel 145 beschrieben, die folgenden Phenylhydrazine und aromatischen Aldehyde zu Hydrazonen umsetzt, mit den ebenfalls nachfolgend angegebenen Diazokomponenten in Gegenwart von $CuSO_4$ kuppelt und die entstandenen Farbstoffe analog Beispiel 145 verseift, sulfatiert und mit

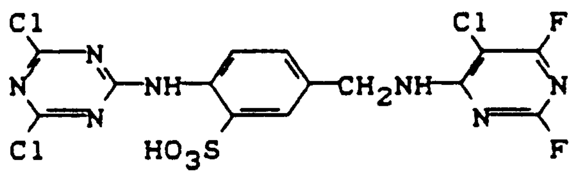

acyliert.

| Beispiel | Phenylhydrazin | Aldehyd | Diazokomponente | Farbton auf Baumwolle |
|---|---|---|---|---|
| 146 | 2-Carboxy-5-(β-hydroxy-ethylsulfonyl)-phenylhydrazin | Benzaldehyd | 3-Acetylamino-4-hydroxy-5-aminobenzolsulfonsäure | blau |
| 147 | 2-Carboxy-4-acetylamino-phenylhydrazin | Benzaldehyd | 4-β-Hydroxyethylsulfonyl-2-aminophenol-6-sulfonsäure | blau |

Die folgenden erfindungsgemäßen Farbstoffe lassen sich analog den beschriebenen Farbstoffen herstellen:

**Farbton auf Baumwolle**

**Beispiel 148**

blaustichiges Rot

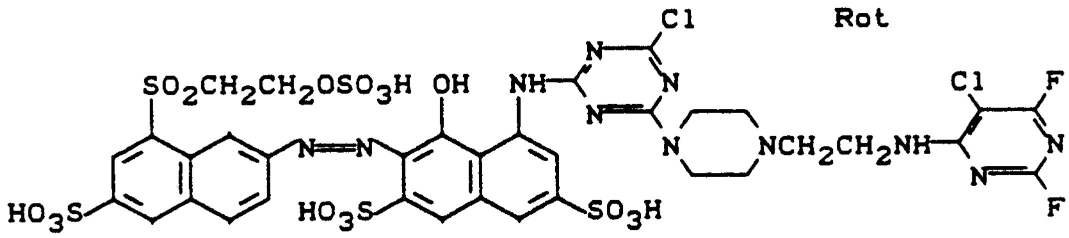

**Beispiel 149**

grünstichiges Gelb

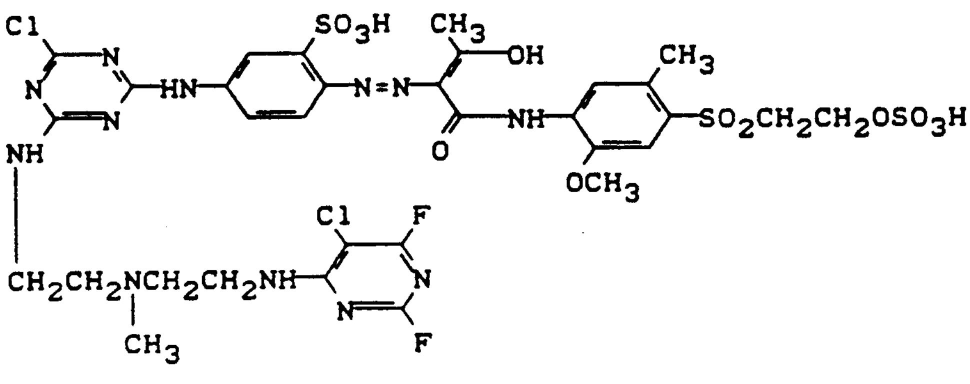

Farbton auf Baumwolle

Beispiel 150

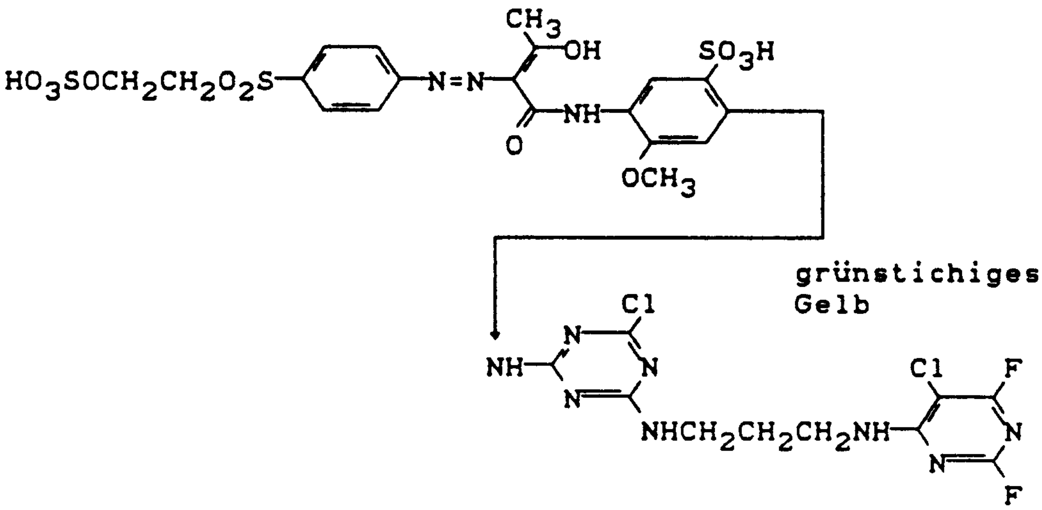

grünstichiges Gelb

Beispiel 151

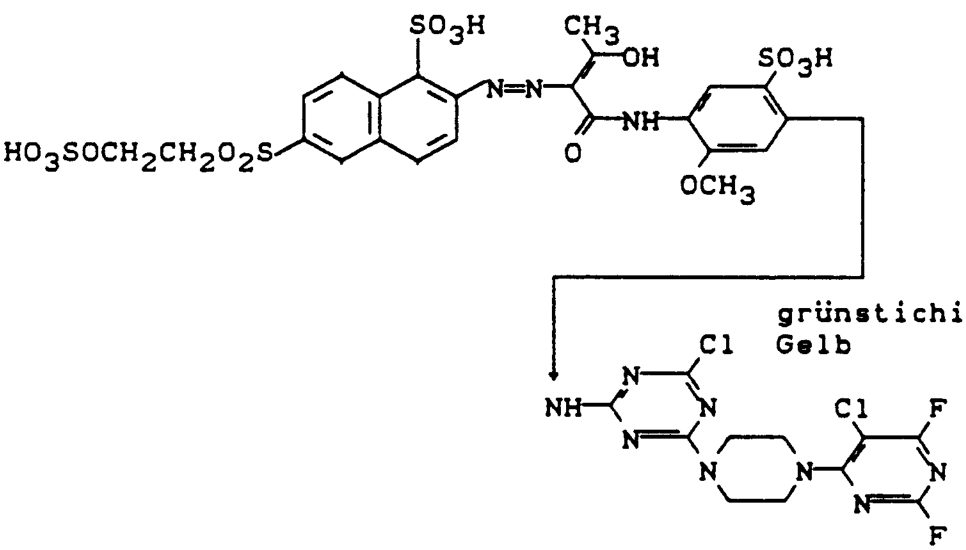

grünstichiges Gelb

## Patentansprüche

1. Farbstoffe der Formel

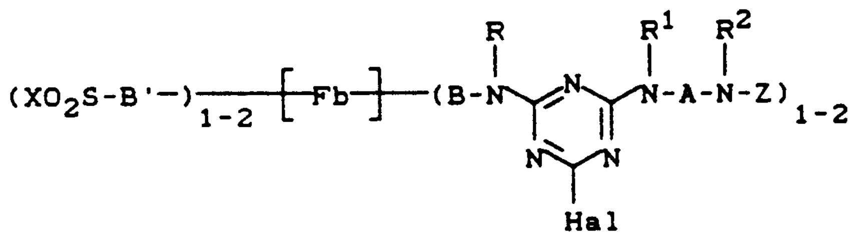 (1)

worin

Fb = Rest eines Farbstoffes der Mono- oder Polyazo-, Metallkomplexazo-, Anthrachinon-, Phthalocyanin-, Formazan-, Azomethin-, Dioxazin-, Phenazin-, Xanthen-, Thioxanthon-, Naphthochinon-, Stilben- oder Triphenylmethanreihe,

B bzw. B′ = direkte Bindung oder Brückenglied an ein Ring C-Atom eines aromatisch-carbocyclischen oder an ein Ring C- oder -N-Atom eines aromatisch-heterocyclischen Ringes in Fb.

X = $CH=CH_2$ oder $CH_2CH_2$-Y, worin

Y = alkalisch eliminierbarer Rest,

R, $R^1$, $R^2$ = H oder $C_1$-$C_4$-Alkyl, das gegebenenfalls substituiert sein kann, wobei

$R^1$-$R^2$ auch für eine $C_1$-$C_4$-Alkylen-Einheit stehen kann,

Hal = F, Cl oder Br,

A = direkte Bindung oder aliphatisches, cycloaliphatisches bzw. gemischt aromatisch-aliphatisches Brückenglied, das gegebenenfalls Heteroatome wie N,O, S oder $SO_2$ enthalten kann, und wobei der Rest -$NR^1$-A-$NR^2$- auch Teil eines gesättigten heterocyclischen Systems sein kann,

und

Z = faserreaktiver Rest, der frei ist von chromophoren Substituenten.

**2.** Farbstoffe gemäß Anspruch 1 der Formel

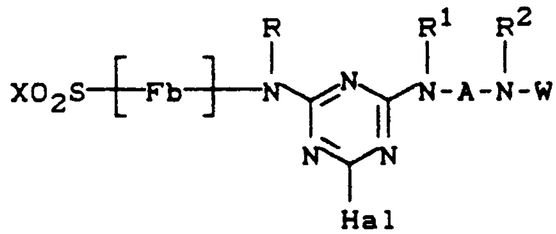

(2)

worin Fb, X, Hal, R, $R^1$, $R^2$ und A die in Anspruch 1 genannte Bedeutung haben und W für einen faserreaktiven Pyrimidinyl-, Dichlortriazinyl-, Monochlortriazinyl- bzw. Monofluortriazinyl-Rest steht.

**3.** Farbstoffe gemäß Anspruch 1, der Formel (4) sowie deren Metallkomplexe

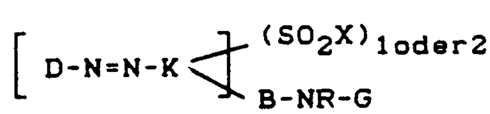

(4)

worin

D = Rest einer Diazokomponente der Benzol- oder Naphthalinreihe,

G =

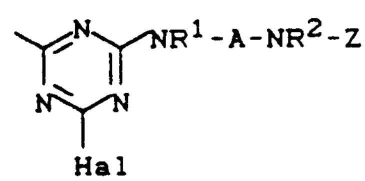

K = Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest und

Z, X, B, R, $R^1$, $R^2$ und Hal die in Anspruch 1 genannte Bedeutung haben.

**4.** Farbstoffe gemäß Anspruch 1 bzw. 3 der Formeln (5a) und (5b)

$X\text{-}SO_2\text{-}D\text{-}N=N\text{-}K\text{-}B\text{-}NR\text{-}G'$ (5a)

$G'\text{-}NR\text{-}B\text{-}D\text{-}N=N\text{-}K'\text{-}SO_2\text{-}X$ (5b)

worin

X = $-CH=CH_2$ oder $CH_2CH_2OSO_3H$,

G' =

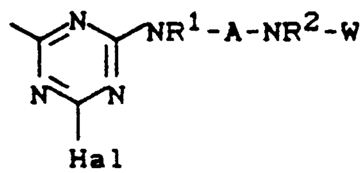

W =

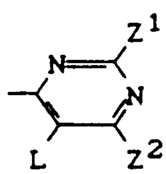
,
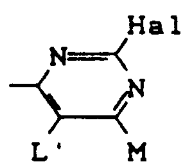
,
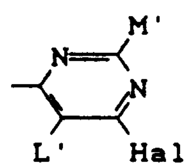

(3a) (3b) (3c)

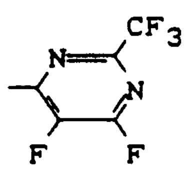
oder
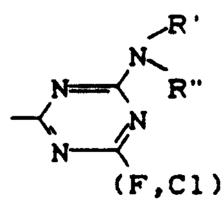

(3d) (3e)

worin

| | |
|---|---|
| Hal | = F, Cl, Br |
| L | = H, Cl, Br, CN oder $C_1$-$C_4$-Alkylsulfonyl, |
| L' | = H, Cl oder Br |
| $Z^1$,$Z^2$ | = unabhängig voneinander H, Cl, Br, F oder $C_1$-$C_4$-Alkylsulfonyl, wobei $Z^1$ und $Z^2$ nicht gleichzeitig für H oder $C_1$-$C_4$-Alkylsulfonyl stehen, |
| M | = $CH_3$, $CH_2Cl$, $CHCl_2$, $CCl_3$, $CH_2F$, $CF_3$, CHClF, $CCl_2F$, CHBrF oder $CBr_2F$, |
| M' | = $CH_3$, $CH_2Cl$, $CHCl_2$, $CCl_3$, CHClF, $CCl_2F$, $CClF_2$ oder $CF_3$, |
| R' | = H oder ein gegebenenfalls substituierter $C_1$-$C_4$-Alkyl- bzw. cycloaliphatischer Rest und |
| R'' | = R' oder ein gegebenenfalls substituierter Phenyl-, Benzyl-, Naphthyl- oder Hetarylrest oder eine gegebenenfalls substituierte Aminogruppe, |

R' und R'' zusammen mit dem N-Atom einen 5- oder 6-gliedrigen heterocyclischen Rest bilden können,

| | |
|---|---|
| K' | = Rest einer Kupplungskomponente aus der Pyrazolon-, Pyridon- oder Acetessigsäurearylid-Reihe ist, und |
| D, K, R und B | die in Anspruch 1 bzw. 3 genannte Bedeutung zukommt. |

**5.** Farbstoffe gemäß Anspruch 1 der Formeln

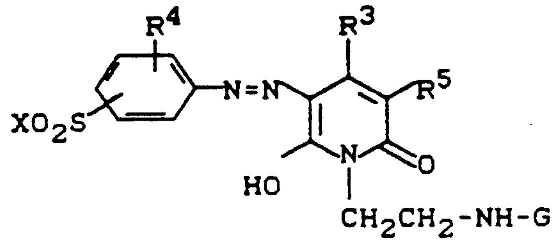

(6)

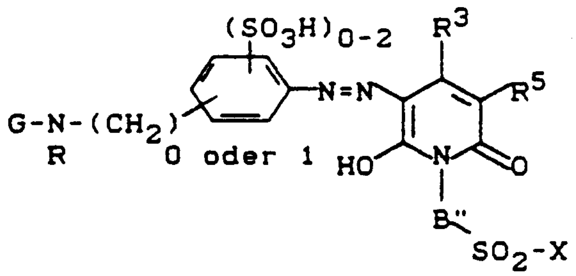

(7)

B'' = $-(-CH_2-)_{2-3}$ , 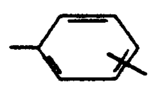

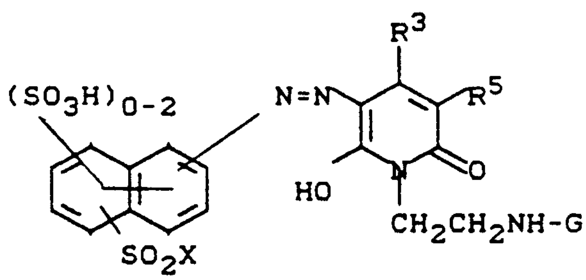

(8)

worin

$R^3$ = H, $C_1$-$C_4$-Alkyl, insbesondere $CH_3$ und $CH_2SO_3H$, COOH,

$R^4$ = H, $C_1$-$C_4$-Alkyl, $C_1$-$C_4$-Alkoxy, Cl, Br, COOH, $SO_3H$

$R^5$ = H, $SO_3H$, $CH_2SO_3H$, Cl, $C_1$-$C_4$-Alkylsulfonyl, Carbonamid, insbesondere $CONH_2$ sowie Carbonsäuremono- und -di-$C_1$-$C_4$-alkylamid.

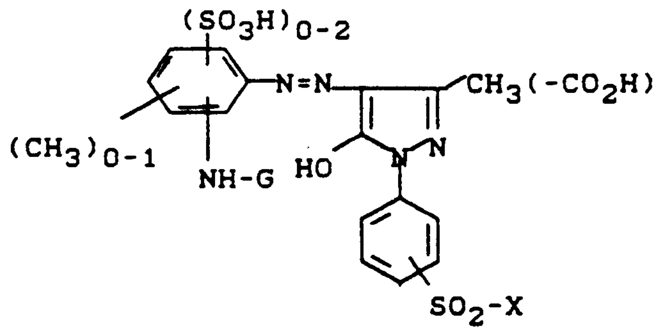

(9)

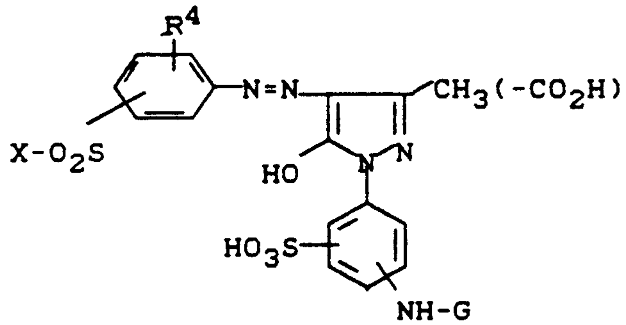

(10)

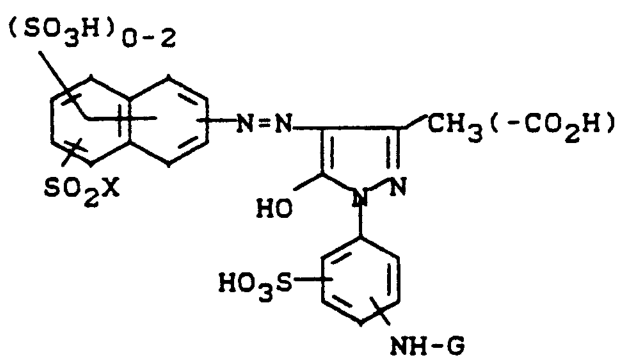

(11)

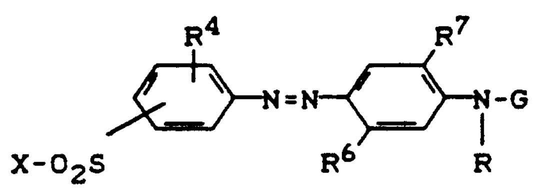

(12)

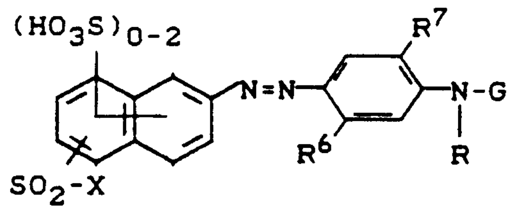

(13)

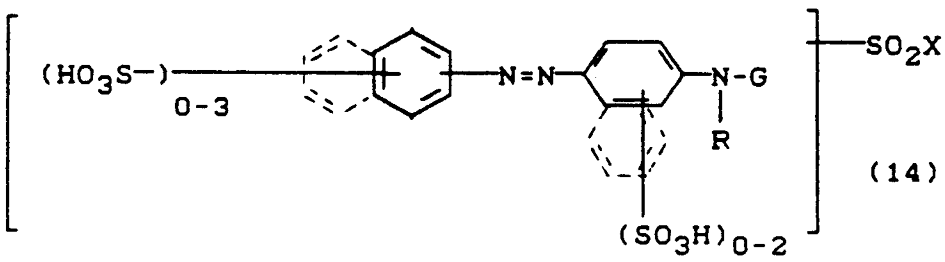

(14)

worin

$R^6$ = H, $C_1$-$C_4$-Alkyl, $C_1$-$C_4$-Alkoxy, Acylamino, insbesondere $C_1$-$C_4$-Alkylcarbonylamino oder Arylcarbonylamino wie gegebenenfalls substituiertes Phenylcarbonylamino, $C_1$-$C_4$-Alkylsulfonylamino, Cl, Br, Aminocarbonylamino, $C_1$-$C_4$-Alkylsulfonylamino, Arylsulfonylamino,

$R^7$ = H, $C_1$-$C_4$-Alkyl, $C_1$-$C_4$-Alkoxy, OH, $SO_3H$

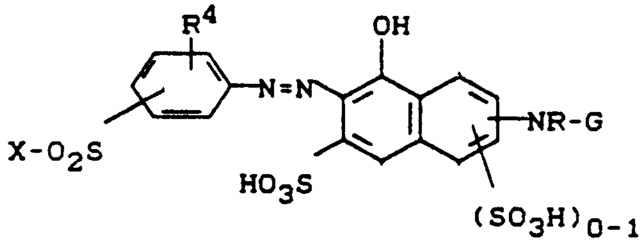

(15)

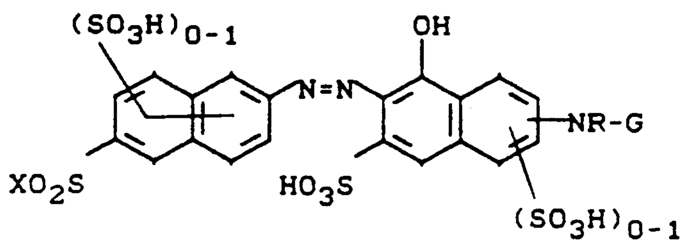

(16)

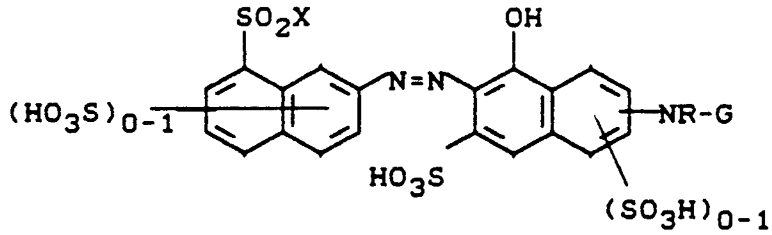

(17)

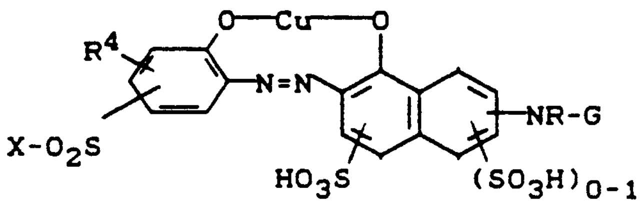

(18)

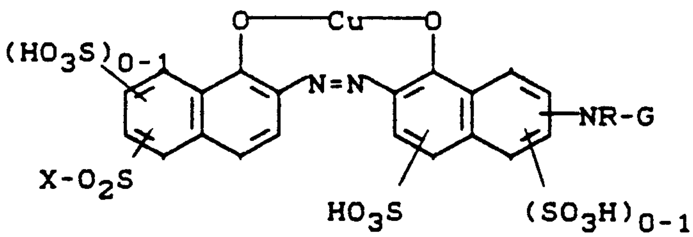

(19)

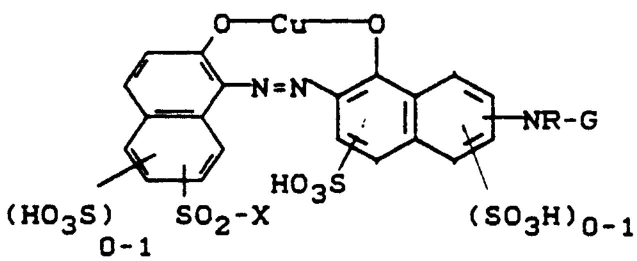

(20)

1:2-Metallkomplexe von Farbstoffen

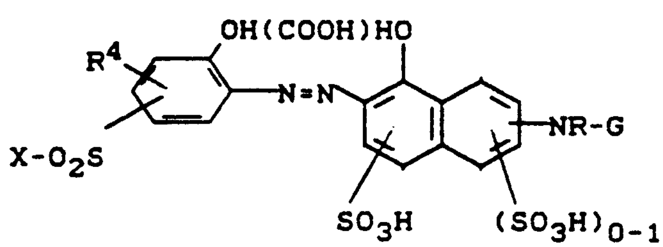

(21)

insbesondere die Cr- und Co-Komplexe, die zwei Farbstoffe (21) oder einen Farbstoff (21) und einen beliebigen anderen metallkomplexbildenden Farbstoff, insbesondere einen Azo- oder Azomethinfarbstoff enthalten.

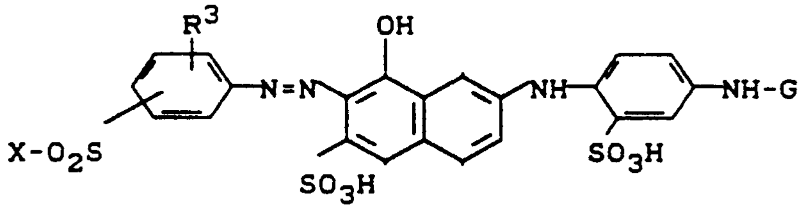

(22)

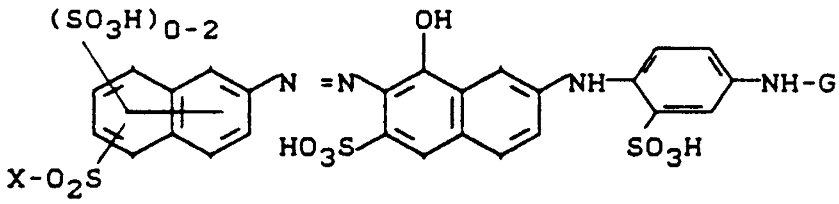

(23)

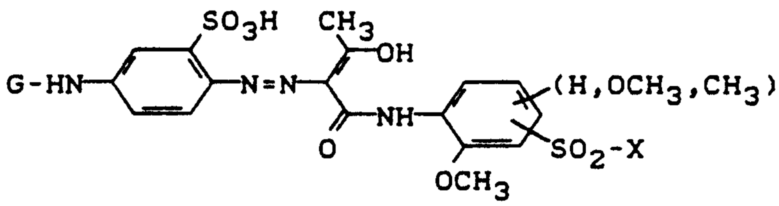

(24)

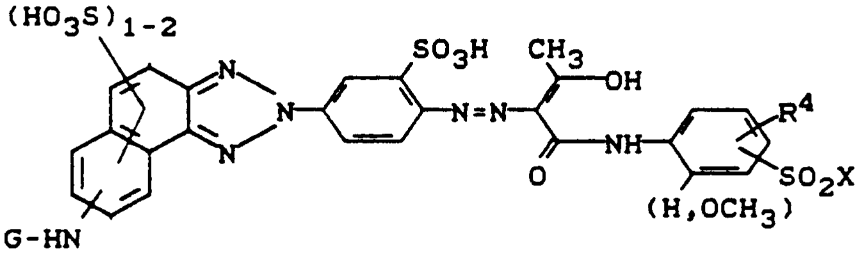

(25)

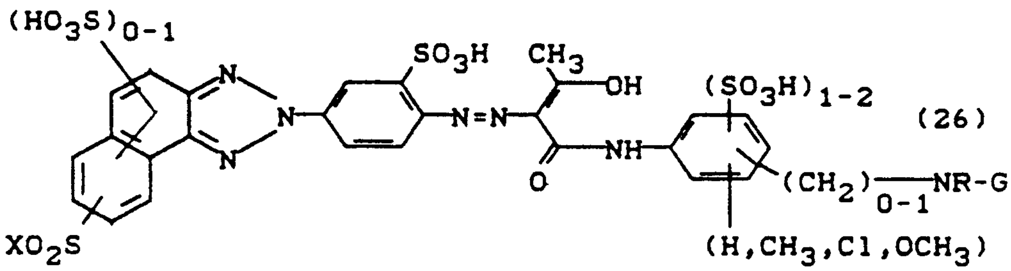

(26)

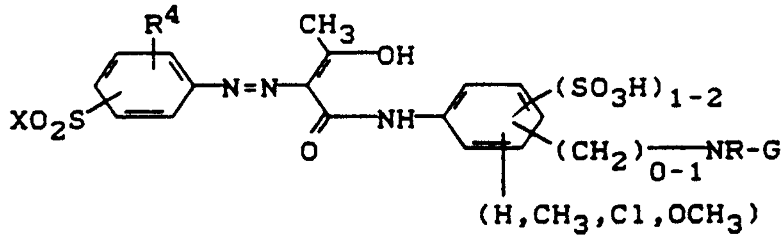

(27)

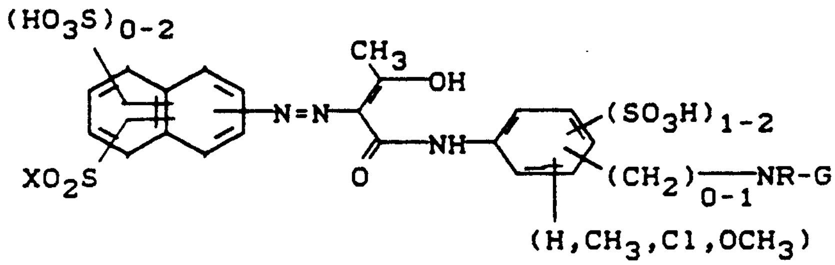

(28)

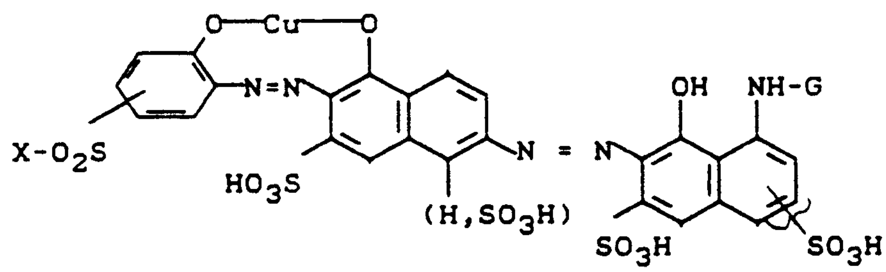

(29)

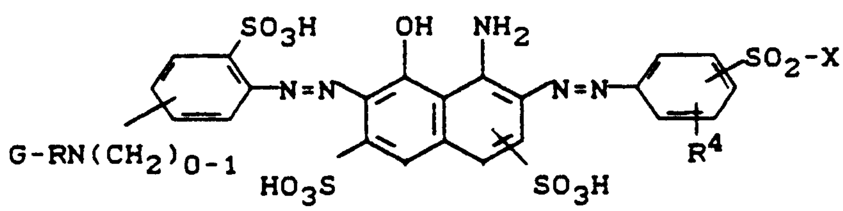

(30)

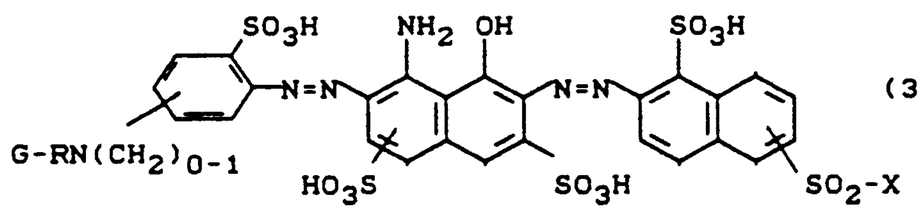

(31)

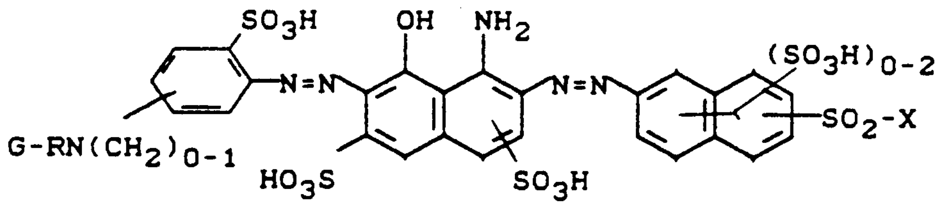

(32)

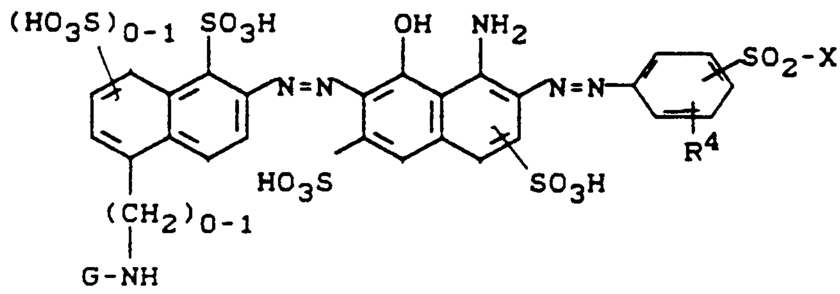

(33)

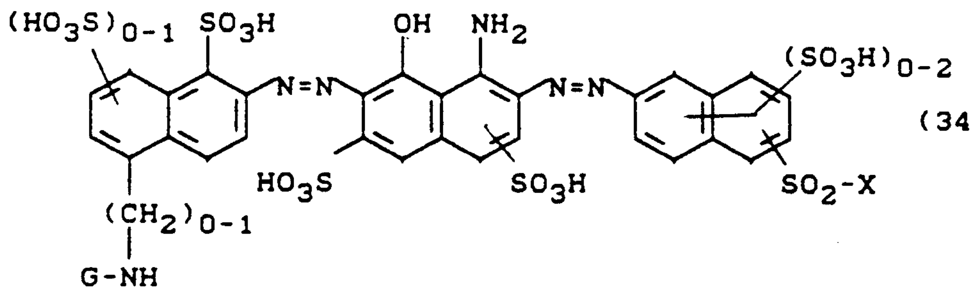

(34)

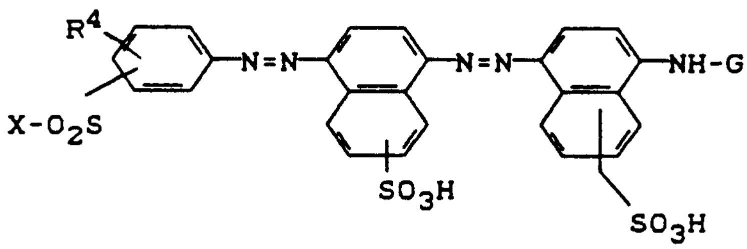

(35)

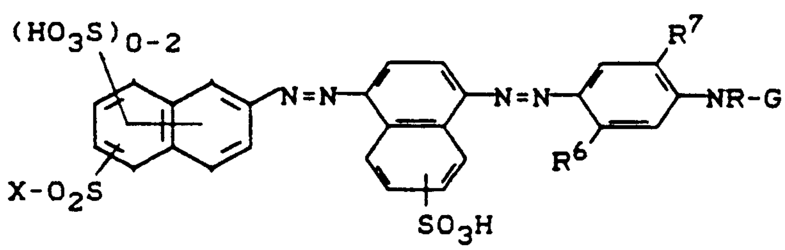

(36)

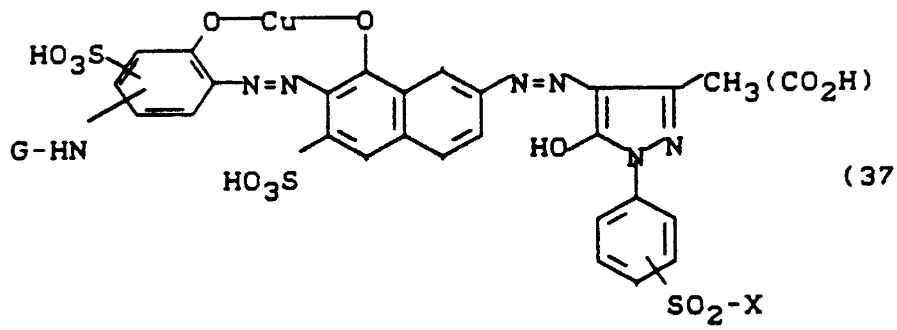

(37)

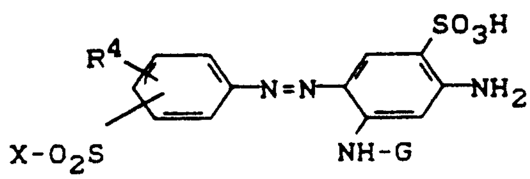

(38)

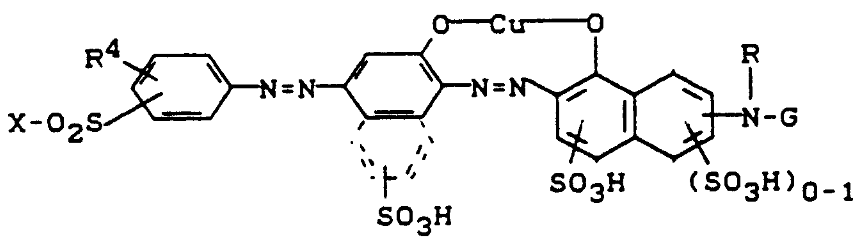

(39)

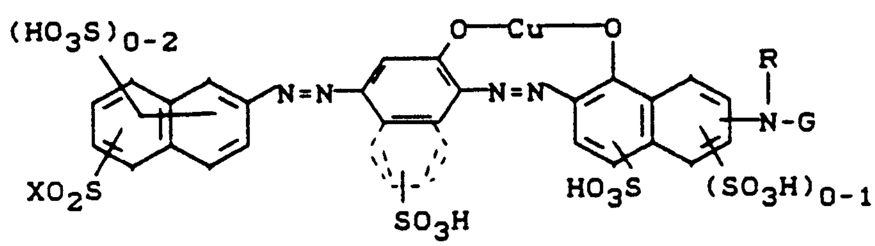

(40)

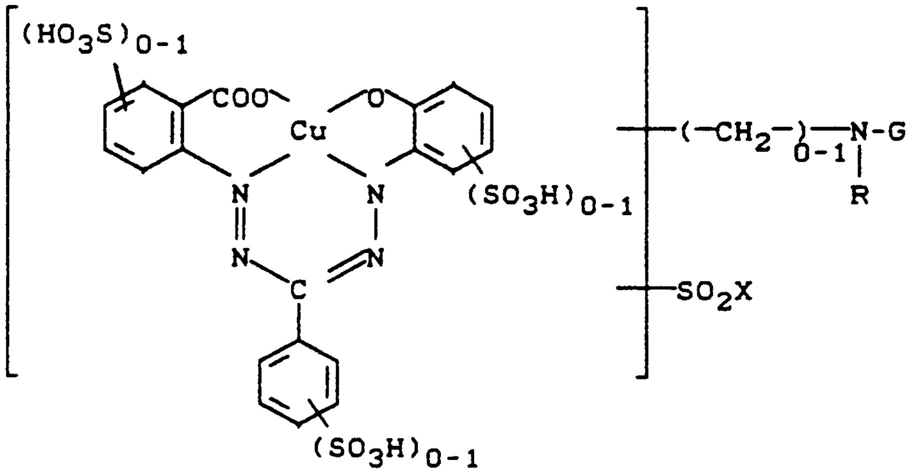

(41)

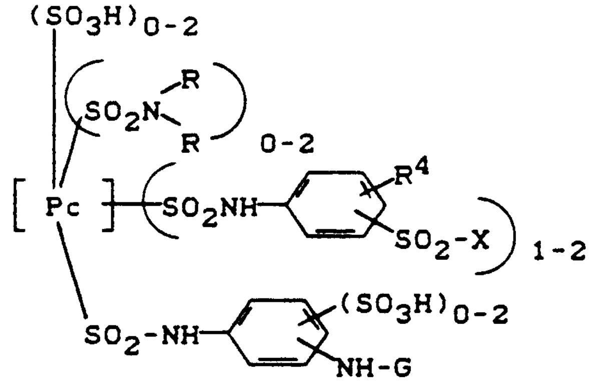

(42)

worin Pc für einen Cu- oder Ni-Phthalocyaninrest steht und die Gesamtzahl der Substituenten am Pc-Gerüst maximal 4 beträgt;

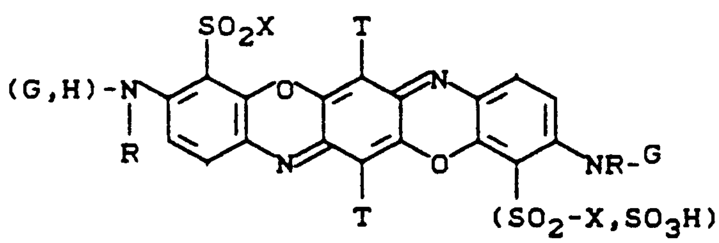

(43)

wobei T = Cl, Br, $OCH_3$ und G, X, R die in den Ansprüchen 1 und 3 angegebene Bedeutung haben.

6. Farbstoffe gemäß den Ansprüchen 1 bis 5 der Formeln

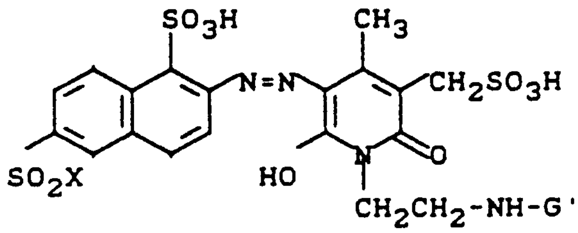

(44)

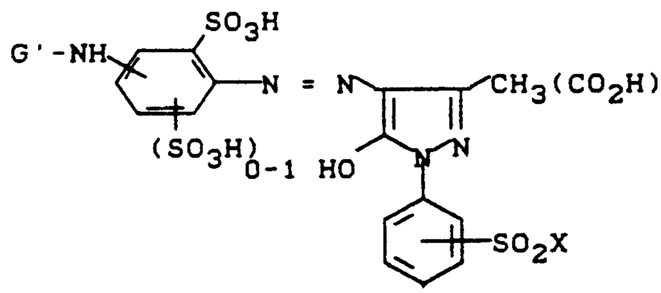

(45)

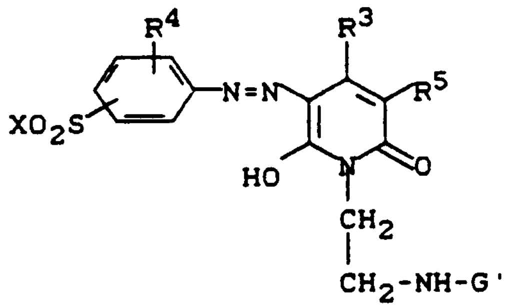

(46)

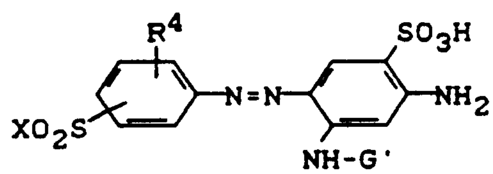

(47)

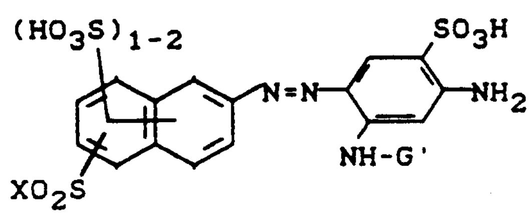

(48)

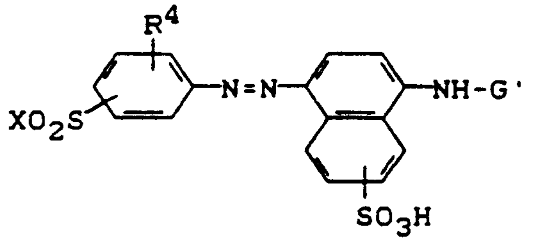

(49)

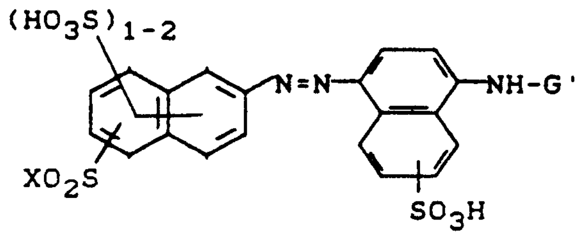

(50)

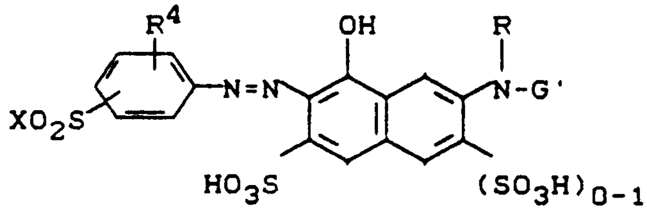

(51)

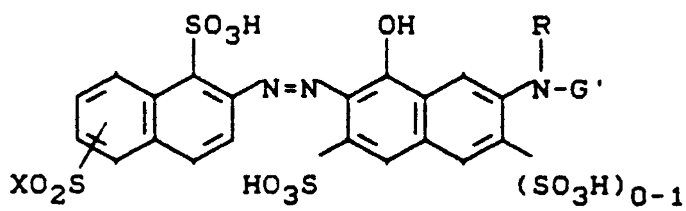

(52)

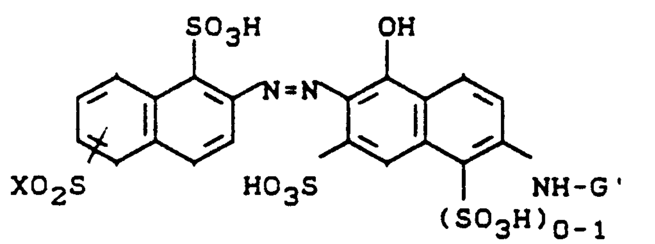

(53)

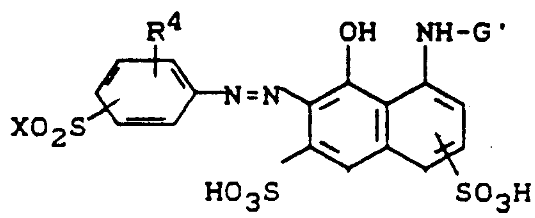

(54)

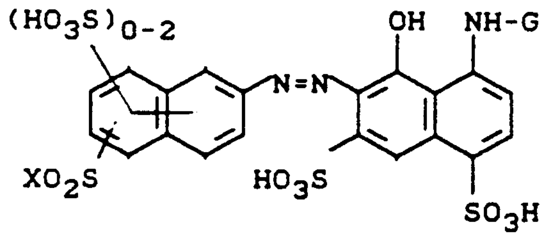

(55)

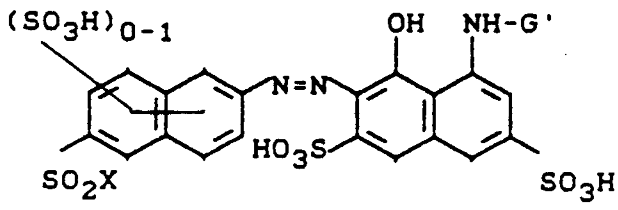

(56)

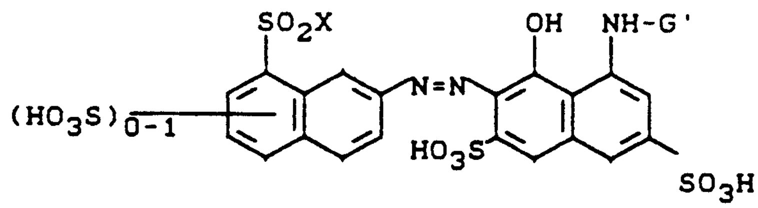

(57)

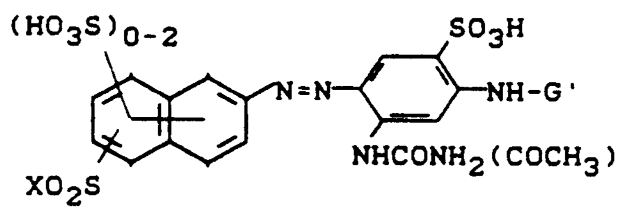

(58)

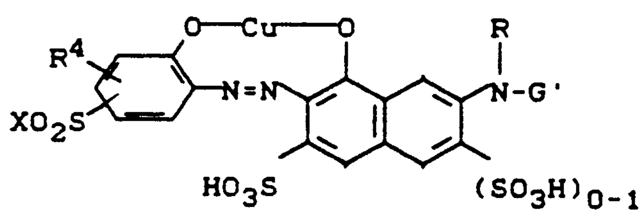

(59)

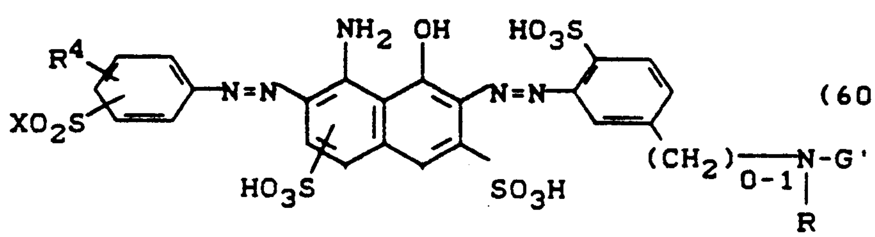

(60)

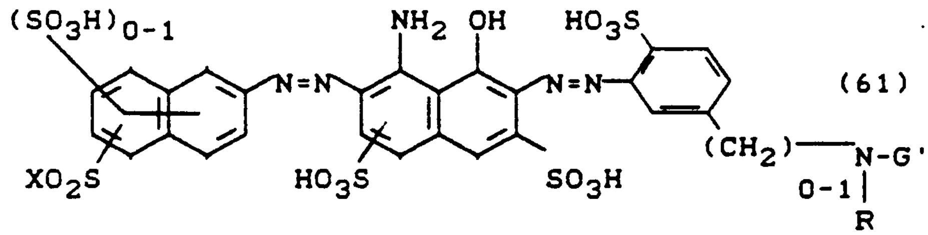

(61)

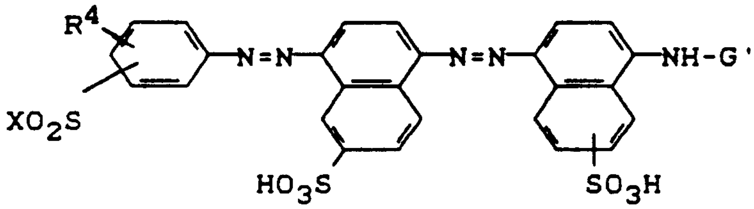

(62)

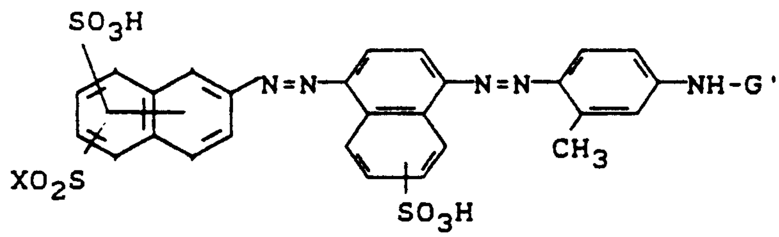

(63)

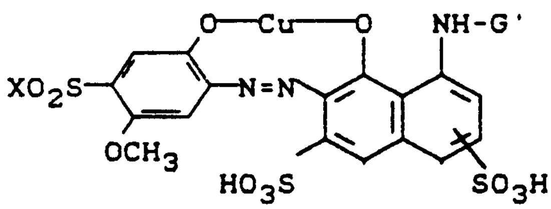

(64)

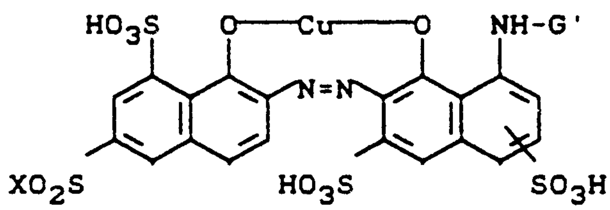

(65)

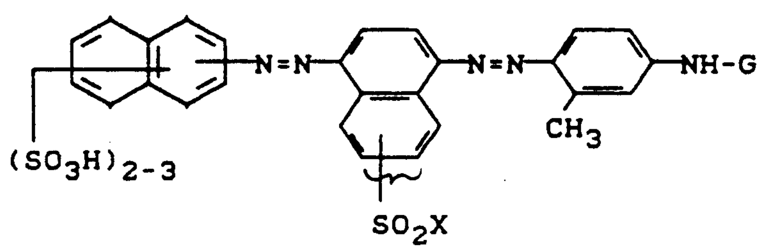

(66)

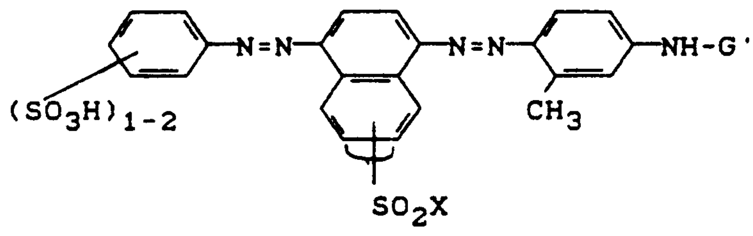

(67)

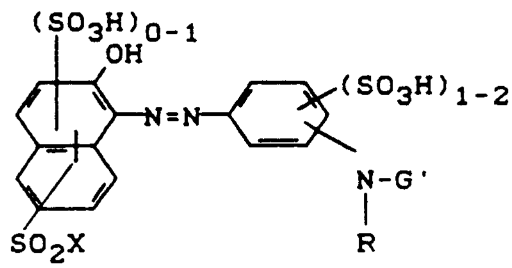

(68)

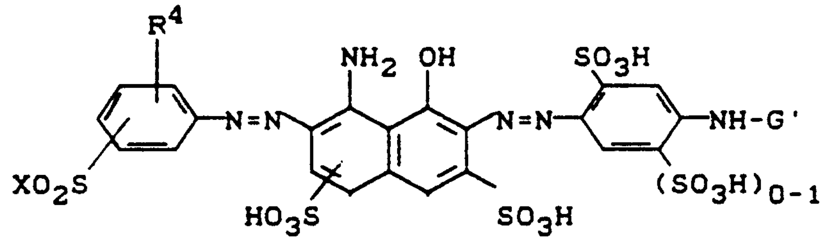

(69)

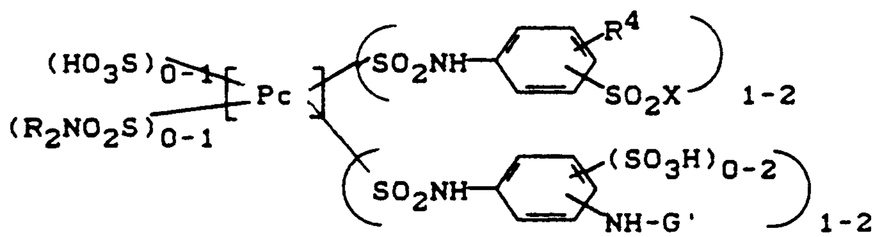

(70)

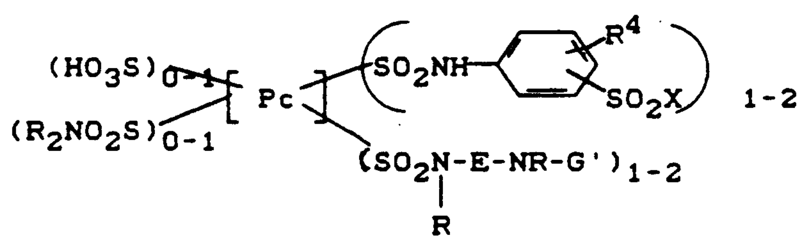

(71)

worin Pc für einen Cu- oder Ni-Phthalocyaninrest steht und die Gesamtzahl der Substituenten am Pc-Gerüst maximal 4 beträgt; E = aliphatisches Brückenglied, insbesondere $C_2$-$C_4$-Alkylen,

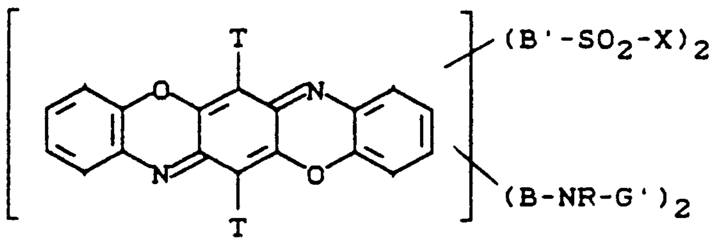

(72)

wobei T, R, B, B′, G′, X, $R^3$, $R^4$, $R^5$ die in den Ansprüchen 1 bis 5 genannte Bedeutung haben.

7. Verwendung der Farbstoffe der Ansprüche 1 bis 6 zum Färben und Bedrucken von natürlichen und synthetischen OH- oder amidgruppenhaltigen Materialien.

8. Mit den Farbstoffen der Ansprüche 1 bis 6 gefärbte oder bedruckte OH- oder amidgruppenhaltige Materialien.

## Claims

1. Dyestuffs of the formula

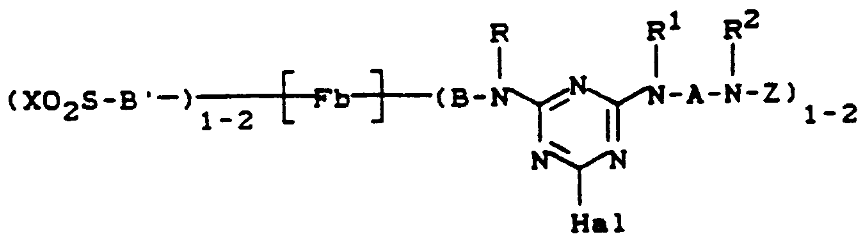

(1)

wherein

| | |
|---|---|
| Fb | = the radical of a dyestuff of the mono- or polyazo, metal complex azo, anthraquinone, phthalocyanine, formazan, azomethine, dioxazine, phenazine, xanthene, thioxanthone, naphthoquinone, stilbene or triphenylmethane series, |
| B and B' | = a direct bond or bridge member to a ring C atom of an aromatic-carbocyclic ring or to a ring C or N atom of an aromatic-heterocyclic ring in Fb, |
| X | = $CH=CH_2$ or $CH_2CH_2$-Y, wherein |
| Y | = a radical which can be eliminated under alkaline conditions, |
| R, $R^1$ and $R^2$ | = H or $C_1$-$C_4$-alkyl, which can optionally be substituted, and wherein |
| $R^1$-$R^2$ | can also represent a $C_1$-$C_4$-alkylene unit, |
| Hal | = F, Cl or Br, |
| A | = a direct bond or an aliphatic, cycloaliphatic or mixed aromatic-aliphatic bridge member, which can optionally contain hetero atoms, such as N, O, S or $SO_2$, and wherein the radical -$NR^1$-A-$NR^2$- can also be part of a saturated heterocyclic system, |

and

Z = a fibre-reactive radical which is free from chromophoric substituents.

**2.** Dyestuffs according to Claim 1 of the formula

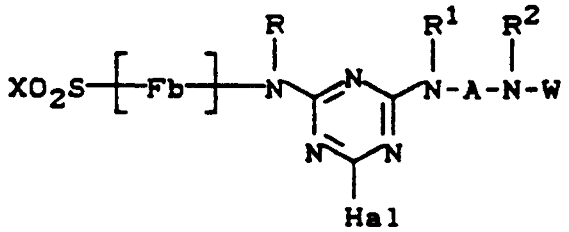 (2)

wherein Fb, X, Hal, R, $R^1$, $R^2$ and A have the meaning given in Claim 1 and W represents a fibre-reactive pyrimidinyl, dichlorotriazinyl, monochlorotriazinyl or monofluorotriazinyl radical.

**3.** Dyestuffs according to Claim 1 of the formula (4) and metal complexes thereof

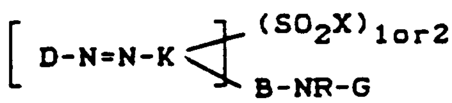 (4)

wherein

D = the radical of a diazo component of the benzene or naphthalene series,

G =

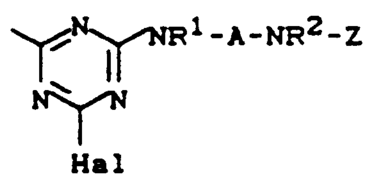

K = the radical of a coupling component of the benzene, naphthalene, acetoacetic acid arylide or heterocyclic series; and in the heterocyclic series, preferably a pyrazolone or pyridone radical and

Z, X, B, R, $R^1$, $R^2$ and Hal have the meaning given in Claim 1.

**4.** Dyestuffs according to Claim 1 or 3 of the formulae (5a) and (5b)

$X\text{-}SO_2\text{-}D\text{-}N=N\text{-}K\text{-}B\text{-}NR\text{-}G'$ (5a)

$G'\text{-}NR\text{-}B\text{-}D\text{-}N=N\text{-}K'\text{-}SO_2\text{-}X$ (5b)

wherein

X = $-CH=CH_2$ or $CH_2CH_2OSO_3H$,

G' =

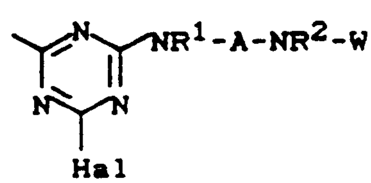

W =

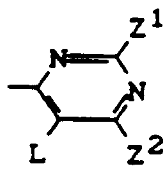

(3a)

,

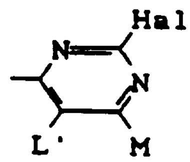

(3b)

,

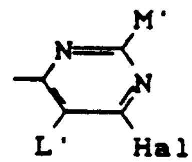

(3c)

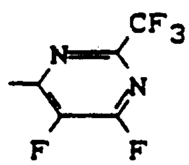

(3d)

or

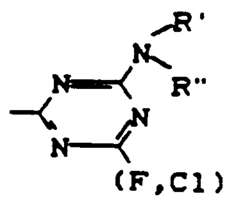

(3e)

wherein

| | |
|---|---|
| Hal | = F, Cl or Br |
| L | = H, Cl, Br, CN or $C_1$-$C_4$-alkylsulphonyl, |
| L' | = H, Cl or Br |
| $Z^1$ and $Z^2$ | = independently of one another, H, Cl, Br, F or $C_1$-$C_4$-alkylsulphonyl, wherein $Z^1$ and $Z^2$ do not simultaneously represent H or $C_1$-$C_4$-alkylsulphonyl, |
| M | = $CH_3$, $CH_2Cl$, $CHCl_2$, $CCl_3$, $CH_2F$, $CF_3$, CHClF, $CCl_2F$, CHBrF or $CBr_2F$, |
| M' | = $CH_3$, $CH_2Cl$, $CHCl_2$, $CCl_3$, CHClF, $CCl_2F$, $CClF_2$ or $CF_3$, |
| R' | = H or an optionally substituted $C_1$-$C_4$-alkyl or cycloaliphatic radical and |
| R'' | = R' or an optionally substituted phenyl, benzyl, naphthyl or hetaryl radical or an optionally substituted amino group, |
| R' and R'', | together with the N atom, can form a 5- or 6-membered heterocyclic radical, |
| K' | = the radical of a coupling component of the pyrazolone, pyridone or acetoacetic acid arylide series and |
| D, K, R and B | have the meaning given in Claim 1 or 3. |

**5.** Dyestuffs according to Claim 1, of the formulae

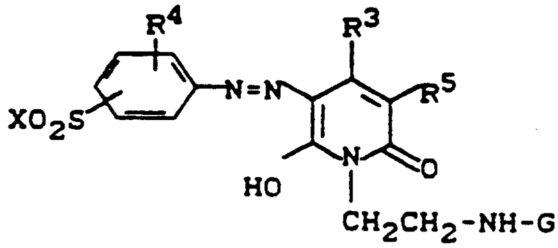

(6)

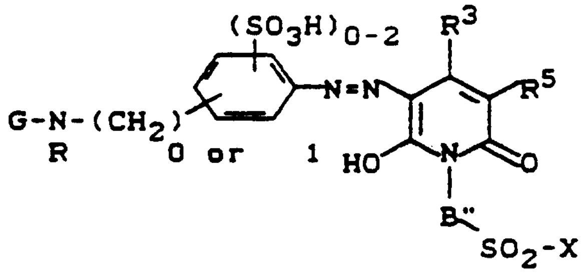

(7)

B'' = $-(-CH_2-)_{2-3}-$ , 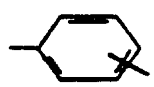

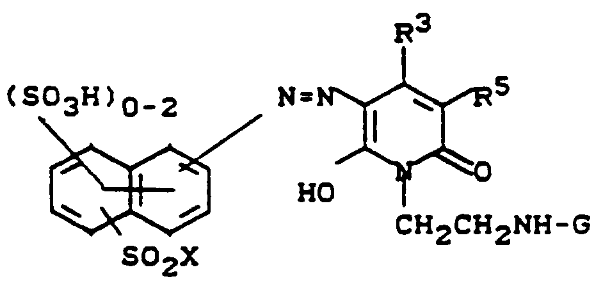

(8)

wherein

$R^3$ = H, $C_1$-$C_4$-alkyl, in particular $CH_3$ and $CH_2SO_3H$, or COOH,

$R^4$ = H, $C_1$-$C_4$-alkyl, $C_1$-$C_4$-alkoxy, Cl, Br, COOH or $SO_3H$ and

$R^5$ = H, $SO_3H$, $CH_2SO_3H$, Cl, $C_1$-$C_4$-alkylsulphonyl, carboxamide, in particular $CONH_2$, and carboxylic acid mono- and di-$C_1$-$C_4$-alkylamide,

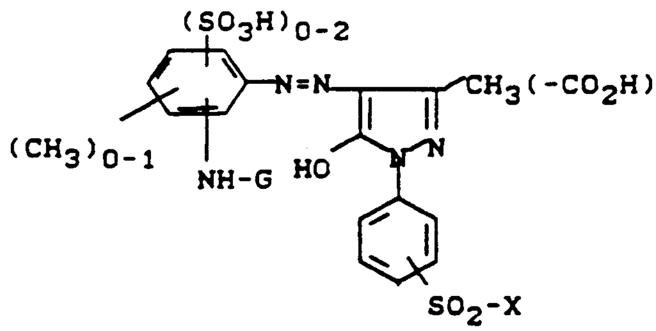

(9)

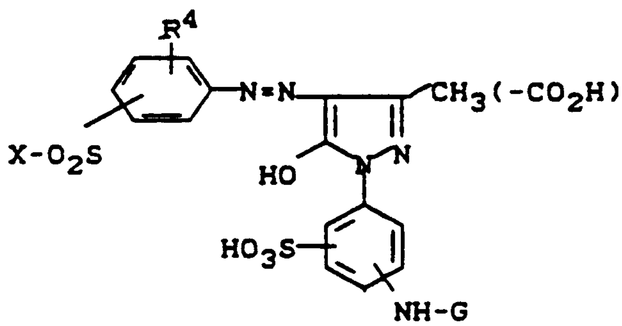

(10)

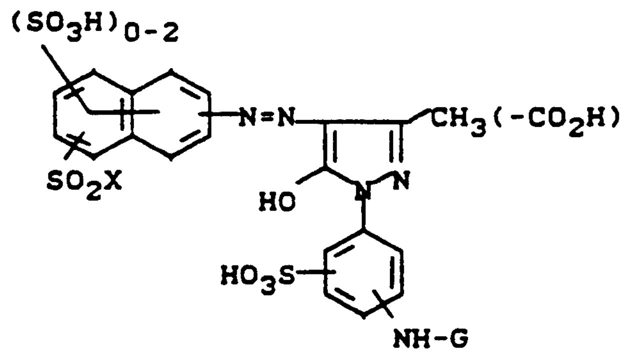

(11)

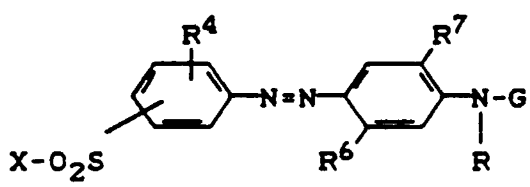

(12)

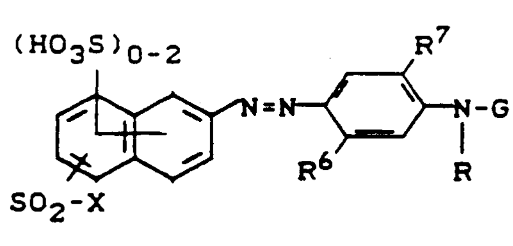

(13)

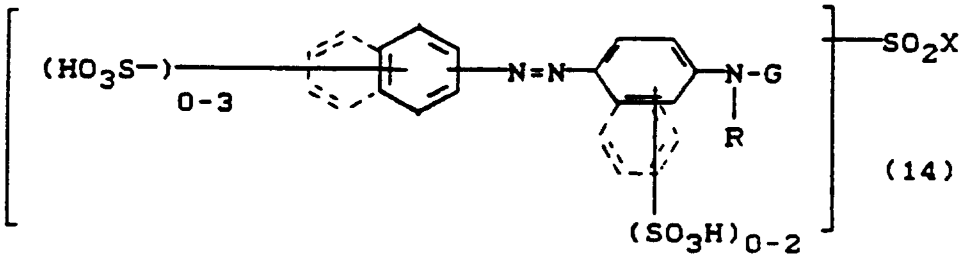

(14)

wherein

R⁶ = H, $C_1$-$C_4$-alkyl, $C_1$-$C_4$-alkoxy, acylamino, in particular $C_1$-$C_4$-alkylcarbonylamino or arylcarbonylamino, such as optionally substituted phenylcarbonylamino, $C_1$-$C_4$-alkylsulphonylamino, Cl, Br, aminocarbonylamino, $C_1$-$C_4$-alkylsulphonylamino or arylsulphonylamino, and

R⁷ = H, $C_1$-$C_4$-alkyl, $C_1$-$C_4$-alkoxy, OH or $SO_3H$

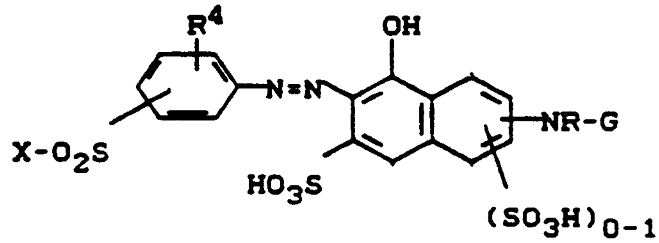

(15)

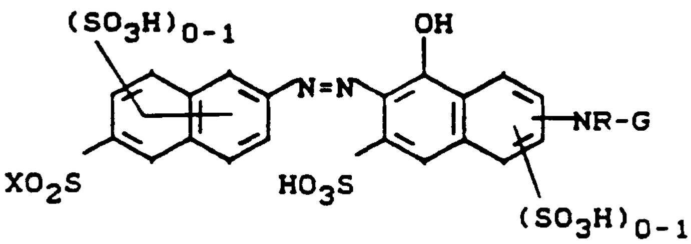

(16)

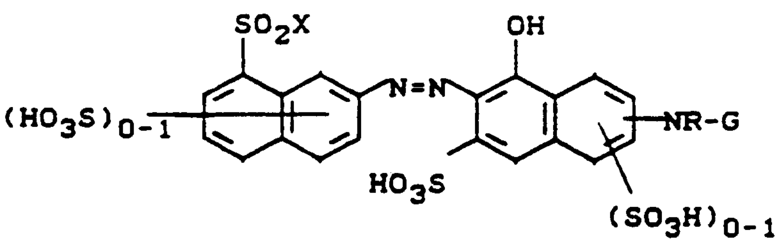

(17)

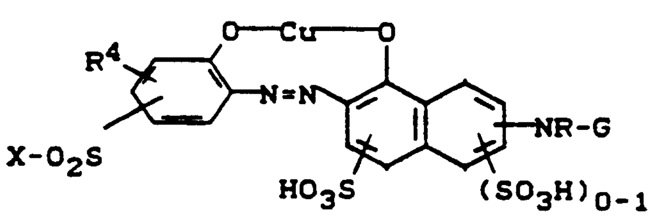

(18)

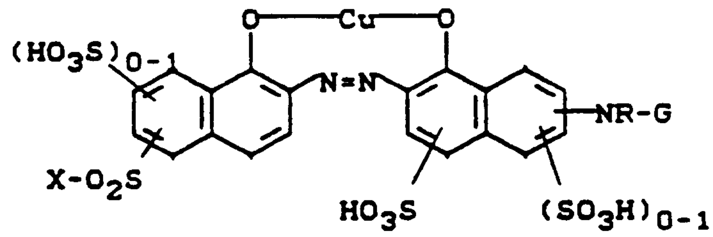

(19)

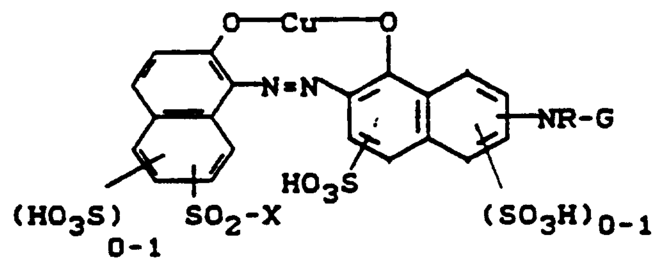

(20)

1:2 metal complexes of dyestuffs

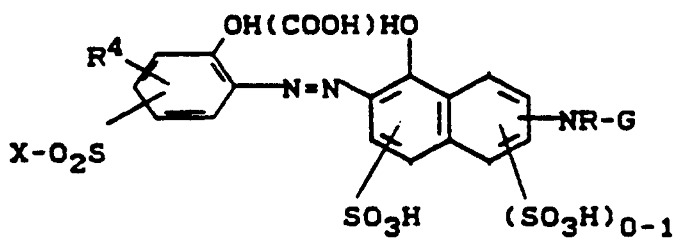

(21)

in particular the Cr and Co complexes, which contain two dyestuffs (21) or one dyestuff (21) and any other desired dyestuff which forms metal complexes, in particular an azo or azomethine dyestuff,

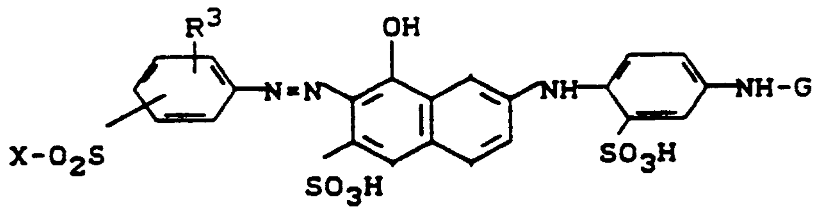

(22)

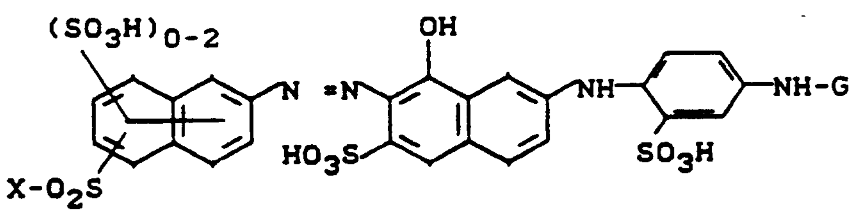

(23)

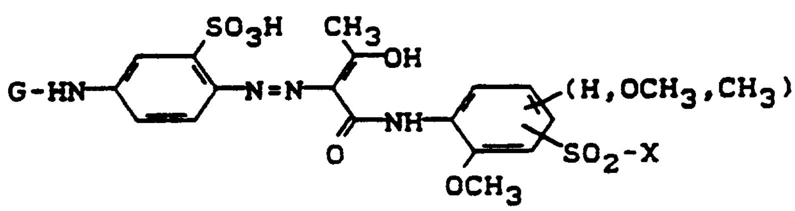

(24)

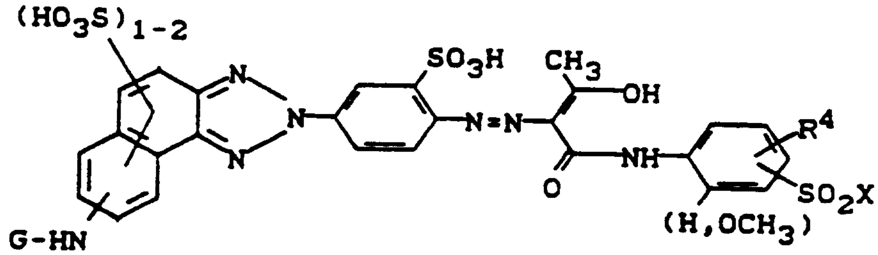

(25)

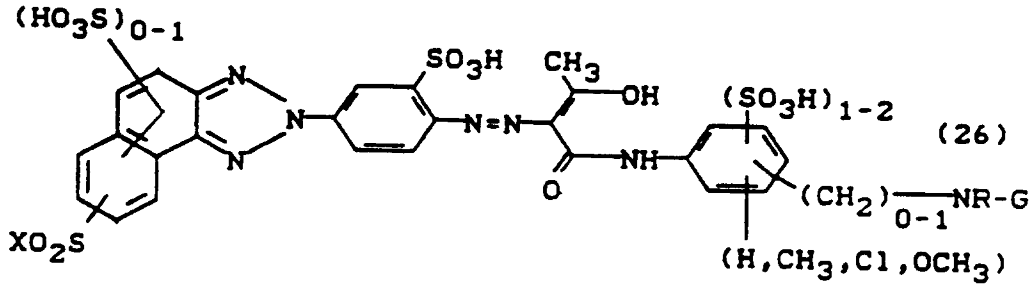

(26)

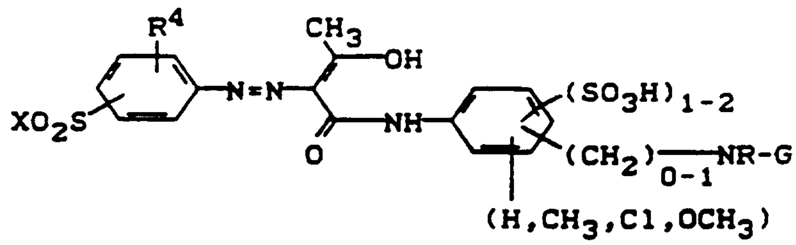

(27)

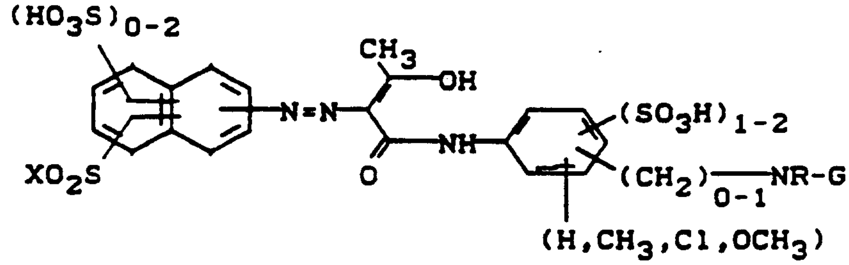

(28)

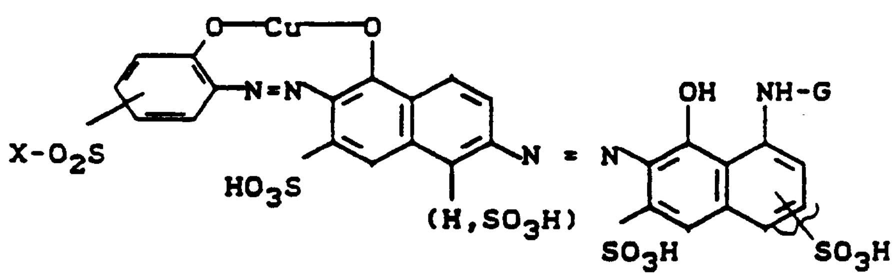

(29)

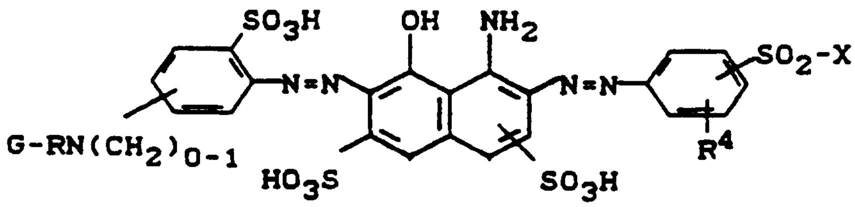

(30)

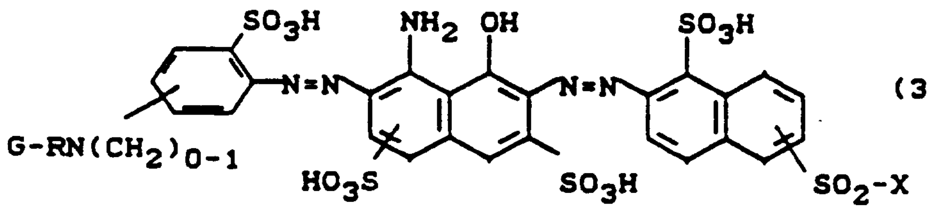

(31)

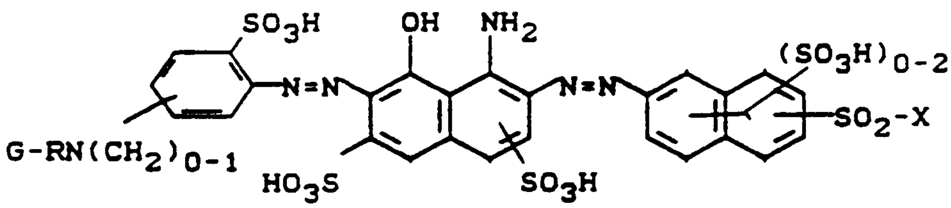

(32)

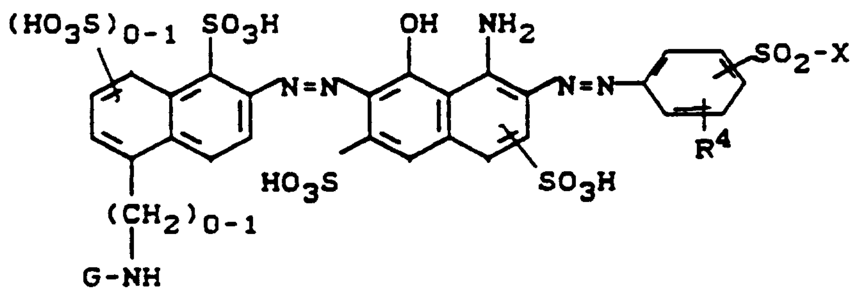

(33)

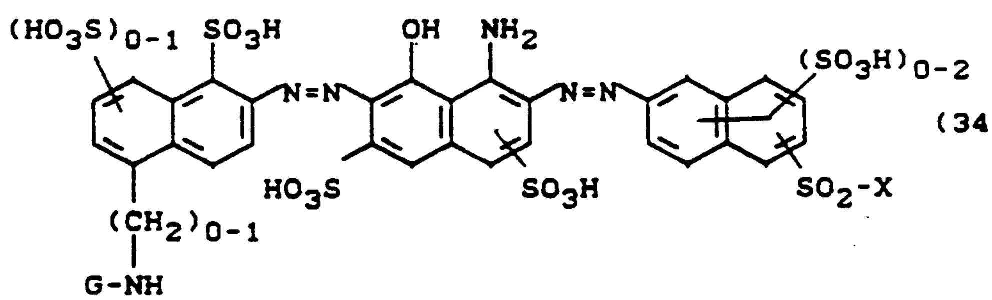

(34)

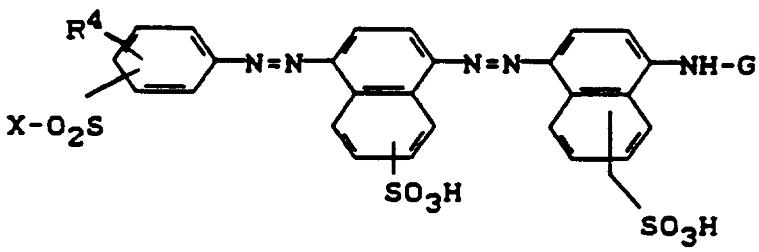

(35)

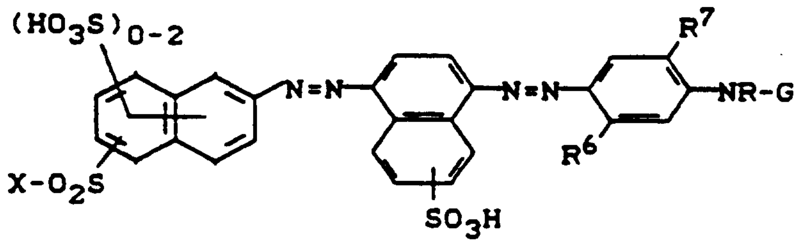

(36)

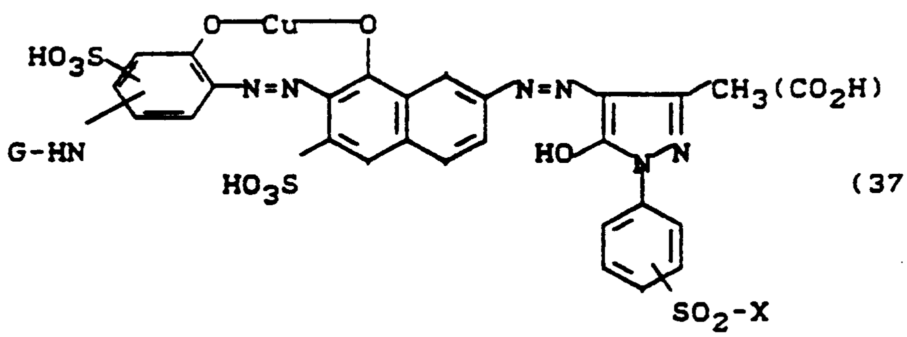

(37)

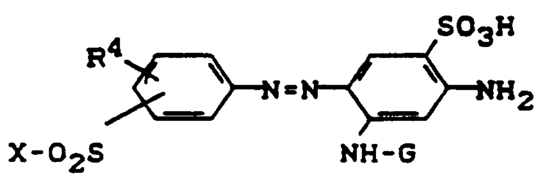

(38)

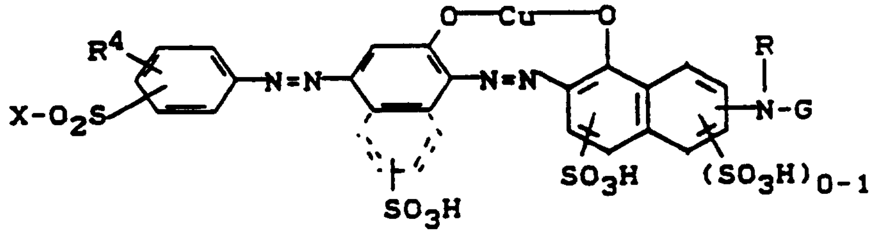 (39)

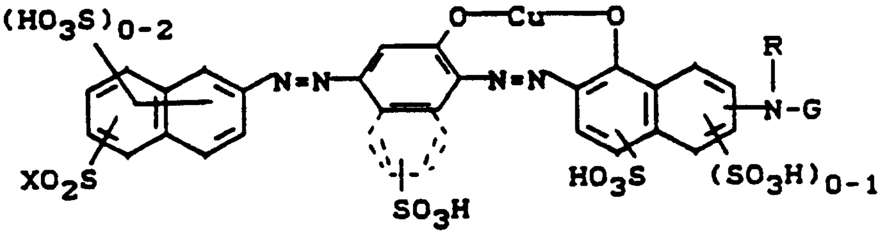 (40)

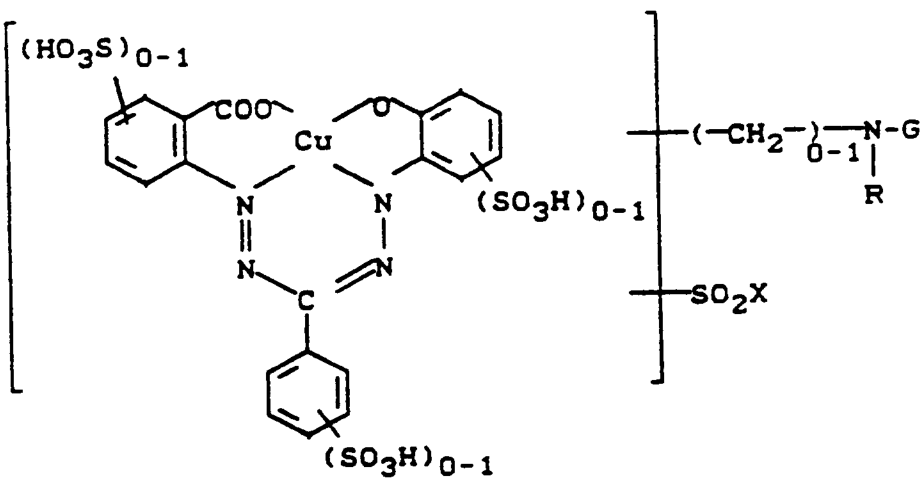 (41)

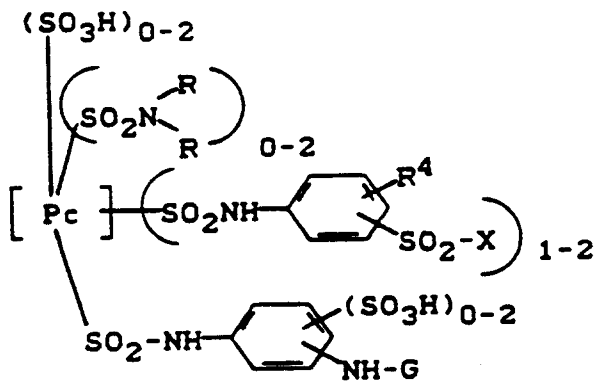 (42)

wherein Pc represents a Cu or Ni phthalocyanine radical and the total number of substituents on the Pc structure is not more than 4;

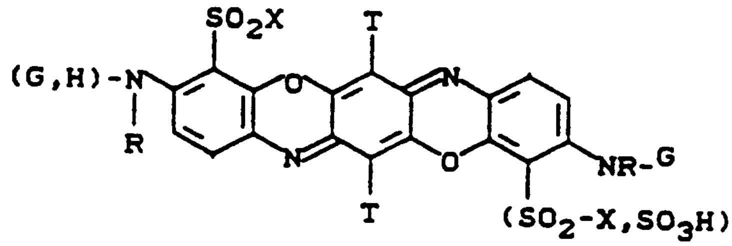

(43)

wherein T = Cl, Br or $OCH_3$ and G, X and R have the meaning given in Claims 1 and 3.

**6.** Dyestuffs according to Claims 1 to 5, of the formulae

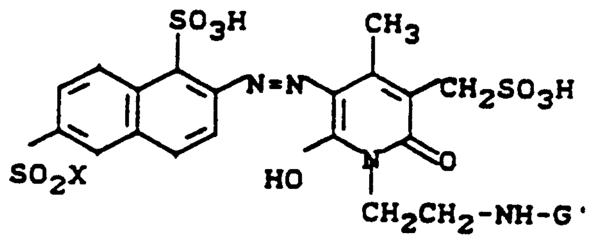

(44)

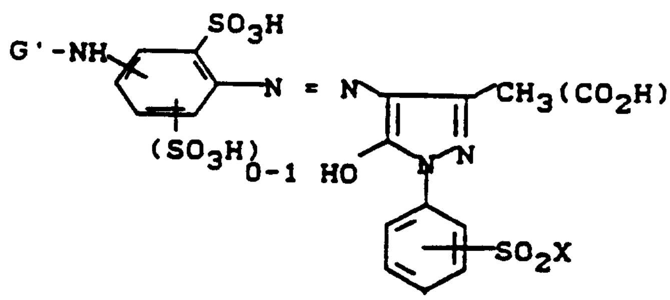

(45)

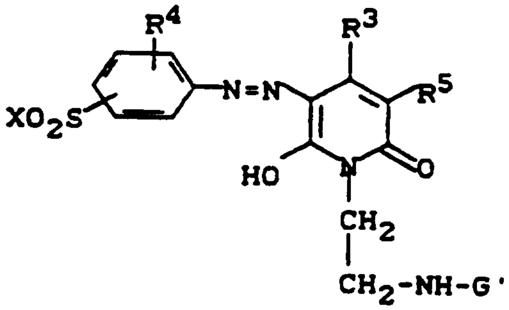

(46)

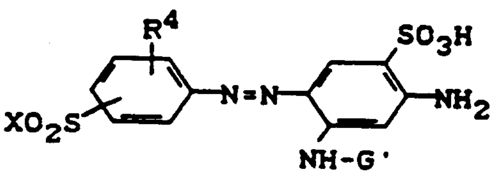

(47)

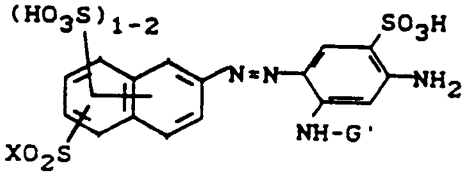

(48)

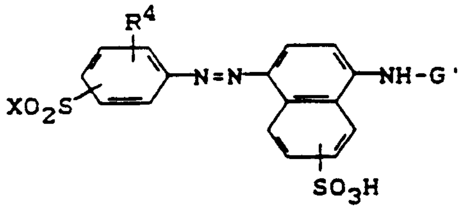

(49)

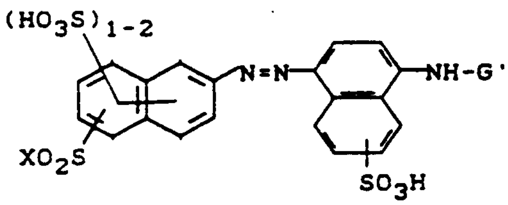

(50)

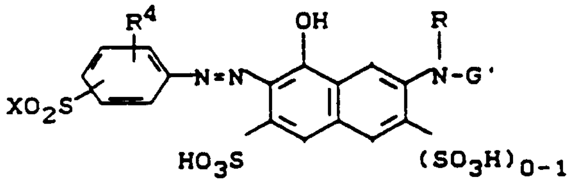

(51)

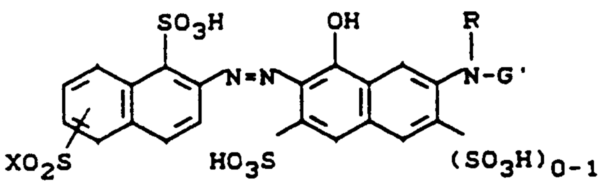

(52)

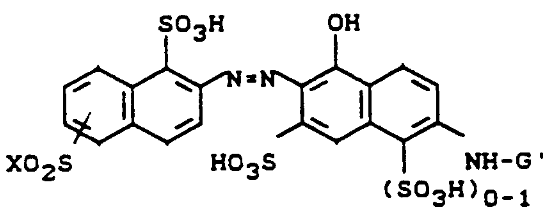

(53)

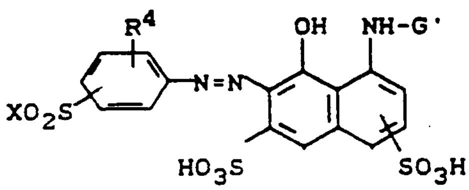

(54)

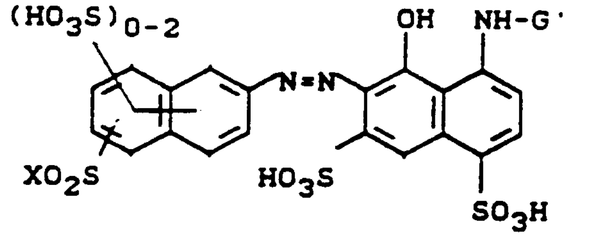

(55)

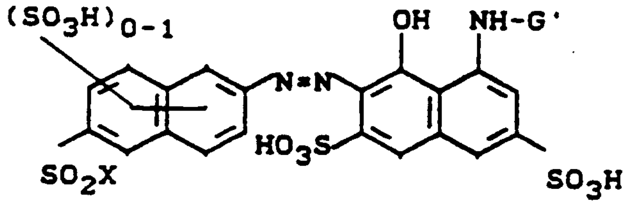

(56)

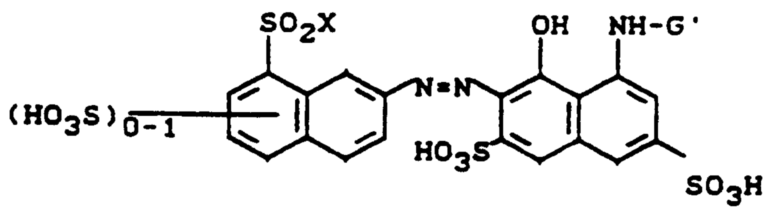

(57)

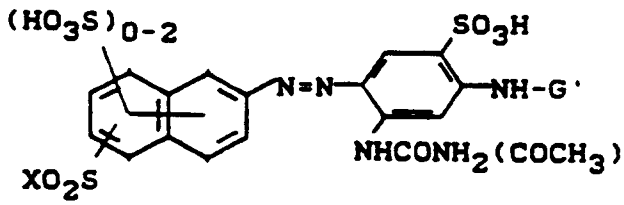

(58)

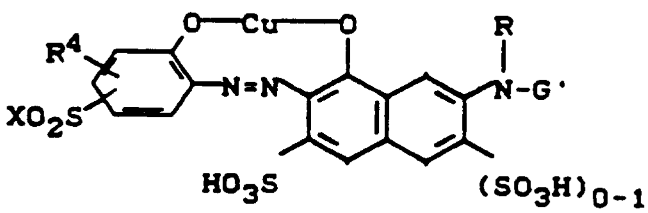

(59)

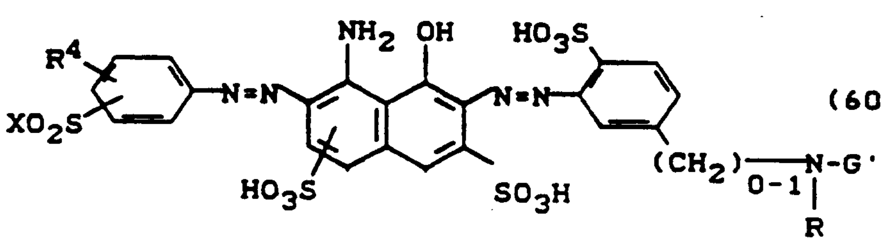

(60)

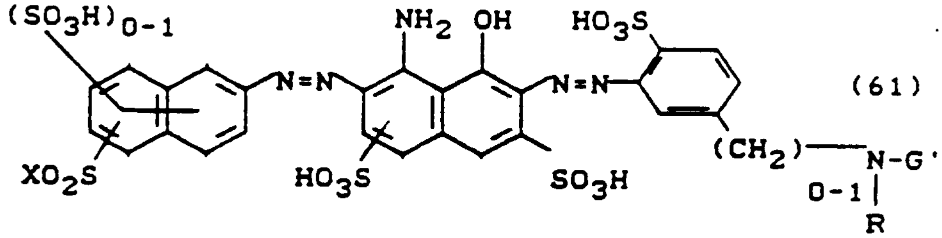

(61)

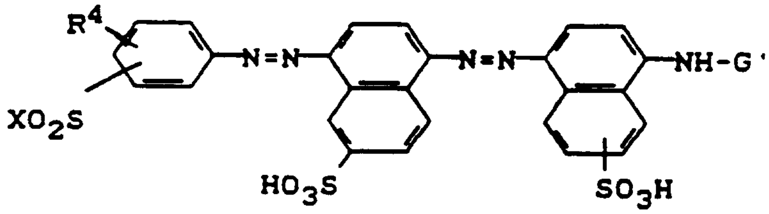

(62)

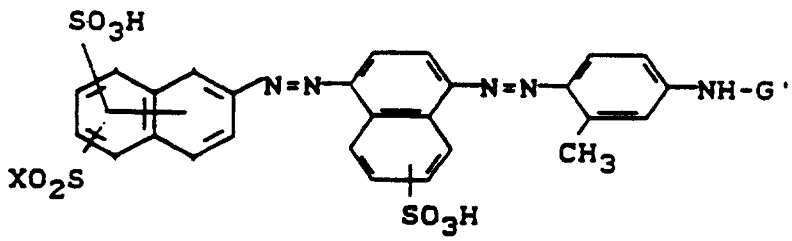

(63)

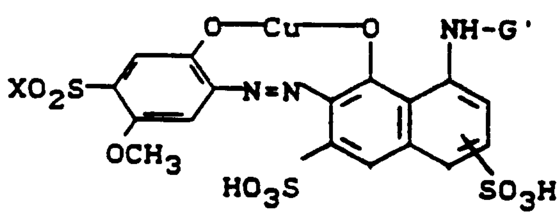

(64)

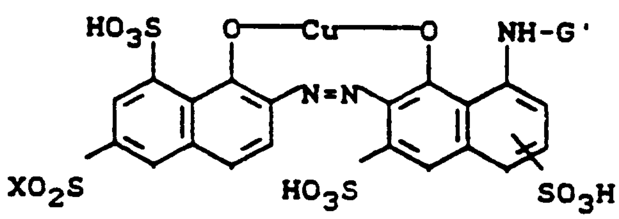

(65)

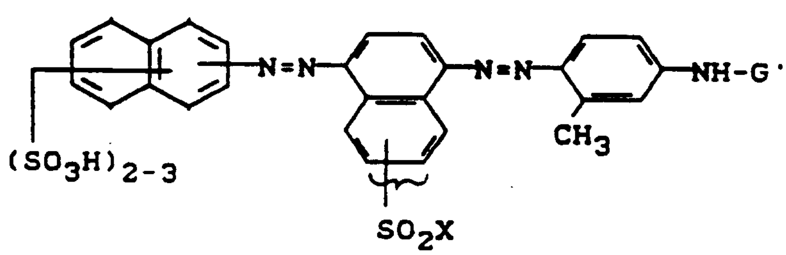

(66)

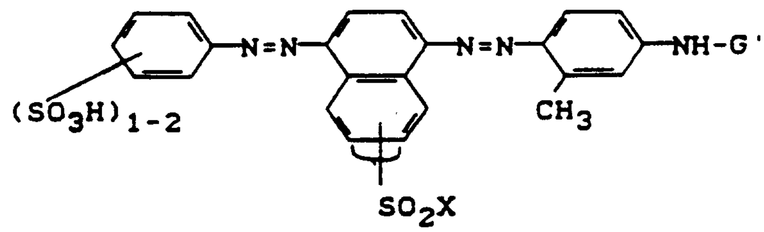

(67)

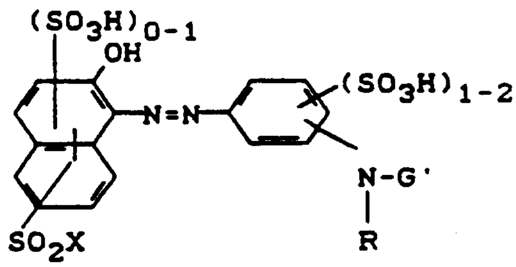

(68)

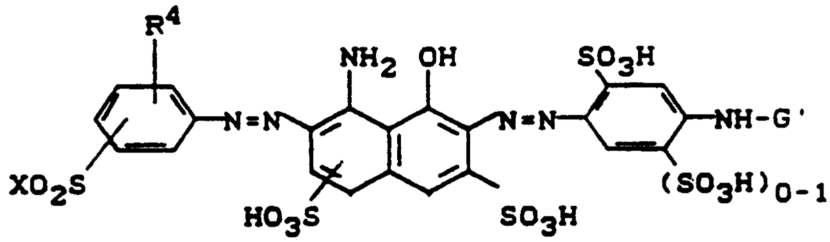

(69)

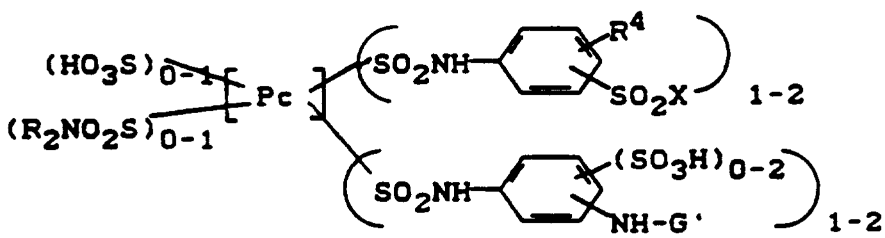

(70)

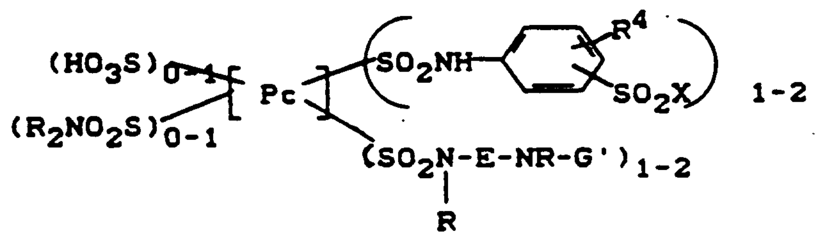

(71)

wherein Pc represents a Cu or Ni phthalocyanine radical and the total number of substituents on the Pc skeleton is not more than 4; E = an aliphatic bridge member, in particular $C_2$-$C_4$-alkylene,

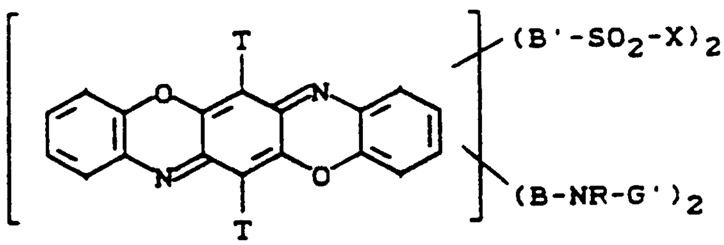

(72)

wherein T, R, B, B', G', X, $R^3$, $R^4$ and $R^5$ have the meaning given in Claims 1 to 5.

7. Use of the dyestuffs of Claims 1 to 6 for dyeing and printing naturally occurring and synthetic materials containing OH groups or amide groups.

8. Materials containing OH groups or amide groups which have been dyed or printed with the dyestuffs of Claims 1 to 6.

**Revendications**

1. Colorants de formule :

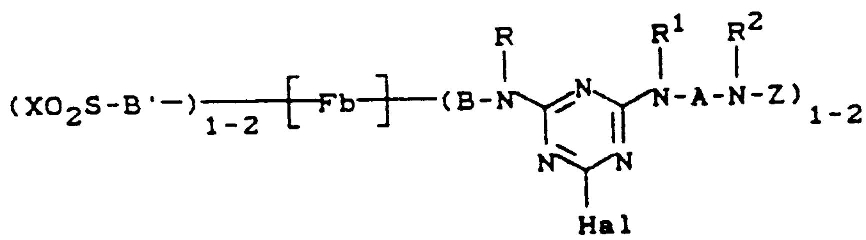

(1)

dans laquelle

Fb = radical d'un colorant de la série mono- ou polyazoïque, azoïque à complexe métallique, anthraquinone, phtalocyanine, formazan, azométhine, dioxazine, phénazine, xanthène, thioxanthone, naphtoquinone, stilbène ou triphénylméthane,

B, respectivement B' = liaison directe ou pont sur un atome de carbone cyclique d'un noyau carbocyclique aromatique ou un atome de carbone ou d'azote cyclique d'un noyau hétérocyclique aromatique de Fb,

X = $CH=CH_2$ ou $CH_2CH_2$-Y, où

Y = radical que l'on peut éliminer en milieu alcalin,

R, $R^1$, $R^2$ = H ou groupement alkyle en $C_1$-$C_4$ qui peut éventuellement être substitué,

$R^1$-$R^2$ pouvant aussi représenter une unité alkylène en $C_1$-$C_4$,

Hal = F, Cl ou Br,

A = liaison directe ou pont aliphatique, cycloaliphatique, respectivement mélangé aromatique-aliphatique, qui peut le cas échéant contenir des hétéroatomes comme N, O, S ou $SO_2$, et le radical -$NR^1$-A-$NR^2$- pouvant aussi représenter un système hétérocyclique saturé, et

Z = radical réagissant avec des fibres, qui ne contient pas de substituants chromophores.

**2.** Colorants selon la revendication 1, de formule :

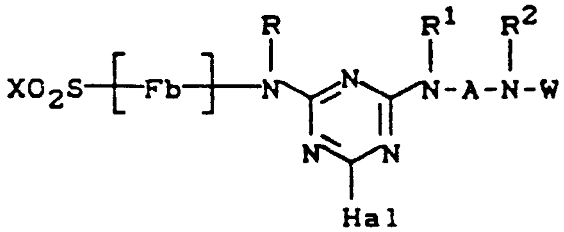

(2)

dans laquelle

Fb, X, Hal, R, $R^1$, $R^2$ et A ont la signification donnée dans la revendication 1 et W représente un radical pyrimidinyle, dichlorotriazinyle, monochlorotriazinyle, respectivement monofluorotriazinyle, réagissant avec les fibres.

**3.** Colorants selon la revendication 1, de formule (4) ainsi que leurs complexes métalliques :

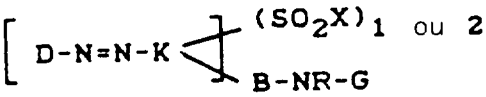

(4)

dans laquelle

D = radical d'un composant diazoïque de la série du benzène ou du naphtalène,

G =

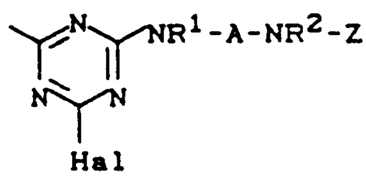

K = radical d'un composant de couplage de la série du benzène, du naphtalène, de l'acétoacétarylide ou de la série hétérocyclique ; et étant de préférence, dans la série hétérocyclique, un radical pyrazolone ou pyridone et

Z, X, B, R, $R^1$, $R^2$ et Hal ont la signification donnée dans la revendication 1.

**4.** Colorants selon la revendication 1 ou 3, de formules (5a) et (5b) :

$X\text{-}SO_2\text{-}D\text{-}N=N\text{-}K\text{-}B\text{-}NR\text{-}G'$ (5a)

$G'\text{-}NR\text{-}B\text{-}D\text{-}N=N\text{-}K'\text{-}SO_2\text{-}X$ (5b)

où

X = $-CH=CH_2$ ou $-CH_2CH_2OSO_3H$,

G' =

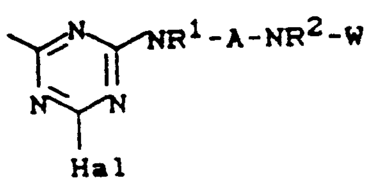

W =

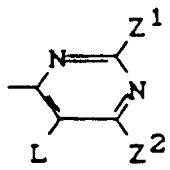 , 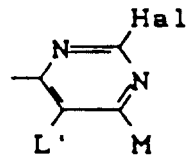 , 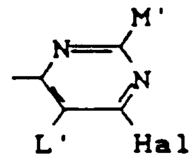

(3a) (3b) (3c)

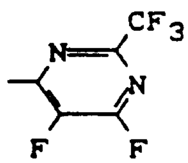 ou 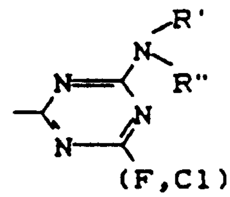

(3d) (3e)

où

Hal = F, Cl, Br,

L = H, Cl, Br, CN ou un groupement alkylsulfonyle en $C_1$-$C_4$,

L' = H, Cl ou Br,

$Z^1$, $Z^2$ = indépendamment l'un de l'autre, H, Cl, Br, F ou un radical alkylsulfonyle en $C_1$-$C_4$, $Z^1$ et $Z^2$ ne représentant pas en même temps H ou un radical alkylsulfonyle en $C_1$-$C_4$;

M = $CH_3$, $CH_2Cl$, $CHCl_2$, $CCl_3$, $CH_2F$, $CF_3$, CHClF, $CCl_2F$, CHBrF ou $CBr_2F$,

M' = $CH_3$, $CH_2Cl$, $CHCl_2$, $CCl_3$, CHClF, $CCl_2F$, $CClF_2$ ou $CF_3$,

R' = H ou un groupement alkyle en $C_1$-$C_4$, respectivement un groupement cycloaliphatique éventuellement substitués et

R" = R' ou un radical phényle, benzyle, naphtyle ou hétéroaryle éventuellement substitué ou un groupement amino éventuellement substitué,

R' et R" avec l'atome N peuvent constituer un radical hétérocyclique à 5 ou 6 chaînons,

K' = radical d'un composant de couplage de la série de la pyrazolone, pyridone ou acétoacétarylide, et

D, K, R et B ont la signification donnée dans les revendications 1 et 3.

**5.** Colorants selon la revendication 1, de formules :

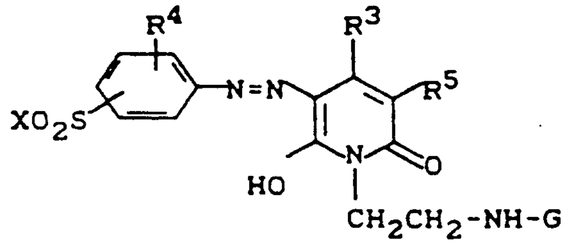

(6)

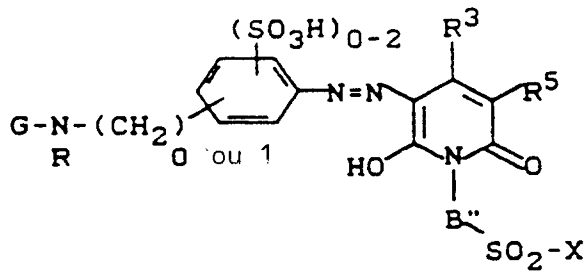

(7)

$B'' = -(-CH_2-)_{2-3}$ , 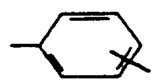

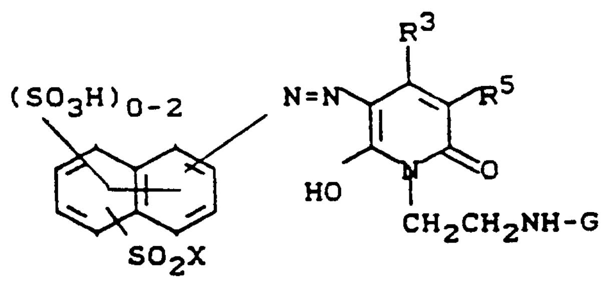

(8)

dans lesquelles

$R^3$ = H, groupement alkyle en $C_1$-$C_4$, en particulier $CH_3$, et $CH_2SO_3H$, COOH,

$R^4$ = H, groupement alkyle en $C_1$-$C_4$, groupement alcoxy en $C_1$-$C_4$, Cl, Br, COOH, $SO_3H$,

$R^5$ = H, $SO_3H$, $CH_2SO_3H$, Cl, groupement alkylsulfonyle en $C_1$-$C_4$, groupement carbonamide, en particulier $CONH_2$ ainsi que mono- et di-(alkylamide en $C_1$-$C_4$) d'acide carboxylique.

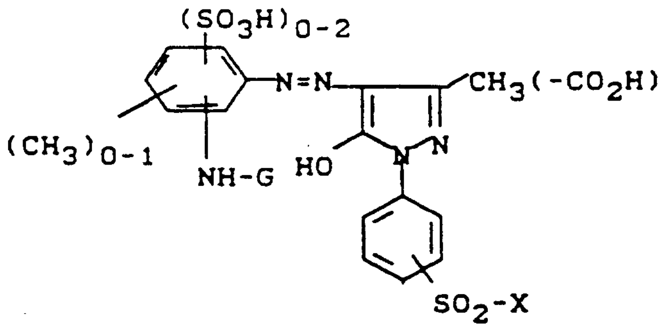

(9)

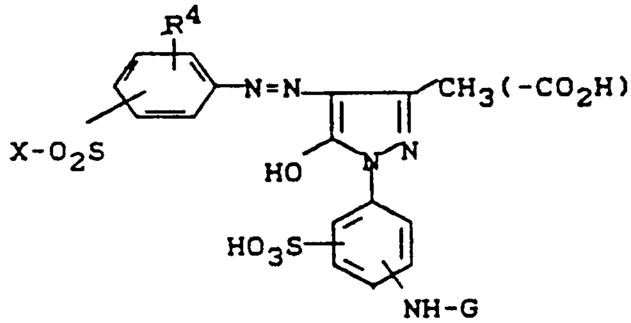

(10)

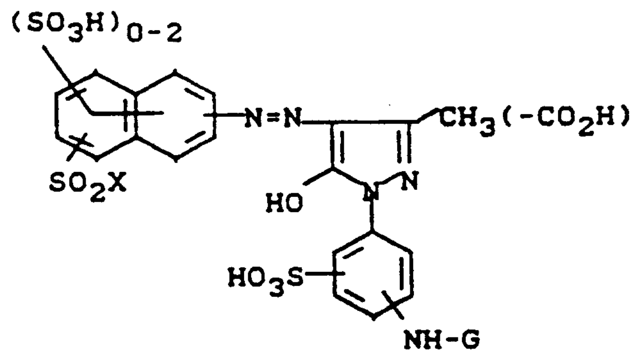

(11)

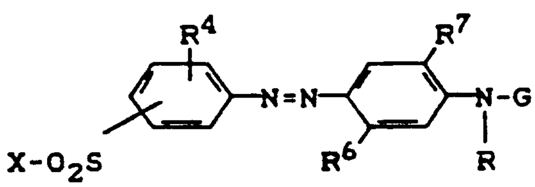

(12)

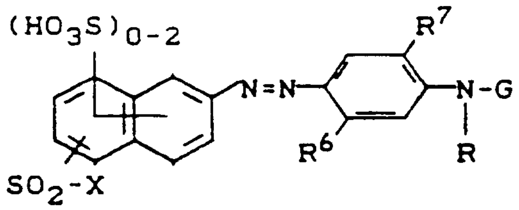

(13)

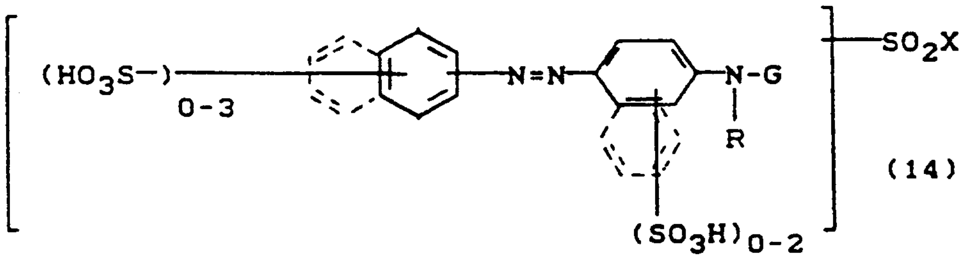

(14)

dans lesquelles

$R^6$ = H, groupement alkyle en $C_1$-$C_4$, groupement alcoxy en $C_1$-$C_4$, groupement acylamino, en particulier groupement (alkyl en $C_1$-$C_4$)carbonylamino ou arylcarbonylamino, comme groupement phénylcarbonylamino éventuellement substitué, groupement (alkyl en $C_1$-$C_4$)sulfonylamino, Cl, Br, groupement aminocarbonylamino, groupement (alkyl en $C_1$-$C_4$)sulfonylamino, groupement arylsulfonylamino,

$R^7$ = H, groupement alkyle en $C_1$-$C_4$, groupement alcoxy en $C_1$-$C_4$, OH, $SO_3H$

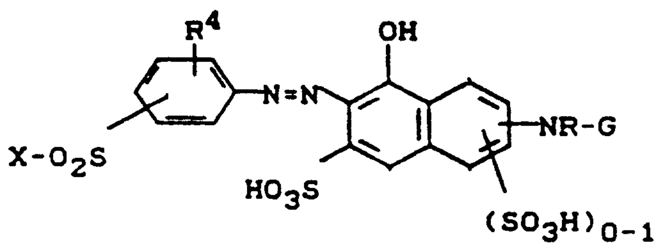

(15)

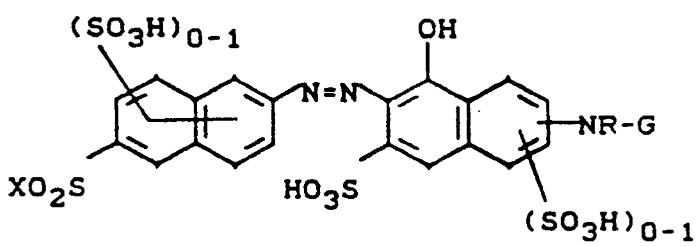

(16)

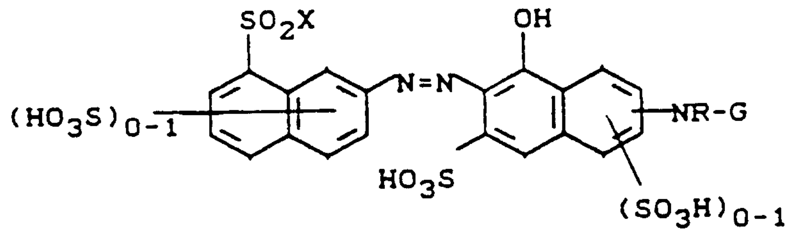

(17)

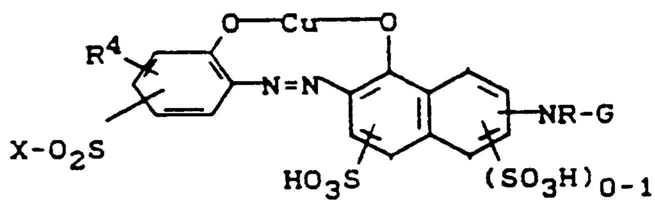

(18)

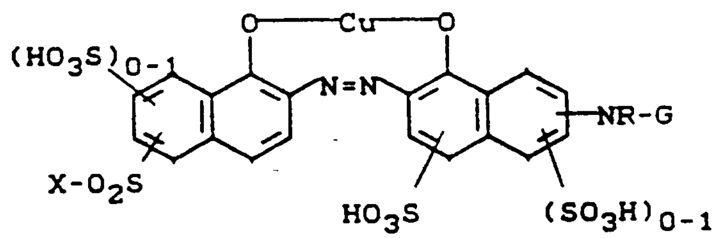

(19)

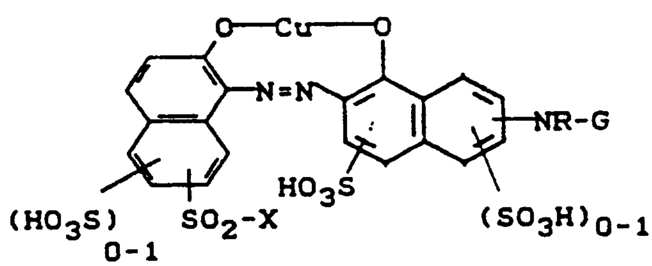

(20)

Complexes métalliques 1:2 de colorants :

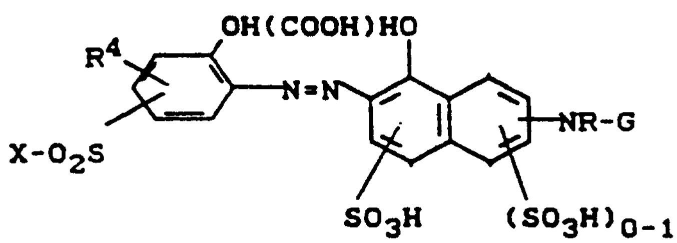

(21)

en particulier, les complexes du Cr et Co qui contiennent deux colorants (21) ou un colorant (21) et un autre colorant quelconque formant des complexes métalliques en particulier un colorant azométhine ou azoïque.

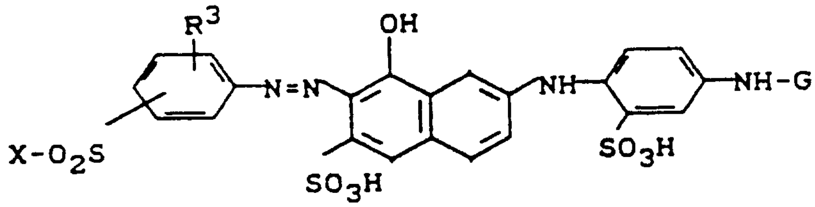

(22)

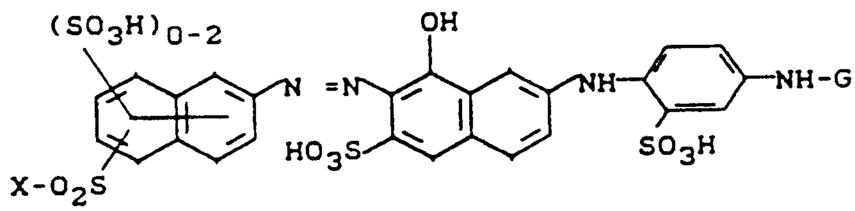

(23)

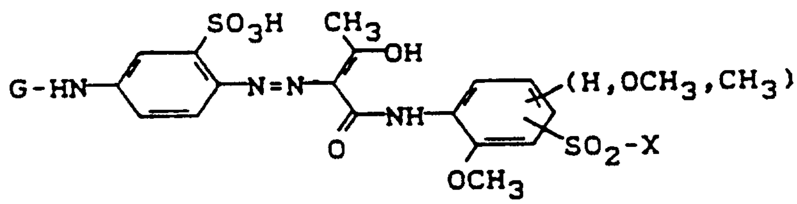

(24)

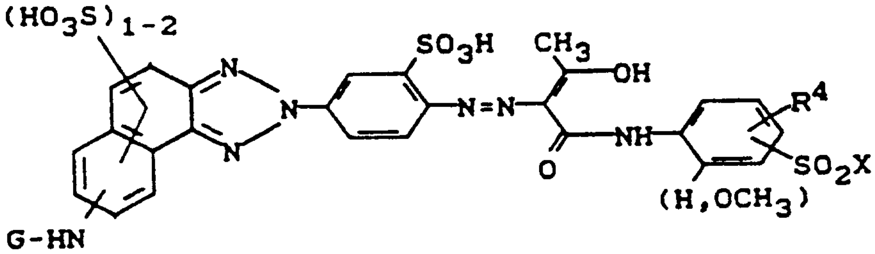

(25)

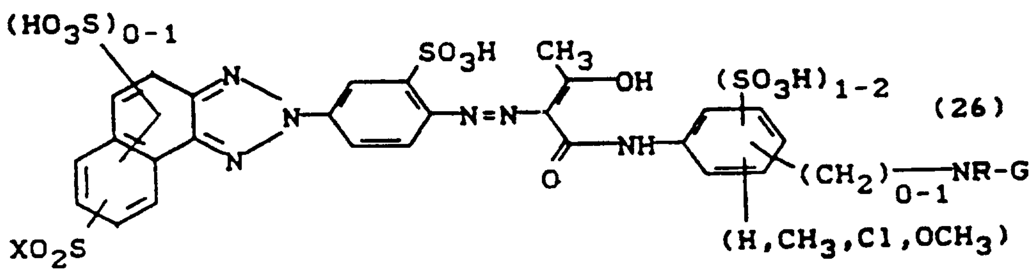

(26)

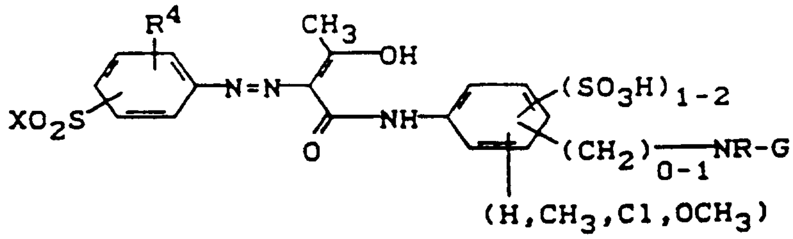

(27)

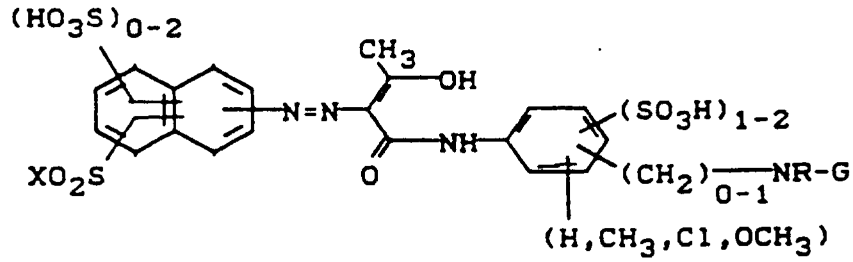

(28)

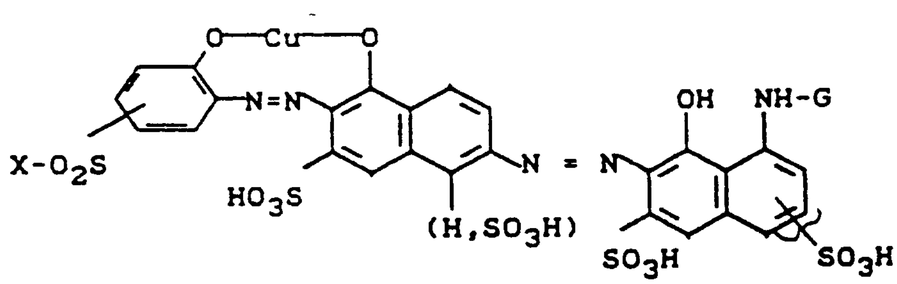

(29)

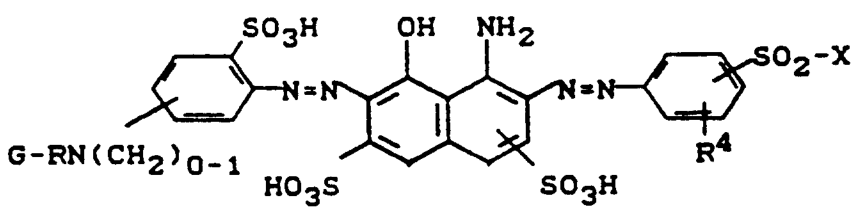

(30)

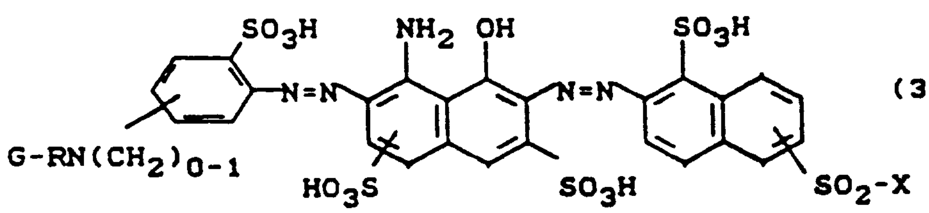

(31)

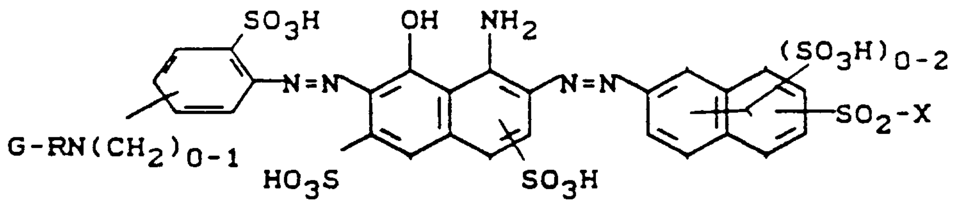

(32)

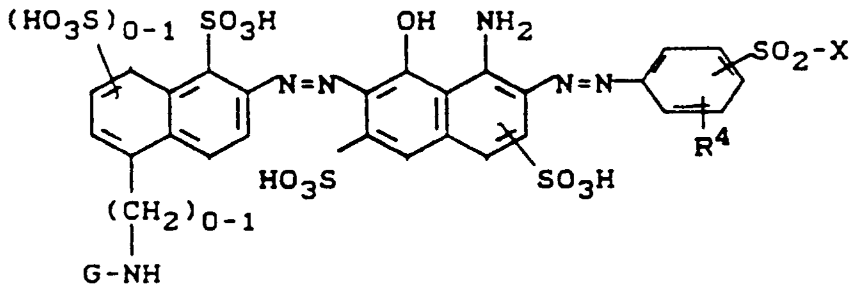

(33)

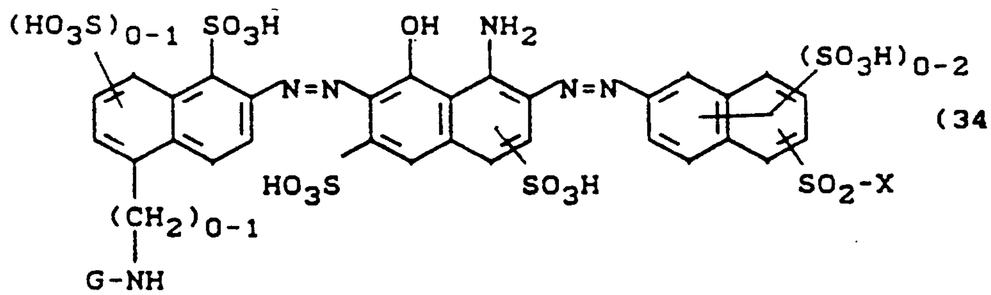

(34)

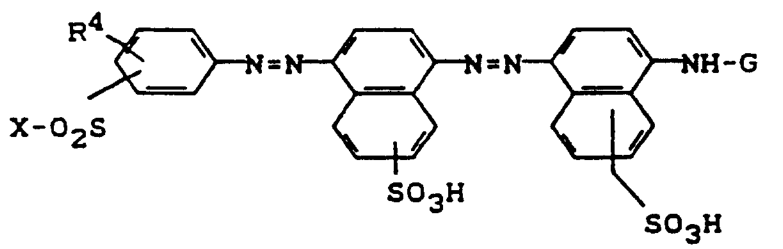

(35)

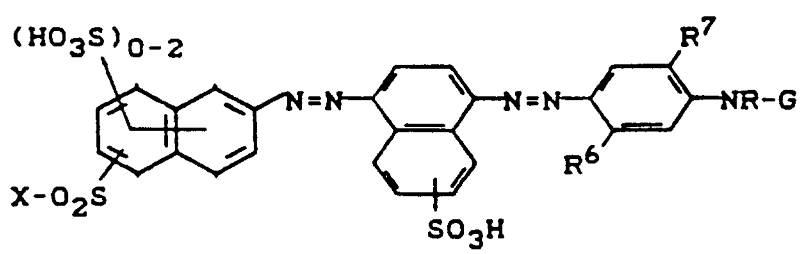

(36)

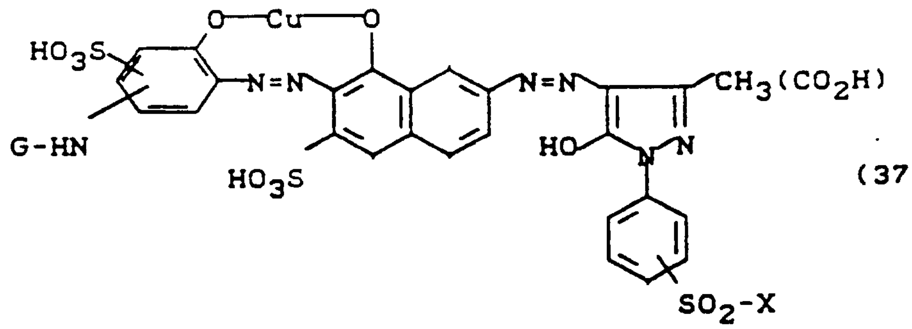

(37)

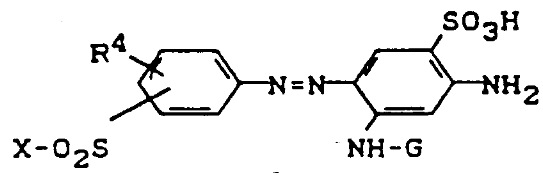

(38)

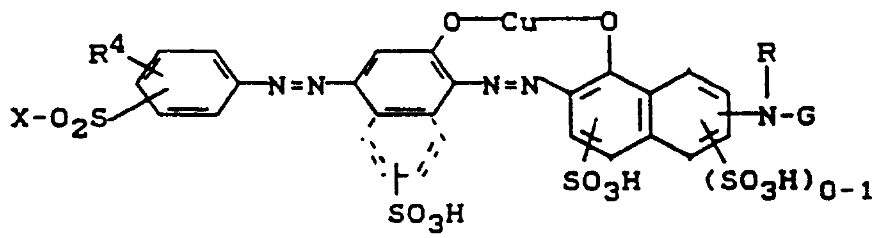

(39)

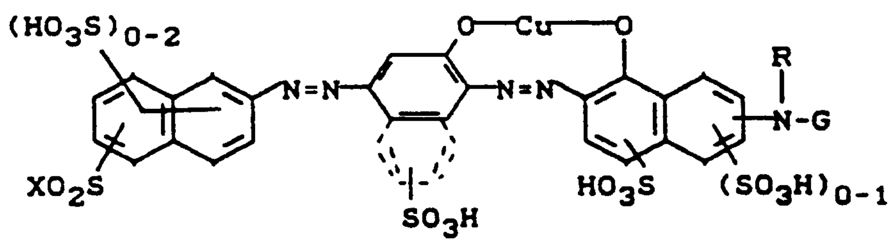

(40)

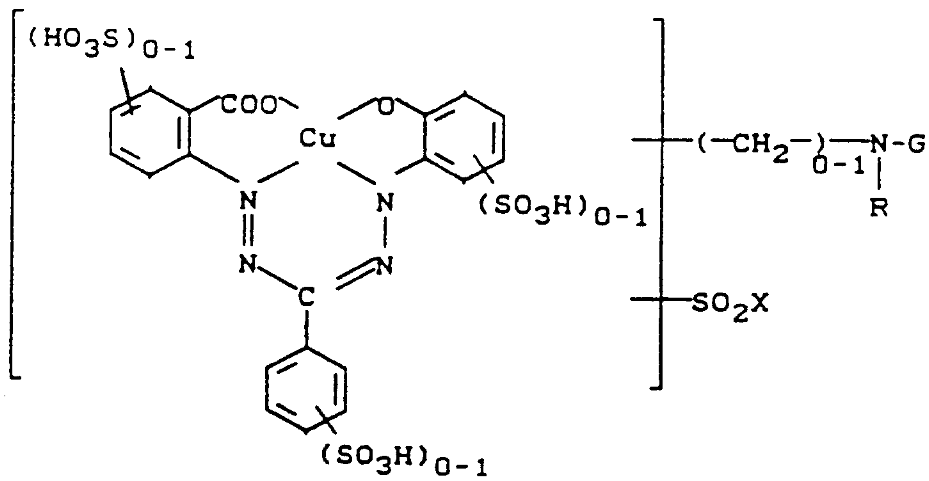

(41)

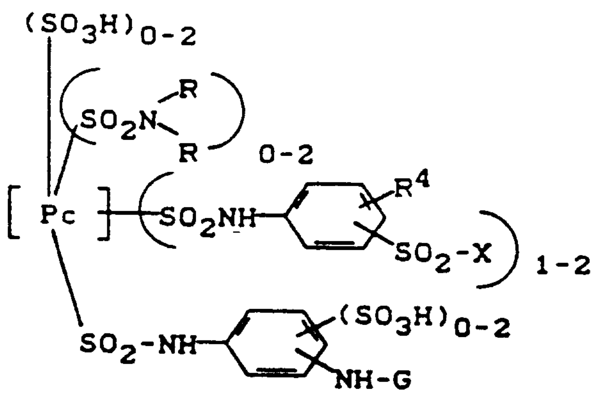

(42)

dans lesquelles

Pc représente un radical Cu- ou Ni-phtalocyanine et le nombre total de substituants sur le squelette Pc s'élève au plus à 4 ;

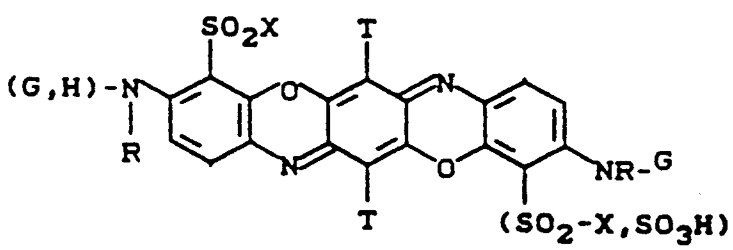

(43)

dans laquelle

T = Cl, Br, $OCH_3$ et

G, X, R ont les significations données dans les revendications 1 et 3.

**6.** Colorants selon les revendications 1 à 5, de formules :

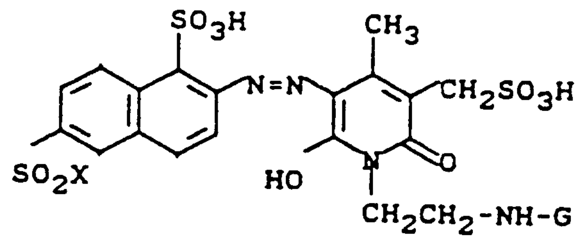

(44)

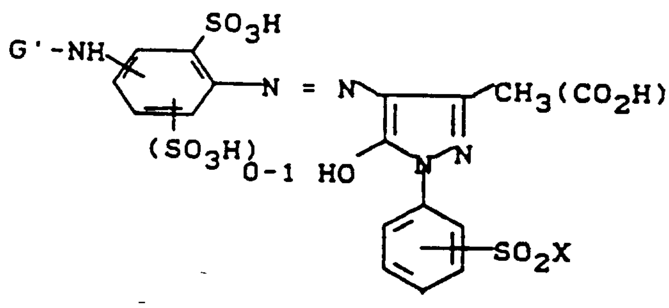

(45)

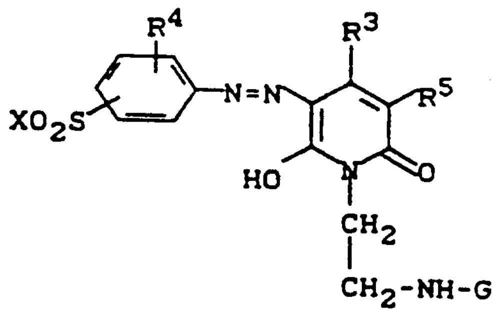

(46)

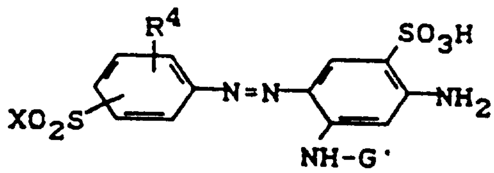

(47)

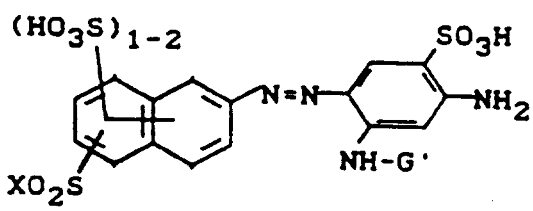

(48)

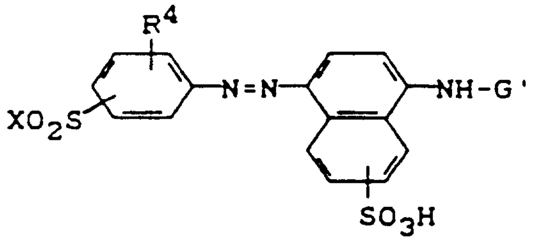

(49)

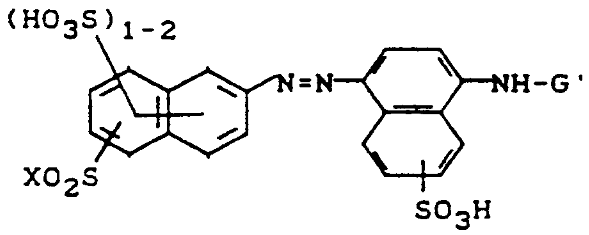

(50)

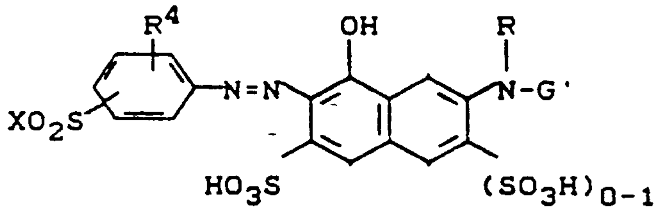

(51)

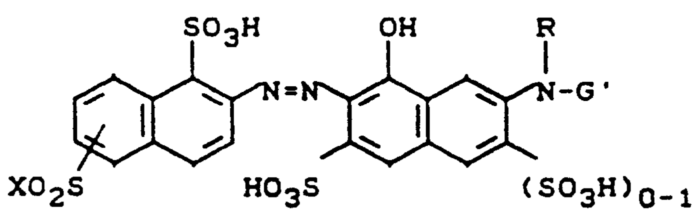

(52)

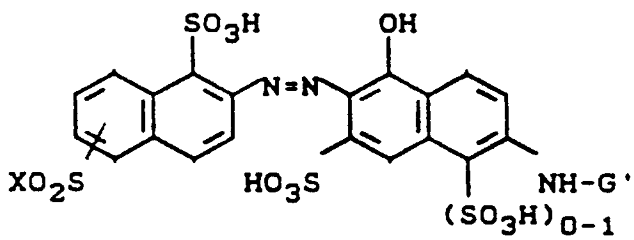

(53)

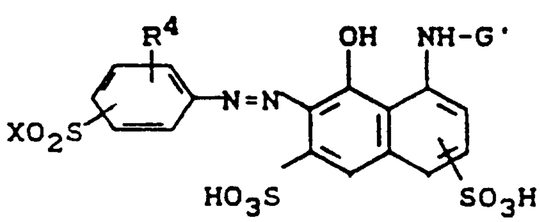

(54)

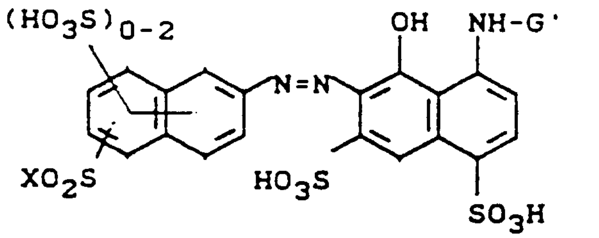

(55)

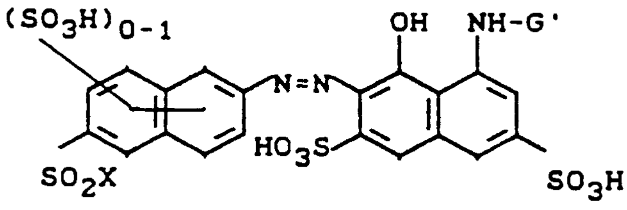

(56)

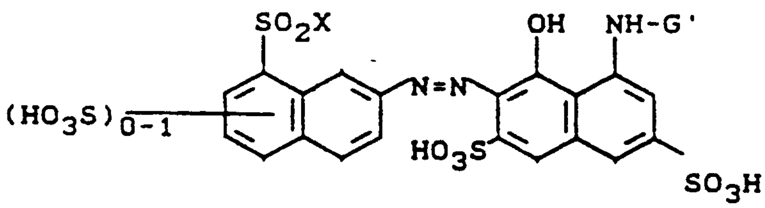

(57)

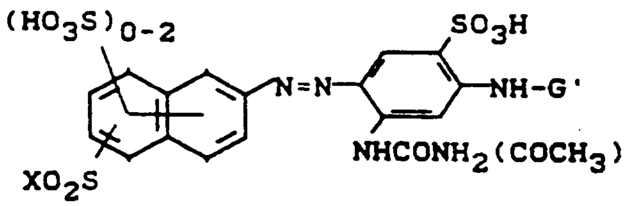

(58)

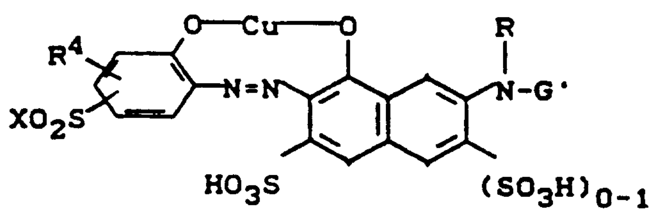

(59)

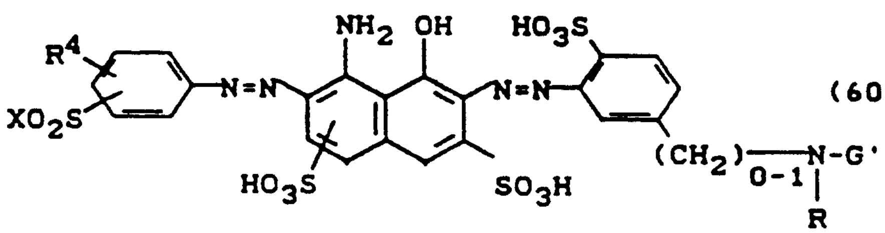

(60)

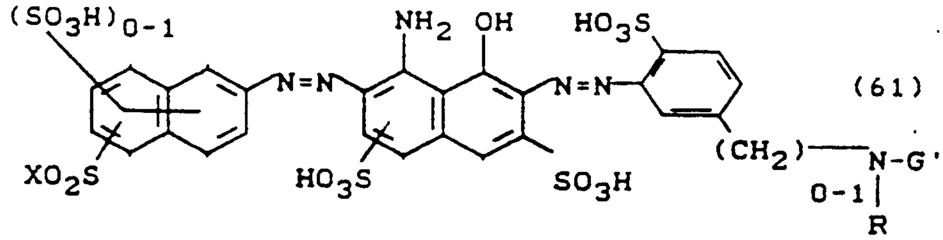

(61)

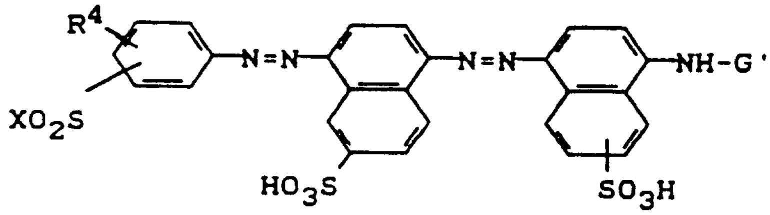

(62)

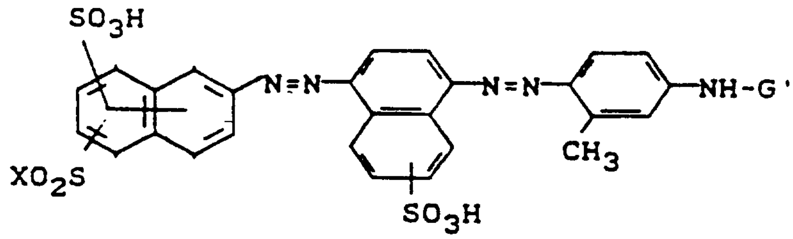

(63)

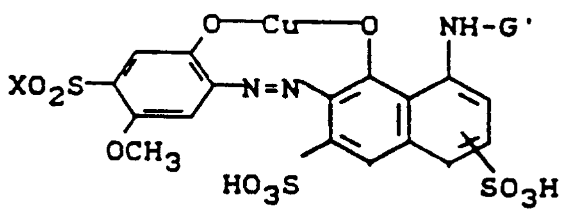

(64)

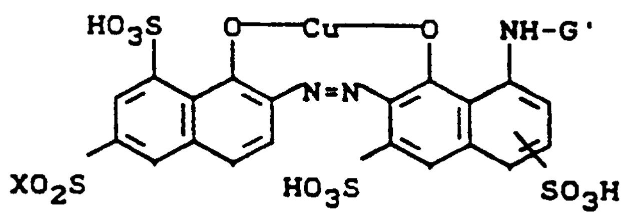

(65)

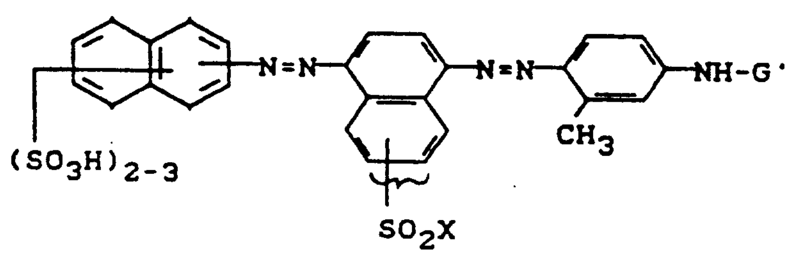

(66)

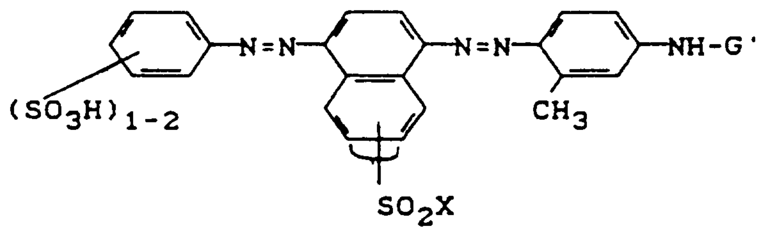

(67)

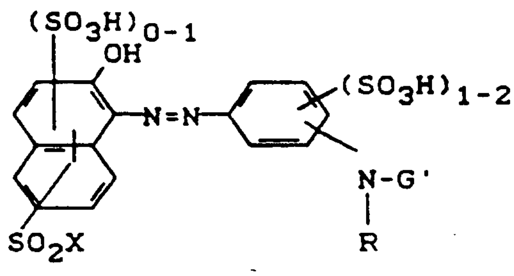

(68)

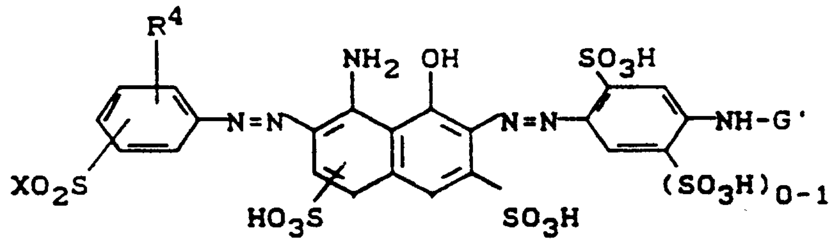

(69)

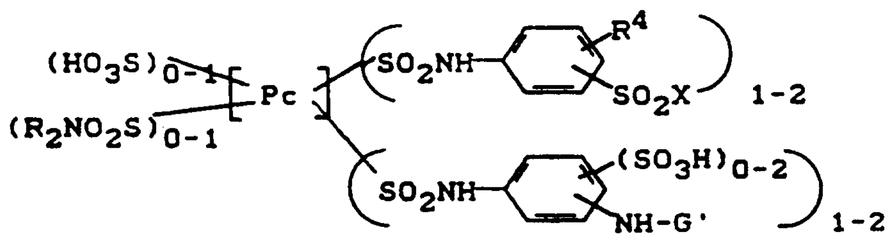

(70)

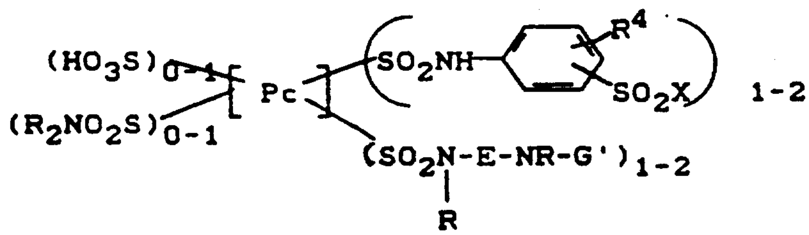

(71)

dans lesquelles

Pc représente un radical Cu- ou Ni-phtalocyanine et le nombre total de substituants sur le squelette Pc s'élève au plus à 4;

E = pont aliphatique, en particulier alkylène en $C_2$-$C_4$,

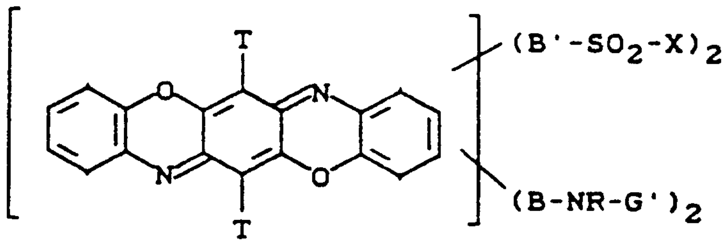

(72)

dans laquelle

T, R, B, B', G', X, $R^3$, $R^4$, $R^5$ ont les significations données dans les revendications 1 à 5.

7. Utilisation des colorants selon les revendications 1 à 6 pour colorer et imprimer des matériaux contenant des groupements OH ou amide naturels et synthétiques.

8. Matériaux contenant des groupements amide ou OH colorés ou imprimés avec les colorants des revendications 1 à 6.